(19) Europäisches Patentamt / European Patent Office / Office européen des brevets

(11) **EP 4 422 063 B1**

(12) **EUROPEAN PATENT SPECIFICATION**

(45) Date of publication and mention
of the grant of the patent:
**05.11.2025  Bulletin 2025/45**

(21) Application number: **21961446.8**

(22) Date of filing: **22.10.2021**

(51) International Patent Classification (IPC):
*H02P 21/05* (2006.01)     *H02P 27/08* (2006.01)
*H02M 7/48* (2007.01)     *H02P 29/50* (2016.01)

(52) Cooperative Patent Classification (CPC):
**H02M 7/48; H02P 21/05; H02P 27/08; H02P 29/50**

(86) International application number:
**PCT/JP2021/039109**

(87) International publication number:
**WO 2023/067797 (27.04.2023 Gazette 2023/17)**

(54) **CONTROL DEVICE FOR AC ROTARY MACHINE, DRIVE DEVICE FOR VEHICLE, AND ELECTRICALLY POWERED POWER STEERING DEVICE**

STEUERUNGSVORRICHTUNG FÜR EINE WECHSELSTROMDREHMASCHINE, ANTRIEBSVORRICHTUNG FÜR EIN FAHRZEUG UND ELEKTRISCH ANGETRIEBENE SERVOLENKVORRICHTUNG

DISPOSITIF DE COMMANDE POUR UNE MACHINE ROTATIVE À COURANT ALTERNATIF, DISPOSITIF D'ENTRAÎNEMENT POUR UN VÉHICULE, ET DISPOSITIF DE DIRECTION ASSISTÉE ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.08.2024  Bulletin 2024/35**

(73) Proprietor: **MITSUBISHI ELECTRIC CORPORATION**
**Chiyoda-ku**
**Tokyo 100-8310 (JP)**

(72) Inventor: **FURUKAWA, Akira**
**Tokyo 100-8310 (JP)**

(74) Representative: **Hoffmann Eitle**
**Patent- und Rechtsanwälte PartmbB**
**Arabellastraße 30**
**81925 München (DE)**

(56) References cited:
JP-A- 2008 104 327     JP-A- 2009 017 671
JP-A- 2010 063 335     JP-A- 2017 017 817
JP-A- 2020 096 400     JP-A- 2020 137 233
US-A1- 2011 043 149     US-A1- 2012 049 782
US-A1- 2018 022 378     US-A1- 2020 177 102

**Description**

TECHNICAL FIELD

The present disclosure relates to an AC rotary machine controller, a vehicle driving apparatus, and an electric power steering apparatus.

BACKGROUND ART

In the rotary electric machine control system of patent document 1, the drive method with the lowest loss is selected by comparing the losses when one or both of the first inverter and the second inverter are operated.

In the power converter of patent document 2, in order to avoid the mode in which two sets of inverters become the effective voltage vector at the same time, the carrier wave signal is shifted by 90 degrees at the time of modulation by the third order harmonic wave superposition, and the ripple component of the bus current is reduced. By shifting the two carrier wave signals by 180 degrees mutually, and applying the modulation so that the first set and the second set of voltage command values are coincided with the minimum value of the carrier wave signal, the ripple component of the bus current is reduced.

In the power converter of patent document 3, the switching operation of the phase of the maximum value in the absolute values of winding currents of three-phase is stopped; and for two phases other than the maximum phase, by making the carrier wave signal compared with the voltage command value of one phase different from the carrier wave signal compared with the voltage command value of the other phase, the current of the maximum phase is prevented from flowing into the bus line, and the ripple component of bus current is reduced.

CITATION LIST

Patent Literature

Patent document 1: JP 2020-18148 A
Patent document 2: JP 2011-188674 A
Patent document 3: JP 2020-137232 A

From US 2011/0043149 A1 a motor controlling device is known, wherein an asynchronous pulse mode is switched to a synchronous pulse mode in a situation where a modulation factor has become equal to or larger than a first set value or in a situation where an inverter output frequency has become equal to or higher than a second set value. The synchronous pulse mode is switched to the asynchronous pulse mode in a situation where the modulation factor has become smaller than the second set value and the inverter output frequency has become lower than the second value.

From US 2012/0049782 A1 a control unit of an electronic power converter is known, that performs for a first duty instruction signal regarding a voltage applied to a first winding wire group a flatbed two-phase modulation process, and performs for a second duty instruction signal regarding a voltage applied to a second winding wire group a flattop two-phase modulation process. By phase-shifting the second duty instruction signal by 30° from the first duty instruction signal, a timing of maximum value of the first duty instruction signal is shifted from a timing of minimum value of the second duty instruction signal. Even when the maximum value is greater than a center output value and the minimum value is smaller than the center output value, overlapping of capacitor discharge is avoided, thereby reducing a ripple electric current.

US 2018/0022378 A1 discloses a control device for an AC rotary machine having m sets of n-phase windings, a current detector, a power converter, and a control unit that outputs ON/OFF signals to high potential side switching elements and low potential side switching elements of the power converter by comparing applied voltages calculated on the basis of the voltage commands with carrier waves that may be set to be different from each other by 180 degrees.

US 2020/0177102 A1 discloses a power conversion device configured to output, to each of two inverters configured to invert a DC voltage output from a DC power supply to three-phase AC voltages, on/off signals for switching on and off respective semiconductor switching elements of each of the inverters so that, out of a plurality of voltage vectors defined so as to correspond to patterns of the on/off signals, the second closest voltage vector and the third closest voltage vector in phase to a voltage command vector that is based on a voltage command value calculated for each of the inverters are formed.

SUMMARY OF INVENTION

Technical Problem

However, in the control method of patent document 1, in order to select the drive method of the loss minimum, it is necessary to calculate and compare the loss when using only the first inverter, the loss when using only the second inverter, and the loss when using both. When calculating constantly during operation, the processing load increases.

The ripple component of the bus current can be suppressed by using the control method of patent document 2. However, considering the mutual inductance between two sets, the current change of second set is caused when the effective voltage vector of first set is outputted, and the current change of first set is caused when the effective voltage vector of second set is outputted. That is, since it becomes the condition similar to the increase in the interval of the effective voltage vector seemingly, the ripple component of the winding current of each phase becomes large, and the loss becomes large.

The ripple component of the bus current can be suppressed by using the control method of patent document 3. However, since the output interval of the effective voltage vector increases compared with the case where the same carrier wave signal is used between phases, the ripple component of the winding current of each phase becomes large, and the loss becomes large.

Then, the purpose of the present disclosure is to provide an AC rotary machine controller, a vehicle driving apparatus, and an electric power steering apparatus which can achieve appropriately reduction of the ripple component of the bus current, reduction of the ripple component of the winding current of each phase, or reduction of the switching loss. The invention is defined by the device of claim 1, 5, 6 and 7. Preferred embodiments of invention are disclosed in dependent claims 2-4 and 8-11.

Solution to Problem

An AC rotary machine controller according to the present disclosure is an AC rotary machine controller that controls an AC rotary machine having a stator provided with one set or a plurality of sets of three-phase windings via one set or a plurality of sets of inverters, the AC rotary machine controller including:

a voltage command calculation unit that, for each set, calculates voltage command values of three-phase applied to the three-phase windings; and

a PWM control unit that, for each set, controls on/off a plurality of switching devices of the inverter, based on a comparison result between each of the voltage command values of three-phase and a carrier wave signal;

wherein, for each set, the voltage command calculation unit switches a first control mode, a second control mode, and a third control mode, based on an operating state of the AC rotary machine;

in the first control mode, the voltage command calculation unit executes a phase current ripple suppression control that calculates the voltage command values of three-phase by applying a modulation to basic voltage command values of three-phase so that a ripple component of current flowing into the winding of each phase decreases less than a case where the basic voltage command values of three-phase of sine waves are set as the voltage command values of three-phase;

in the second control mode, the voltage command calculation unit executes a bus current ripple suppression control that calculates the voltage command values of three-phase by applying a modulation to the basic voltage command values of three-phase so that a ripple component of current flowing between a DC power source and the inverter decreases less than a case where the basic voltage command values of three-phase of sine waves are set as the voltage command values of three-phase; and

in the third control mode, the voltage command calculation unit executes a switching loss suppression control that calculates the voltage command values of three-phase by applying a modulation to the basic voltage command values of three-phase so that a loss of the switching devices decreases less than a case where the basic voltage command values of three-phase of sine waves are set as the voltage command values of three-phase.

A vehicle driving apparatus according to the present disclosure, including:

the above AC rotary machine controller,
the AC rotary machine, and
a driving force transmission mechanism that transmits a driving force of the AC rotary machine to wheels of a vehicle.

An electric power steering apparatus according to the present disclosure, including:

the above AC rotary machine controller,
the AC rotary machine, and

a driving force transmission mechanism that transmits a driving force of the AC rotary machine to a steering apparatus of a vehicle.

Advantage of Invention

According to the AC rotary machine controller, the vehicle driving apparatus, and the electric power steering apparatus of the present disclosure, the first control mode in which the phase current ripple suppression control is executed, the second control mode in which the bus current ripple suppression control is executed, and the third control mode in which the switching loss suppression control is executed are switched appropriately based on the operating state of the AC rotary machine. Then, the reduction of the ripple component of the bus current, the reduction of the ripple component of the winding current of each phase, or the reduction of switching loss can be achieved appropriately.

BRIEF DESCRIPTION OF THE DRAWINGS

FIG. 1 is a schematic configuration diagram of the AC rotary machine, the inverter, and the controller, according to Embodiment 1;
FIG. 2 is a schematic block diagram of the controller, according to Embodiment 1;
FIG. 3 is a hardware configuration diagram of the controller, according to Embodiment 1;
FIG. 4 is a time chart for explaining the PWM control using the carrier wave signal, according to Embodiment 1;
FIG. 5 is a figure for explaining the voltage vector, according to Embodiment 1;
FIG. 6 is a time chart for explaining the PWM control using two carrier wave signals with different phases, according to Embodiment 1;
FIG. 7 is a flowchart for explaining the modulation in the bus current ripple suppression control, according to Embodiment 1;
FIG. 8 is a figure for explaining switching of the carrier wave signal in the case where the power-factor angle is 0 degree in the bus current ripple suppression control, according to Embodiment 1;
FIG. 9 is a figure for explaining switching of the carrier wave signal in the case where the power-factor angle is 60 degrees in the bus current ripple suppression control, according to Embodiment 1;
FIG. 10 is a flowchart for explaining switching of the carrier wave signal in the case of one direction rotation in the bus current ripple suppression control, according to Embodiment 1;
FIG. 11 is a flowchart for explaining switching of the carrier wave signal in the case of the other direction rotation in the bus current ripple suppression control, according to Embodiment 1;
FIG. 12 is a figure for explaining another example of switching of the carrier wave signal in the bus current ripple suppression control, according to Embodiment 1;
FIG. 13 is a flowchart for explaining the switching loss suppression control, according to Embodiment 1;
FIG. 14 is a flowchart for explaining another example of the switching loss suppression control, according to Embodiment 1;
FIG. 15 is a figure for explaining switching of the control mode, according to Embodiment 1;
FIG. 16 is a figure for explaining switching of the control mode, according to Embodiment 1;
FIG. 17 is a schematic configuration diagram of the vehicle driving apparatus, according to Embodiment 1;
FIG. 18 is a schematic configuration diagram of the electric power steering apparatus, according to Embodiment 1;
FIG. 19 is a schematic configuration diagram of the AC rotary machine, the inverter, and the controller, according to Embodiment 2;
FIG. 20 is a figure for explaining the phase difference between the first set of windings and the second set of windings, according to Embodiment 2;
FIG. 21 is a schematic block diagram of the controller, according to Embodiment 2;
FIG. 22 is a time chart for explaining the third example of the bus current ripple suppression control, according to Embodiment 3; and
FIG. 23 is a time chart for explaining the third example of the bus current ripple suppression control, according to Embodiment 3.

DETAILED DESCRIPTION OF THE EMBODIMENTS

1. Embodiment 1

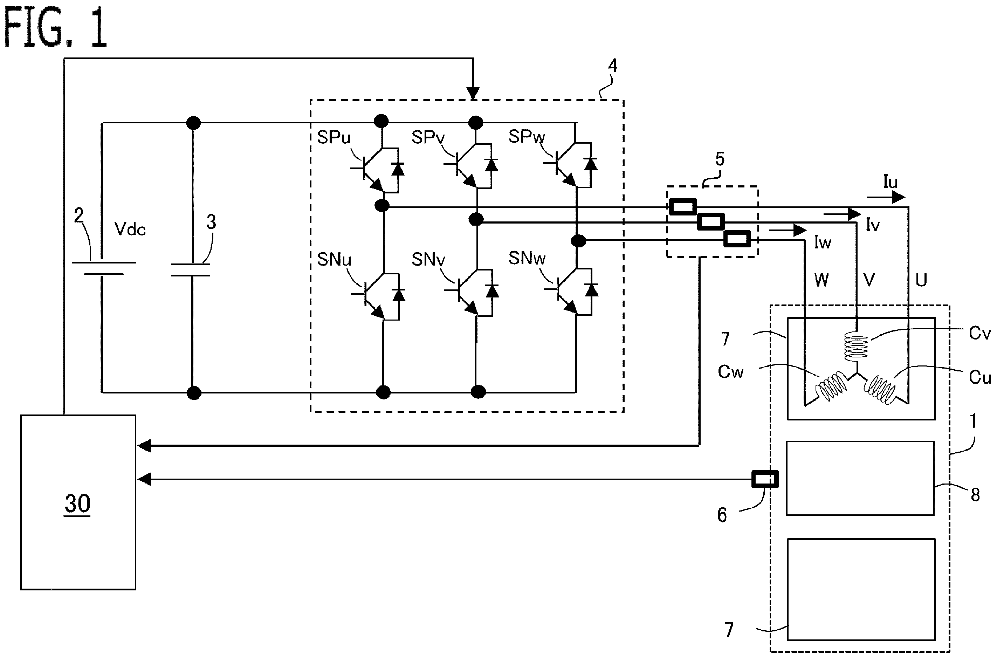

An AC rotary machine controller 30 (hereinafter, referred to simply as a controller 30) according to Embodiment 1 will be explained with reference to drawings. In each figure, the same or corresponding part is explained with the same sign. FIG. 1 is a schematic configuration diagram of an AC rotary machine 1, an inverter 4, and the controller 30 according to the present embodiment.

1-1. AC Rotary Machine 1

The AC rotary machine 1 is provided with a stator 7 and a rotor 8 disposed on the radial-direction inner side of the stator 7. The stator 7 is provided with one set of three-phase windings Cu, Cv, Cw. The rotor 8 is provided with a permanent magnet, and the AC rotary machine 1 is a synchronous permanent magnet type synchronous rotary machine. The three-phase windings may be connected by star connection, or may be connected by delta connection. The AC rotary machine 1 may be a field winding type synchronous rotary machine with an electromagnet in the rotor, or may be an induction rotary machine with an iron core in the rotor.

The rotor 8 is provided with a rotation sensor 6 for detecting a rotational angle of the rotor 8. An output signal of the rotation sensor 6 is inputted into the controller 30. Various sensors, such as a Hall element, a resolver, or an encoder, are used for the rotation sensor 6. The rotation sensor 6 may be not provided, and the rotational angle (the magnetic pole position) may be estimated based on current information which are obtained by superimposing a harmonic wave component on the current command value describes below (so-called, sensor less system).

1-2. Inverter 4

The inverter 4 is provided with three sets of series circuits (leg) in each of which a high potential side switching device SP connected to the high potential side of the DC power source 2 and a low potential side switching device SN connected to the low high potential side of the DC power source 2 are connected in series, corresponding to each phase of three-phase. A connection node of two switching devices in the series circuit of each phase is connected to the winding of the corresponding phase.

Specifically, in the series circuit of U phase, the high potential side switching device SPu of U phase and the low potential side switching device SNu of U phase are connected in series, and the connection node of two switching devices is connected to the winding Cu of U phase. In the series circuit of V phase, the high potential side switching device SPv of V phase and the low potential side switching device SNv of V phase are connected in series, and the connection node of two switching devices is connected to the winding Cv of V phase. In the series circuit of W phase, the high potential side switching device SPw of W phase and the low potential side switching device SNw of W phase are connected in series, and the connection node of two switching devices is connected to the winding Cw of W phase. A smoothing capacitor 3 is connected between the high potential side and the low potential side of the DC power source 2.

IGBT (Insulated Gate Bipolar Transistor) in which a diode is connected in reversely parallel, MOSFET (Metal Oxide Semiconductor Field Effect Transistor), bipolar transistor in which a diode is connected in reversely parallel, or the like is used for the switching devices. A gate terminal of each switching device is connected to the controller 30 via a gate drive circuit and the like. The each switching device is turned on or off by the switching signals QPu to QNw outputted from the controller 30.

The DC power source 2 outputs a DC voltage Vdc to the inverter 4. The DC power source 2 may be any apparatus which outputs the DC voltage Vdc, such as a battery, a DC-DC converter, a diode rectifier, and a PWM rectifier.

A current sensor 5 which detects current which flows into the winding of each phase is provided. The current sensors 5 is a current sensor, such as shunt resistance or Hall element. An output signal of the current sensor 5 is inputted into the controller 30.

In the present embodiment, the current sensor 5 is provided on the electric wire which connects between the series circuit of the switching devices of each phase, and the winding of each phase. A current detection signal of each phase of the current sensor 5 is inputted into the controller 30. The current sensor 5 may be connected in series to the series circuit of the switching devices of each phase. Alternatively, a current sensor may be provided on the wire which connects between the inverter 4 and the DC power source 2, and the current of the winding of each phase may be detected by well-known "bus line one-shunt method".

1-3. Controller 30

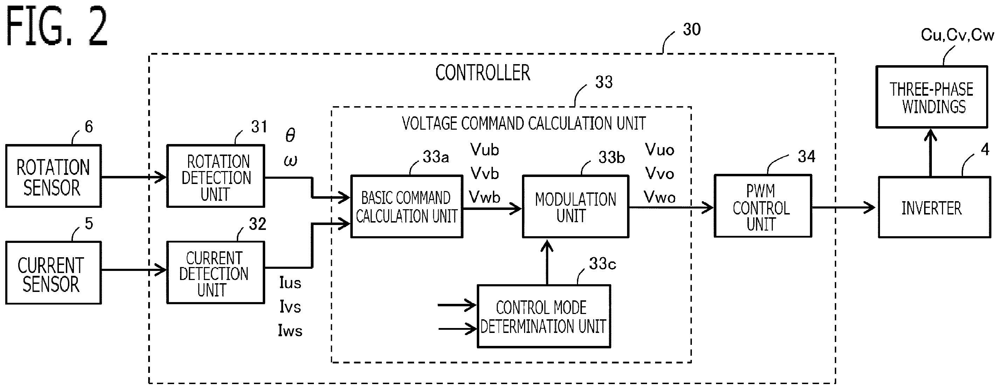

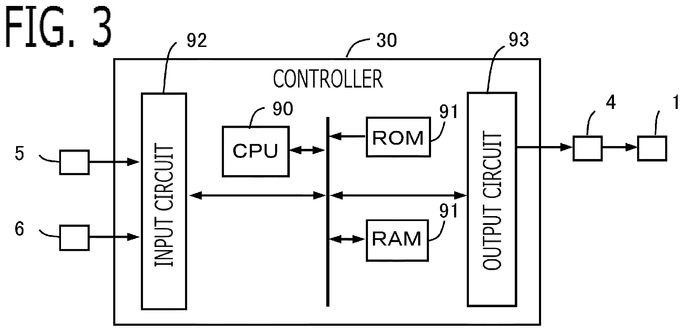

The controller 30 controls the AC rotary machine 1 via the inverter 4. As shown in FIG. 2, the controller 30 is provided with a rotation detection unit 31, a current detection unit 32, a voltage command calculation unit 33, a PWM control unit 34, and the like. Each function of the controller 30 is realized by processing circuits provided in the controller 30. Specifically, as shown in FIG. 3, the controller 30 is provided with, as a processing circuit, an arithmetic processor (computer) 90 such as a CPU (Central Processing Unit), storage apparatuses 91 that exchange data with the arithmetic processor 90, an input circuit 92 that inputs external signals to the arithmetic processor 90, an output circuit 93 that outputs signals from the arithmetic processor 90 to the outside, and the like.

As the arithmetic processor 90, ASIC (Application Specific Integrated Circuit), IC (Integrated Circuit), DSP (Digital Signal Processor), FPGA (Field Programmable Gate Array), various kinds of logical circuits, various kinds of signal processing circuits, and the like may be provided. As the arithmetic processor 90, a plurality of the same type ones or the different type ones may be provided, and each processing may be shared and executed. As the storage apparatuses 91, RAM (Random Access Memory) which can read data and write data from the arithmetic processor 90, ROM (Read Only Memory) which can read data from the arithmetic processor 90, and the like are provided. The input circuit 92 is connected with various kinds of sensors, such as the current sensor 5 and the rotation sensor 6, and is provided with an A/D converter and the like for inputting output signals of these sensors to the arithmetic processor 90. The output circuit 93 is connected with electric loads, such as a gate drive circuit which drive on/off the switching devices, and is provided with a driving circuit and the like for outputting a control signal from the computing processing unit 90.

Then, the arithmetic processor 90 runs software items (programs) stored in the storage apparatus 91 such as ROM and collaborates with other hardware devices in the controller 30, such as the storage apparatus 91, the input circuit 92, and the output circuit 93, so that the respective functions of the control units 31 to 34 provided in the controller 30 are realized. Setting data items such as a determination value to be utilized in the control units 31 to 34 are stored, as part of software items (programs), in the storage apparatus 91 such as ROM. Each function of the controller 30 will be described in detail below.

### 1-3-1. Rotation detection unit 31

The rotation detection unit 31 detects a rotational angle $\theta$ (a magnetic pole position $\theta$ of the rotor) and a rotational angle speed $\omega$ of the rotor in the electrical angle. In the present embodiment, the rotation detection unit 31 detects the rotational angle $\theta$ (the magnetic pole position $\theta$) and the rotational angle speed $\omega$ in the electrical angle, based on the output signal of the rotation sensor 6. The rotational angle $\theta$ is an angle (a position) of the N pole (the magnetic pole) in the electrical angle on the basis of the winding of U phase.

The rotation detection unit 31 may estimate the rotational angle (the magnetic pole position) without using the rotation sensor, based on current information which are obtained by superimposing a harmonic wave component on the current command value (so-called, sensor less system) .

### 1-3-2. Current Detection Unit 32

The current detection unit 32 detects three-phase currents Ius, Ivs, Iws which flow into the three-phase windings, based on the output signal of the current sensor 5.

### 1-3-3. PWM Control Unit 34

The PWM control unit 34 controls on/off the plurality of switching devices of the inverter 4, based on a comparison result between each of the voltage command values of three-phase Vuo, Vvo, Vwo calculated by the voltage command calculation unit 33, and a carrier wave signal.

The PWM control unit 34 generates switching signals which turn on and off each switching device by comparing between each of the voltage command values of three-phase Vuo, Vvo, Vwo, and the carrier wave signal C.

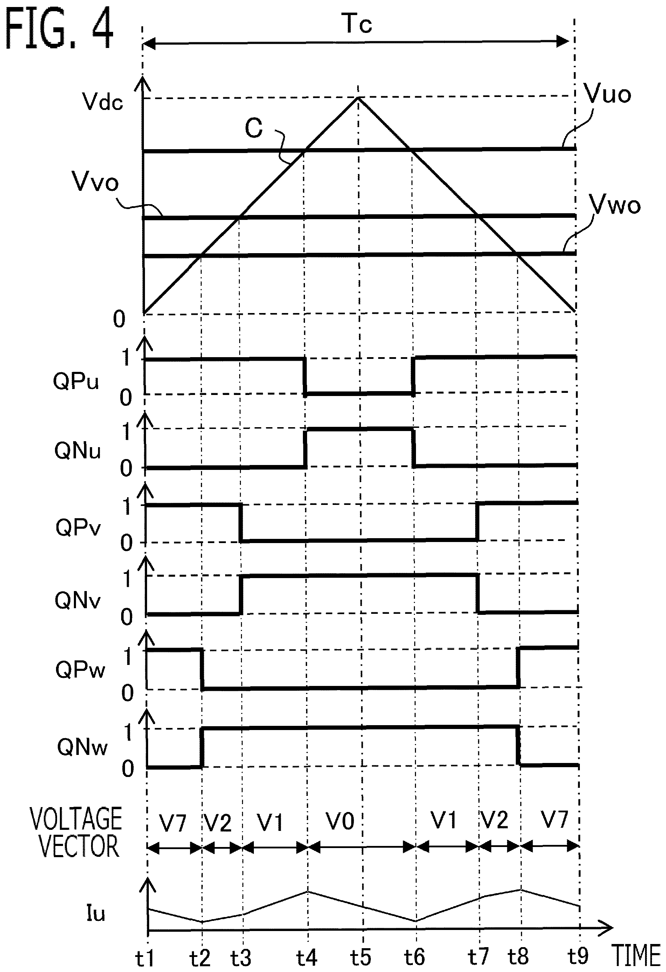

FIG. 4 shows the voltage command values of three-phase Vuo, Vvo, Vwo, the carrier wave signal C, and the switching signal of each switching device, in a PWM period Tc. The carrier wave signal C is a triangular wave which oscillates at the PWM period Tc with an amplitude of a half value Vdc/2 of the DC voltage centering on a center value Vdc/2 of the DC voltage. Any waveforms, such as a saw tooth wave, may be used other than the triangular wave. As described later, in the specific control mode, as the carrier wave signal C, the first carrier wave signal C1 and the second carrier wave signal C2, which are mutually different in the phase of the voltage command value to be compared, may be used.

For each phase, the PWM control unit 34 turns on the switching signal QP of the high potential side switching device SP (in this example, 1) and turns on the high potential side switching device SP, when the carrier wave signal C is less than the voltage command value; and turns off the switching signal QP of the high potential side switching device SP (in this example, 0) and turns off the high potential side switching device SP, when the carrier wave signal C exceeds the voltage command value. On the other hand, for each phase, the PWM control unit 34 turns off the switching signal QN of the low potential side switching device SN (in this example, 0) and turns off the low potential side switching device SN, when the carrier wave signal C is less than the voltage command value; and turns on the switching signal QN of the low potential side switching device SN (in this example, 1) and turns on the low potential side switching device SN, when the carrier wave signal C exceeds the voltage command value.

<Voltage vectors V0 to V7>

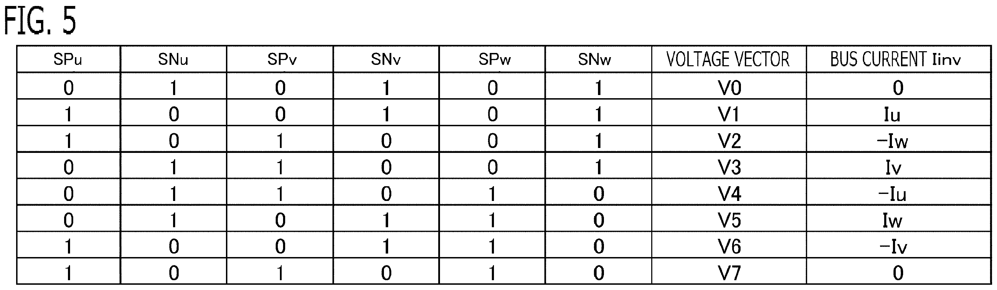

As shown in FIG. 4, in the PWM period Tc, on-off patterns of the six switching devices change, and voltage vectors V0 to V7 corresponding to each on-off pattern switch. As shown in FIG. 5, there are eight on-off patterns of the six switching devices. In FIG. 5, "0" indicates that the corresponding switching device is off, and "1" indicates that the corresponding switching device is on. The eight on-off patterns are referred to as the voltage vectors V0 to V7.

In the voltage vector V0, all of the low potential side switching devices SNu, SNv, SNw of U phase, V phase, and W phase are turned on, and all of the high potential side switching devices SPu, SPv, SPw of U phase, V phase, and W phase are turned off. And, the terminals of the three-phase windings Cu, Cv, Cw is mutually connected via the electric wire on the low potential side. In this voltage vector V0, current circulates between the three-phase windings and the inverter, and it becomes a state of a zero vector in which a bus current Iinv which flows between the DC power source 2 and the inverter 4 becomes zero.

In the voltage vector V7, all of the high potential side switching devices SPu, SPv, SPw of U phase, V phase, and W phase are turned on, and all of the low potential side switching devices SNu, SNv, SNw of U phase, V phase, and W phase are turned off. And, the terminals of the three-phase windings Cu, Cv, Cw is mutually connected via the electric wire on the high potential side. In this voltage vector V7, current circulates between the three-phase windings and the inverter, it becomes a state of the zero vector in which the bus current Iinv which flows between the DC power source 2 and the inverter 4 becomes zero.

In other voltage vectors V1 to V6, the bus current Iinv becomes equal to any one of the currents Iu, Iv, Iw which flow through the windings of U phase, V phase, and W phase. In these voltage vectors V1 to V6, it becomes a state of an effective vector in which the bus current Iinv which flows between the DC power source 2 and the inverter 4 does not become zero.

<Switching of voltage vectors>

In the case of FIG. 4, the voltage vector is V7 in the time t1 to t2 and t8 to t9, is V2 in t2 to t3 and t7 to t8, is V1 in t3 to t4 and t6 to t7, and is V0 in t4 to t6. The winding current Iu of U phase increases at a slope according to the applied voltage at the time of V1 and V2 which are the effective voltage vectors, and decreases toward 0 at the time of V0 and V7 which are the zero voltage vectors. Since there are two increases and decreases in the PWM period Tc, the amplitude becomes small and the ripple component of the winding current decreases. On the other hand, when the power-factor angle is 0 degree where Iu>Iv>Iw, the bus current Iinv changes in a range of 0 to Iu, so the ripple component of the bus current becomes large.

<When using two carrier wave signals which differ in phase by 180 degrees>

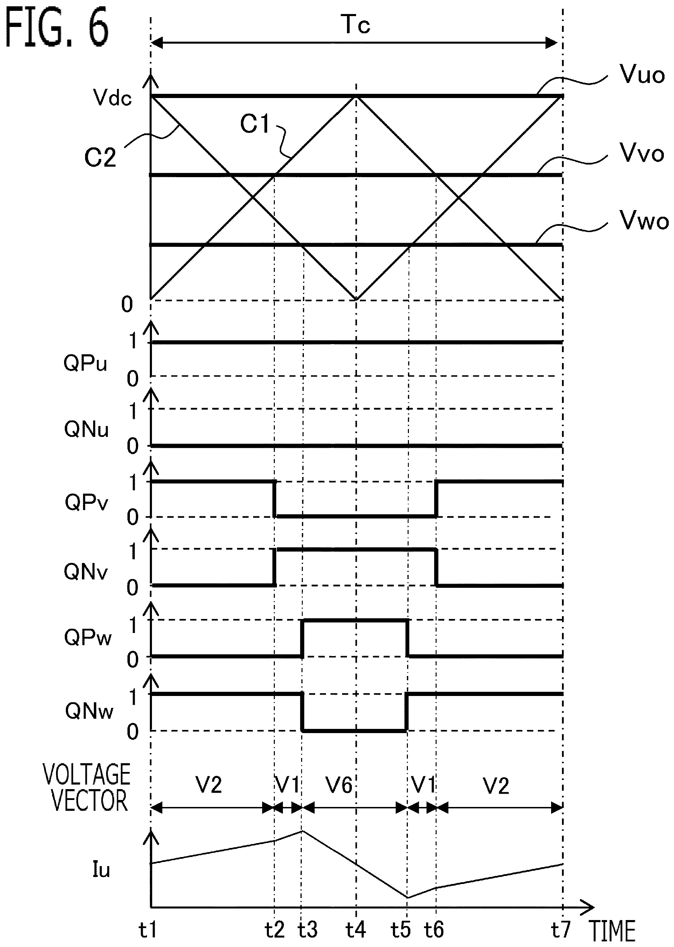

As shown in FIG. 6, as the carrier wave signal, a first carrier wave signal C1, and a second carrier wave signal C2 which differs from the first carrier wave signal C1 by 180 degrees in phase may be used. In the example of FIG. 6, the voltage command value Vvo of V phase is compared with the first carrier wave signal C1, and the voltage command value Vwo of W phase is compared with the second carrier wave signal C2. The voltage command value Vvo of U phase coincides with the maximum value Vdc of the carrier wave signal, and even if compared with either the first or the second carrier wave signal C1, C2, the high potential side switching device SPu of U phase is turned on constantly, and the low potential side switching device SNu of U phase is turned off constantly.

In the case of FIG. 6, the voltage vector is V2 in the time t1 to t2 and t6 to t7, is V1 in t2 to t3 and t5 to t6, and is V6 in t3 to t5. The interval of the zero voltage vector which existed in FIG. 4 is disappeared, and the bus current ripple can be reduced. On the other hand, for the winding current Iu of U phase, each interval of the effective voltage vector becomes longer compared with FIG. 4, and it increases and decreases once in the PWM period Tc. Accordingly, the amplitude becomes large, and the ripple component of the winding current increases.

1-3-4. Voltage Command Calculation Unit 33

The voltage command calculation unit 33 calculates voltage command values of three-phase Vuo, Vvo, Vwo applied to three-phase windings. In the present embodiment, the voltage command calculation unit 33 is provided with a basic command calculation unit 33a, a modulation unit 33b, and a control mode determination unit 33c.

1-3-4-1. Basic Command Calculation Unit 33a

The basic command calculation unit 33a calculates basic voltage command values of three-phase Vub, Vvb, Vwb of sine waves. In the present embodiment, the basic voltage command values of three-phase Vub, Vvb, Vwb are sine waves which oscillate centering on the center value Vdc/2 of the DC voltage supplied to the inverter 4 from the DC power source 2. The basic voltage command values of three-phase Vub, Vvb, Vwb may be sine waves which oscillate centering on zero.

For example, in a calculation of the basic voltage command values of three-phase, a vector control which controls currents on a rotating coordinate system of d-axis and q-axis is used. The rotating coordinate system of d-axis and q-axis is a rotating coordinate system of two-axis which consist of d-axis defined in the direction of the N-pole (the magnetic pole position θ) and q-axis defined in a direction which advanced to the d-axis by 90 degrees in the electrical angle.

The basic command calculation unit 33a converts the current detection values of three-phase Ius, Ivs, Iws into a current detection value of d-axis Ids and a current detection value of q-axis Iqs, by performing well-known the three-phase/two-phase conversion and the rotating coordinate conversion based on the magnetic pole position θ. The basic command calculation unit 33a calculates a current command value of d-axis Ido and a current command value of q-axis Iqo using various kinds of well-known methods. Then, the basic command calculation unit 33a calculates a voltage command value of d-axis Vdo and a voltage command value of q-axis Vqo by performing well-known current feedback control, based on the current command values of d-axis and q-axis Ido, Iqo, and the current detection values of d-axis and q-axis Ids, Iqs. The basic command calculation unit 33a may calculate the voltage command value of d-axis Vdo and the voltage command value of q-axis Vqo by well-known feedforward control based on the current command values of d-axis and q-axis Ido, Iqo.

Then, the basic command calculation unit 33a calculates the basic voltage command values of three-phase Vub, Vvb, Vwb by performing well-known the fixed coordinate conversion and the two-phase/three-phase conversion to the voltage command values of d-axis and q-axis Vdo, Vqo based on the magnetic pole position θ, and then adding the center value Vdc/2 of the DC voltage.

The basic voltage command values of three-phase may be calculated using other well-known control methods such as the V/f control.

1-3-4-2. Modulation Unit 33b

The modulation unit 33b calculates the voltage command values of three-phase Vuo, Vvo, Vwo by applying a modulation to the basic voltage command values of three-phase Vub, Vvb, Vwb. In the present embodiment, the modulation unit 33b executes a phase current ripple suppression control, when a first control mode is selected by the control mode determination unit 33c described below; executes a bus current ripple suppression control, when a second control mode is selected by the control mode determination unit 33c; and executes a switching loss suppression control, when a third control mode is selected by the control mode determination unit 33c. Each suppression control will be explained below.

1-3-4-2-1. Phase Current Ripple Suppression Control

The phase current ripple suppression control is a control that calculates the voltage command values of three-phase by applying a modulation to the basic voltage command values of three-phase so that a ripple component of the winding current of each phase (referred to also as a phase current) decreases less than a case where the basic voltage command values of three-phase of sine waves are set as the voltage command values of three-phase. The ripple component of the phase current when the phase current ripple suppression control is executed becomes smaller than the ripple component of the phase current when the bus current ripple suppression control is executed, and the ripple component of the phase current when the switching loss suppression control is executed.

In the present embodiment, as shown in the next equation, in the phase current ripple suppression control, the modulation unit 33b calculates a third order harmonic wave Voff which makes a center value between a maximum voltage Vmax and a minimum voltage Vmin in the voltage command values of three-phase coincide with a center value Vdc/2 of the DC voltage; and calculates the voltage command values of three-phase Vuo, Vvo, Vwo by subtracting the third order harmonic wave Voff from the basic voltage command values of three-phase Vub, Vvb, Vwb. As shown in the next equation, the modulation unit 33b selects the maximum voltage Vmax and the minimum voltage Vmin in the basic voltage command values of three-phase Vub, Vvb, Vwb, and calculates the third order harmonic wave Voff which makes the center value of the maximum voltage Vmax and the minimum voltage Vmin coincide with the center value Vdc/2 of the DC voltage.

[Math. 1]

$$Vmax = MAX(Vub, Vvb, Vwb)$$
$$Vmin = MIN(Vub, Vvb, Vwb)$$
$$Voff = \frac{(Vmax + Vmin)}{2} - \frac{Vdc}{2} \qquad \cdots (1)$$
$$Vuo = Vub - Voff$$
$$Vvo = Vvb - Voff$$
$$Vwo = Vwb - Voff$$

By setting like the equation (1), the middle time between t2 and t4 in FIG. 4 can be coincided with the middle time between t1 and t5, and the middle time between t6 and t8 can be coincided with the middle time between t5 and t9. As a result, the ripple component of the winding current of each phase becomes the minimum. In order to shorten each interval of the effective voltage vector, the same carrier wave signal C is used for the voltage command values of three-phase.

1-3-4-2-2. Bus Current Ripple Suppression Control

The bus current ripple suppression control is a control that calculates the voltage command values of three-phase by applying a modulation to the basic voltage command values of three-phase so that a ripple component of the bus current Iinv flowing between the DC power source 2 and the inverter 4 decreases less than a case where the basic voltage command values of three-phase of sine waves are set as the voltage command values of three-phase. The ripple component of the bus current when the bus current ripple suppression control is executed becomes smaller than the ripple component of the bus current when the phase current ripple suppression control is executed, and the ripple component of the bus current when the switching loss suppression control is executed.

<Modulation of voltage command value>

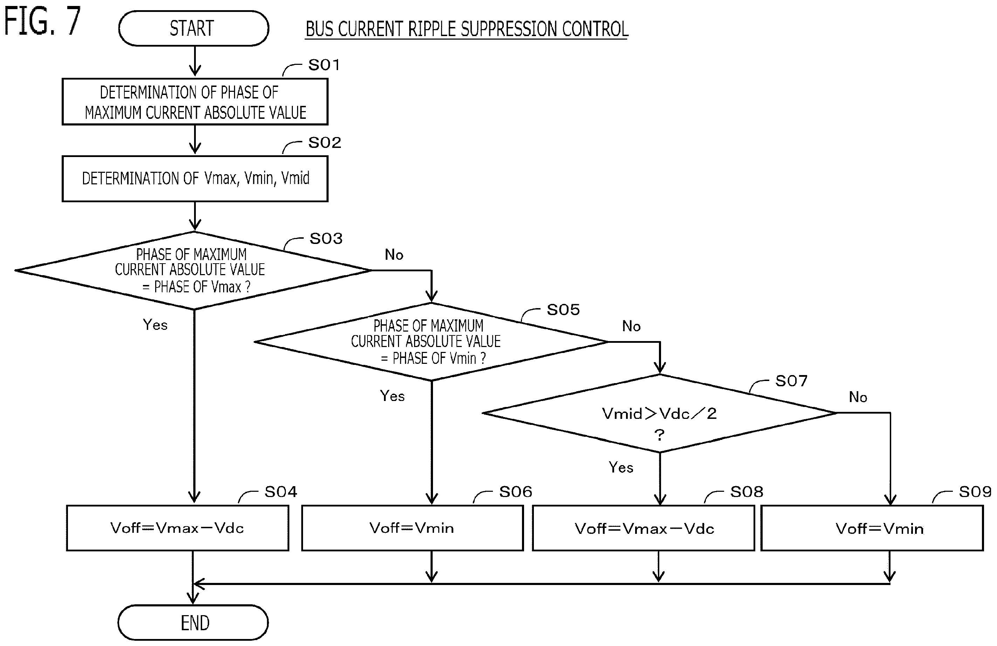

In the present embodiment, the bus current ripple suppression control is performed as shown in the flowchart of FIG. 7, and the equation (2). In the step S01, the modulation unit 33b determines a maximum current absolute value Iabsmax which is a maximum value in absolute values of the winding currents of three-phase, and determines a phase of the maximum current absolute value Iabsmax, based on the current detection values of three-phase Ius, Ivs, Iws. The modulation unit 33b may estimate the winding currents of three-phase based on the voltage command values or the current command values, and may use them for determination.

In the step S02, the modulation unit 33b determines a maximum voltage Vmax, a minimum voltage Vmin, and a middle voltage Vmid in the voltage command values of three-phase. In the present embodiment, the modulation unit 33b determines the maximum voltage Vmax, the minimum voltage Vmin, and the middle voltage Vmid in the basic voltage command values of three-phase Vub, Vvb, Vwb.

In the step S03, the modulation unit 33b determines whether or not a phase of the maximum current absolute value Iabsmax coincides with a phase of the maximum voltage Vmax in the voltage command values of three-phase. When it coincides, it advances to the step S04, and when it does not coincide, it advances to the step S05. In the step S04, the modulation unit 33b executes a flat-top two-phase modulation that calculates an offset voltage Voff which makes the voltage command value of the phase of the maximum voltage Vmax coincide with a maximum value (in this example, Vdc) of the carrier wave signal (Voff=Vmax-Vdc), and calculates the voltage command values of three-phase Vuo, Vvo, Vwo by subtracting the offset voltage Voff from the basic voltage command values of three-phase Vub, Vvb, Vwb.

On the other hand, in the step S05, the modulation unit 33b determines whether or not the phase of the maximum current absolute value Iabsmax coincides with a phase of the minimum voltage Vmin in the voltage command values of three-phase. When it coincides, it advances to the step S06, and when it does not coincide, it advances to the step S07. In the step S06, the modulation unit 33b executes a flat-bottom two-phase modulation that calculates the offset voltage Voff which makes the voltage command value of the phase of the minimum voltage Vmin coincide with a minimum value (in this example, 0) of the carrier wave signal (Voff=Vmin), and calculates the voltage command values of three-phase Vuo, Vvo, Vwo by subtracting the offset voltage Voff from the basic voltage command values of three-phase Vub, Vvb, Vwb.

On the other hand, in the step S07, the phase of the maximum current absolute value Iabsmax does not coincide with the phase of the maximum voltage Vmax and the phase of the minimum voltage Vmin, but the phase of the maximum current absolute value Iabsmax coincides with a phase of the middle voltage Vmid in the voltage command values of three-phase. In this case, the modulation unit 33b determines whether or not the middle voltage Vmid is larger than the center value (in this example, Vdc/2) of the DC voltage supplied to the inverter. When it is larger, it advances to the step S08, and when it is not larger, it advances to the step S09. In the step S08, similarly to the step S04, the modulation unit 33b executes the flat-top two-phase modulation that calculates the offset voltage Voff which makes the voltage command value of the phase of the maximum voltage Vmax coincide with the maximum value (Vdc) of the carrier wave signal (Voff=Vmax-Vdc), and calculates the voltage command values of three-phase Vuo, Vvo, Vwo by subtracting the offset voltage Voff from the basic voltage command values of three-phase Vub, Vvb, Vwb. On the other hand, in the step S09, similarly to the step S06, the modulation unit 33b executes the flat-bottom two-phase modulation that calculates the offset voltage Voff which makes the voltage command value of the phase of the minimum voltage Vmin coincide with the minimum value (0) of the carrier wave signal (Voff=Vmin), and calculates the voltage command values of three-phase Vuo, Vvo, Vwo by subtracting the offset voltage Voff from the basic voltage command values of three-phase Vub, Vvb, Vwb.

[Math. 2]

$$
\begin{aligned}
&\text{Iabsmax} = \text{MAX}(|\text{Ius}|, |\text{Ivs}|, |\text{Iws}|)\\
&\text{Vmax} = \text{MAX}(\text{Vub}, \text{Vvb}, \text{Vwb})\\
&\text{Vmin} = \text{MIN}(\text{Vub}, \text{Vvb}, \text{Vwb})\\
&\text{Vmid} = \text{MID}(\text{Vub}, \text{Vvb}, \text{Vwb})\\
&\text{Voff} = \text{Vmax} - \text{Vdc} \quad \text{or} \quad \text{Voff} = \text{Vmin} \qquad \cdots (2)\\
&\text{Vuo} = \text{Vub} - \text{Voff}\\
&\text{Vvo} = \text{Vvb} - \text{Voff}\\
&\text{Vwo} = \text{Vwb} - \text{Voff}
\end{aligned}
$$

When the power-factor angle described below is 0 degree, the phase of maximum current absolute value coincides with the phase of the maximum voltage or the phase of minimum voltage, and does not coincide with the phase of the middle voltage. Accordingly, one of the step S03 or the step S05 is established, and processing of the step S07 to the step S09 is not performed. When the power-factor angle is operated around -30 degrees to 30 degrees, a frequency that the phase of the maximum current absolute value coincides with the phase of the middle voltage is small. Accordingly, processing of the step S07 to the step S09 may be not performed, and instead, processing of the step S04 or the step S06 corresponding to the step S03 or the step S05 established last may be continued.

<Switching of first and second carrier wave signals>

When the bus current ripple suppression control is performed, the PWM control unit 34 uses, as the carrier wave signal, a first carrier wave signal C1, and a second carrier wave signal C2 which differs from the first carrier wave signal C1 by 180 degrees in phase. For two phases other than the phase of the maximum voltage Vmax when executing the flat-top two-phase modulation (the phase of the minimum voltage Vmin, the phase of the middle voltage Vmid), or two phases other than the phase of the minimum voltage Vmin when executing the flat-bottom two-phase modulation (the phase of the maximum voltage Vmax, the phase of the middle voltage Vmid), the modulation unit 33b compares the voltage command value of one phase with the first carrier wave signal C1, and compares the voltage command value of the other phase with the second carrier wave signal C2. That is, for the voltage command values of two phases which do not stick to the maximum value (Vdc) or the minimum value (0) of the carrier wave signal by the flat-top two-phase modulation or the flat-bottom two-phase modulation, the modulation unit 33b determines that the voltage command value of one phase is compared with the first carrier wave signal C1, and determines that the voltage command value of the other phase is compared with the second carrier wave signal C2.

In the bus current ripple suppression control, in a region where the amplitude of the voltage command value is low, the maximum current absolute value which is the maximum value in the absolute values of the winding currents of three-phase can be prevented from flowing through the bus line, and the ripple component of the bus current can be reduced.

<Switching of carrier wave signals when power-factor angle is 0 degree>

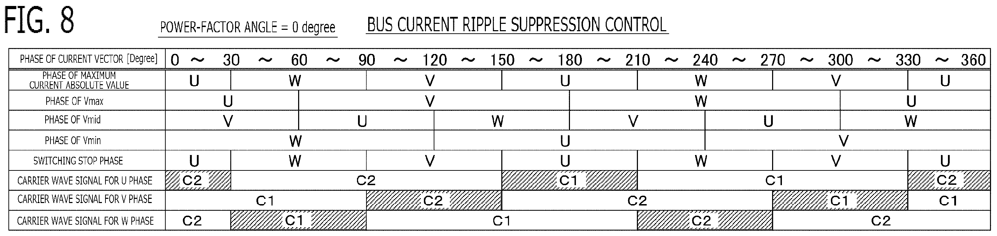

A switching behavior of the carrier wave signals when the power-factor angle is 0 degree will be explained. The power-factor angle is a phase difference of the current vector with respect to the voltage vector. When the power-factor angle is 0 degree, the phase of the voltage vector coincides with the phase of the current vector. When the power-factor angle is 0 degree, as shown in FIG. 8, by switching the first carrier wave signal C1 and the second carrier wave signal C2 according to the phase of the current vector (corresponding to the phase of maximum current absolute value), switching of the carrier wave signals and reflection of the applied voltage can be performed without synchronizing.

The current vector is a current vector obtained by performing the three-phase/two-phase conversion to the winding currents of three-phase, and the phase of the current vector is a phase of the current vector with respect to the winding position of U phase.

By setting the first and the second carrier wave signals C1, C2 as shown in FIG. 8, a switching frequency of the carrier wave signal can be decreased. Specifically, as shown in FIG. 8, the carrier wave signal which is compared with the voltage command value Vuo of U phase is switched to the first carrier wave signal C1 in 210 to 330 degrees of the phase of the current vector, and is switched to the second carrier wave signal C2 in 30 to 150 degrees. The carrier wave signal which is compared with the voltage command value Vvo of V phase is switched to the first carrier wave signal C1 in 0 to 90 degrees, and 330 to 360 degrees, and is switched to the second carrier wave signal C2 in 150 to 270 degrees. The carrier wave signal which is compared with the voltage command value Vwo of W phase is switched to the first carrier wave signal C1 in 90 to 210 degrees, and is switched to the second carrier wave signal C2 in 0 to 30 degrees, and 270 to 360 degrees.

That is, in each phase, the first carrier wave signal C1 and the second carrier wave signal C2 are switched every 120 degrees, and a stop interval of the switching operation shown by hatching is interposed between the interval of the first carrier wave signal C1, and the interval of the second carrier wave signal C2. In the stop interval of switching operation, the voltage command value sticks to the maximum value or the minimum value of the carrier wave signal (flat-top, flat-bottom), the switching device remains on or off, and the switching operation stops. Accordingly, in the stop interval of switching operation, even if either the first or the second carrier wave signal C1, C2 is set, the switching device remains on or off, and the switching signal does not change.

For example, in the stop interval of each switching operation, if it is a rotation direction which changes from the left to the right of FIG. 8, the carrier wave signal of U phase is switched to the first carrier wave signal C1 in 150 to 210 degrees, and is switched to the second carrier wave signal C2 in 330 to 360 degrees, and 0 to 30 degrees. And, the carrier wave signal of V phase is switched to the first carrier wave signal C1 in 270 to 330 degrees, and is switched to the second carrier wave signal C2 in 90 to 150 degrees. And, the carrier wave signal of W phase is switched to the first carrier wave signal C1 in 30 to 90 degrees, and is switched to the second carrier wave signal C2 in 210 to 270 degrees.

Accordingly, the carrier wave signal of U phase is switched to the first carrier wave signal C1 in 150 to 330 degrees of the phase of the current vector, and is switched to the second carrier wave signal C2 in 330 to 360 degrees, and 0 to 150 degrees. The carrier wave signal of V phase is switched to the first carrier wave signal C1 in 270 to 360 degrees, and 0 to 90 degrees, and is switched to the second carrier wave signal C2 in 90 to 270 degrees. The carrier wave signal of W phase is switched to the first carrier wave signal C1 in 30 to 210 degrees, and is switched to the second carrier wave signal C2 in 210 to 360 degrees, and 0 to 30 degrees.

That is, the modulation unit 33b switches the carrier wave signal of each phase, which is compared with the voltage command value of each phase, to the first carrier wave signal C1 in continuous 180 degrees out of 360 degrees, and switches the carrier wave signal of each phase to the second carrier wave signal C2 in the remaining continuous 180 degrees. Accordingly, the number of switching of the carrier wave signals can be reduced.

For example, when the phase of the current vector is 15 degrees, the phase of the maximum current absolute value becomes U phase. when the phase current ripple suppression control is performed, the interval of the effective voltage vector is minimized, so the set voltage vector becomes V1, V2, and V0, and the bus current becomes Iu, -Iw, and 0, respectively. Since the current Iu of U phase whose current absolute value becomes the maximum flows into the bus line, the bus current ripple becomes large easily as the phase current increases. Therefore, when the absolute value of the current vector is large, the bus current ripple suppression control is performed. When the bus current ripple suppression control is performed, the set voltage vector becomes V2, V6, and V7, and the bus current becomes -Iw, -Iv, and 0, respectively. Since the current Iu of U phase of the maximum current absolute value can be avoid to flow into the bus line, the bus current ripple can be reduced.

<Switching of carrier wave signals when power-factor angle is 60 degrees>

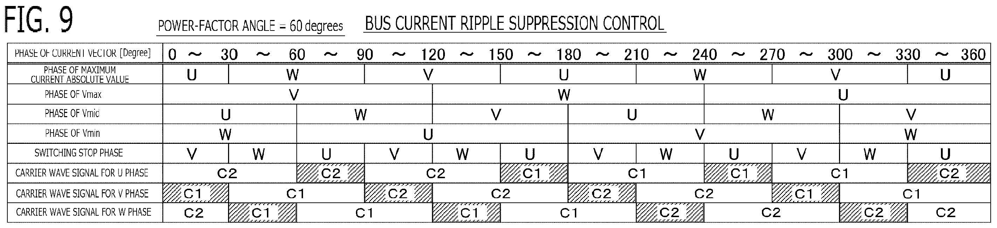

A switching behavior of the carrier wave signals when the power-factor angle is 60 degrees will be explained. The power-factor angle is a phase difference of the current vector with respect to the voltage vector. As shown in FIG. 9, by switching the first carrier wave signal C1 and the second carrier wave signal C2 according to the phase of the current vector (corresponding to the phase of maximum current absolute value), switching of the carrier wave signals and reflection of the applied voltage can be performed without synchronizing.

Specifically, the carrier wave signal which is compared with the voltage command value Vuo of U phase is switched to the first carrier wave signal C1 in 180 to 240 degrees of the phase of the current vector, and 270 to 330 degrees, and is switched to the second carrier wave signal C2 in 0 to 60 degrees, and 90 to 150 degrees. The carrier wave signal which is compared with the voltage command value Vvo of V phase is switched to the first carrier wave signal C1 in 30 to 90 degrees, and 300 to 360 degrees, and is switched to the second carrier wave signal C2 in 120 to 180 degrees, and 210 to 270 degrees. The carrier wave signal which is compared with the voltage command value Vwo of W phase is switched to the first carrier wave signal C1 in 60 to 120 degrees, and 150 to 210 degrees, and is switched to the second carrier wave signal C2 in 0 to 30 degrees, 240 to 300 degrees, and 330 to 360 degrees.

That is, in each phase, every 60 degrees, while interposing the stop interval of switching operation of 30 degrees by the flat-top or the flat-bottom, the carrier wave signal is switched in order of "C1", "C1", "C2", "C2", "C1", "C1", ... That is, after one carrier wave signal is set continuously twice, the other carrier wave signal is set continuously twice. In the stop interval of switching operation, even if either carrier wave signal is set, the switching device remains on or off. Accordingly, even if the carrier wave signal is switched during this interval, the switching signal does not change.

For example, in the stop interval of switching operation, if it is a rotation direction which changes from the left to the right of FIG. 9, the carrier wave signal of U phase is switched to the first carrier wave signal C1 in 150 to 180 degrees of the phase of the current vector, and is switched to the second carrier wave signal C2 in 330 to 360 degrees. And, the carrier wave signal of V phase is switched to the first carrier wave signal C1 in 270 to 300 degrees, and is switched to the second carrier wave signal C2 in 90 to 120 degrees. And, the carrier wave signal of W phase is switched to the first carrier wave signal C1 in 30 to 60 degrees, and is switched to the second carrier wave signal C2 in 210 to 240 degrees.

In FIG. 9, the carrier wave signals of two phases whose switching operation is not stopped by the flat-top two-phase modulation or the flat-bottom two-phase modulation become the same during 30 degrees every 60 degrees. That is, for example, in 60 to 90 degrees of FIG. 9, U phase is the switching stop phase, and the carrier wave signals of V phases and W phase other than the switching stop phase are both the first carrier wave signal C1. In 120 to 150 degrees, W phase is the switching stop phase, and the carrier wave signals of U phases and V phase other than the switching stop phase are both the second carrier wave signal C2.

Since the phase between the voltage vector and the current vector is shifted by 60 degrees, in the range where the carrier wave signals of two phases become the same, the phase of the maximum current absolute value becomes the phase of the middle voltage. For example, in 60 to 90 degrees where the carrier wave signals of V phase and W phase become the same, the phase of the maximum current absolute value and the phase of the middle voltage are the same W phase. In 120 to 150 degrees where the carrier wave signals of U phase and V phase become the same, the phase of the maximum current absolute value and the phase of the middle voltage are the same V phase. At this time, if the carrier wave signals of two phases other than the switching stop phase are different, the current of the phase of the maximum current absolute value flows into the bus line, so the bus current ripple becomes large. However, by setting the carrier wave signals of two phases other than the switching stop phase to the same, the current of the phase of the maximum current absolute value can be avoided from flowing into the bus line.

For example, when the phase of the current vector is 15 degrees, the outputted voltage vector becomes V2, V3, and V7, and the bus current becomes -Iw1, Iv1, and 0, respectively. Accordingly, since the current Iu of U phase whose current absolute value becomes the maximum can be avoided from flowing into the bus line, the bus current ripple can be reduced. When the phase of a current vector is 45 degrees, the outputted voltage vector becomes V1, V3, and V0, and the bus current becomes Iu1, Iv1, and 0, respectively. Accordingly, since the current Iw of W phase whose current absolute value becomes the maximum can be avoided from flowing into the bus line, the bus current ripple can be reduced.

When the power-factor angle is operated around -30 degrees to 30 degrees, a frequency that the phase of the maximum current absolute value coincides with the phase of the middle voltage is small. Accordingly, the processing which sets the carrier wave signals of two phases other than the switching stop phase to the same when the phase of the maximum current absolute value becomes the phase of the middle voltage may not be performed.

Even when the power-factor angle is 60 degrees, similarly to the case where the power-factor angle is 0 degree, the carrier wave signal of U phase is switched to the first carrier wave signal C1 in 150 to 330 degrees of the phase of the current vector, and is switched to the second carrier wave signal C2 in 330 to 360 degrees, and 0 to 150 degrees. The carrier wave signal of V phase is switched to the first carrier wave signal C1 in 270 to 360 degrees, and 0 to 90 degrees, and is switched to the second carrier wave signal C2 in 90 to 270 degrees. The carrier wave signal of W phase is switched to the first carrier wave signal C1 in 30 to 210 degrees, and is switched to the second carrier wave signal C2 in 210 to 360 degrees, and 0 to 30 degrees. That is, the same switching processing can be performed regardless of the change in the power-factor angle.

<Flowchart of switching processing of carrier wave at time of one direction rotation>

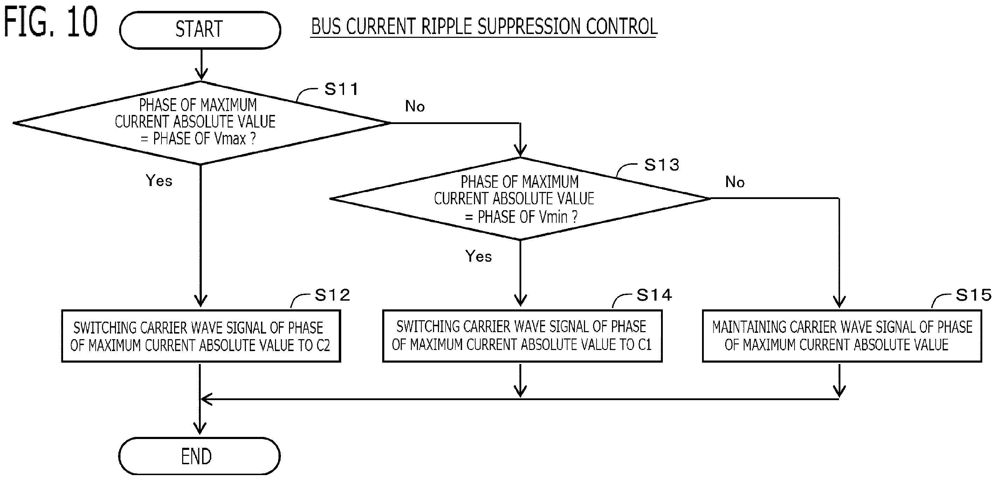

As shown in FIG. 8 and FIG. 9, in order to switch the carrier wave signals when rotating to one direction, for example, the switching processing may be performed according to the flowchart of FIG. 10. In the step S11, the modulation unit 33b determines whether or not the phase of the maximum current absolute value Iabsmax coincides with the phase of the maximum voltage Vmax in the voltage command values of three-phase. When it coincides, it advances to the step S12, and when it does not coincide, it advances to the step S13. In the step S12, the modulation unit 33b switches the carrier wave signal of the phase of the maximum current absolute value to the second carrier wave signal C2.

On the other hand, in the step S13, the modulation unit 33b determines whether or not the phase of the maximum current absolute value Iabsmax coincides with the phase of the minimum voltage Vmin in the voltage command values of three-phase. When it coincides, it advances to the step S14, and when it does not coincide, it advances to the step S15. In the step S14, the modulation unit 33b switches the carrier wave signal of the phase of the maximum current absolute value to the first carrier wave signal C1.

On the other hand, in the step S15, the phase of the maximum current absolute value Iabsmax coincides with the phase of the middle voltage Vmid, and the modulation unit 33b maintains the currently set carrier wave signal of the phase of the maximum current absolute value, without switching.

According to the above processing, when the step S11 is established, the voltage command value of the phase of the maximum current absolute value coincides with the maximum value of the carrier wave signal by the flat-top two-phase modulation, and the switching operation stops. In this state, since the carrier wave signal of the phase of the maximum current absolute value is switched to the second carrier wave signal C2, disturbance of the applied voltage by switching can be suppressed. When the step S13 is established, the voltage command value of the phase of the maximum current absolute value coincides with the minimum value of the carrier wave signal by the flat-bottom two-phase modulation, and the switching operation stops. In this state, since the carrier wave signal of the phase of the maximum current absolute value is switched to the first carrier wave signal C1, disturbance of the applied voltage by switching can be suppressed.

<Flowchart of switching processing of carrier wave at time of other direction rotation>

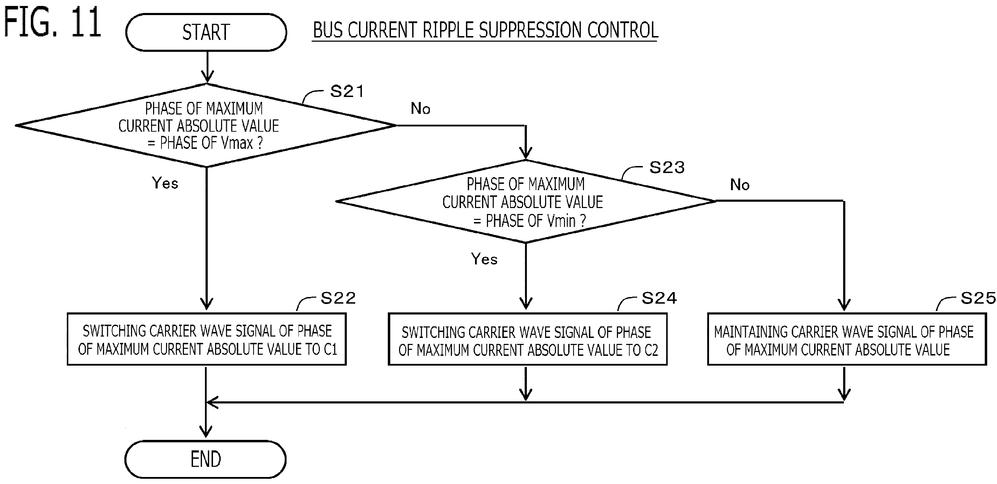

In order to switch the carrier wave signal when rotating to the other direction opposite to FIG. 8 and FIG. 9, for example, the switching processing may be performed according to the flowchart of FIG. 11. In the step S21, the modulation unit 33b determines whether or not the phase of the maximum current absolute value Iabsmax coincides with the phase of the maximum voltage Vmax in the voltage command values of three-phase. When it coincides, it advances to the step S22, and when it does not coincide, it advances to the step S23. In the step S22, the modulation unit 33b switches the carrier wave signal of the phase of the maximum current absolute value to the first carrier wave signal C1.

On the other hand, in the step S23, the modulation unit 33b determines whether or not the phase of the maximum current absolute value Iabsmax coincides with the phase of the minimum voltage Vmin in the voltage command values of three-phase. When it coincides, it advances to the step S24, and when it does not coincide, it advances to the step S25. In the step S24, the modulation unit 33b switches the carrier wave signal of the phase of the maximum current absolute value to the second carrier wave signal C2.

On the other hand, in the step S25, the phase of the maximum current absolute value Iabsmax coincides with the phase of the middle voltage Vmid, and the modulation unit 33b maintains the currently set carrier wave signal of the phase of the maximum current absolute value, without switching.

In FIG. 6, in the PWM period Tc, the first carrier wave signal C1 is a triangular wave projecting upward, and the second carrier wave signal C2 is a triangular wave projecting downward. But, they may be replaced.

<Another example of switching of carrier wave signal>

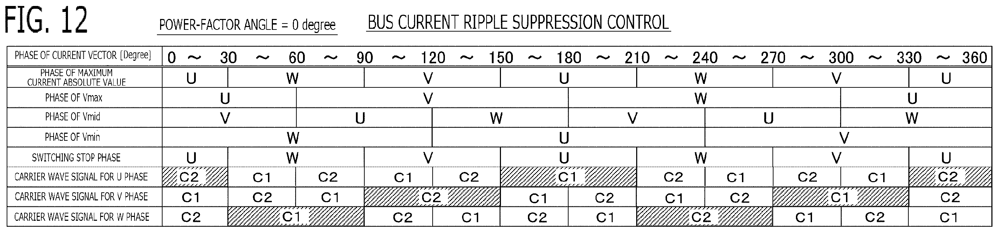

In the above example, the carrier wave signal is switched to the first carrier wave signal C1 in continuous 180 degrees, and is switched to the second carrier wave signal C2 in the remaining continuous 180 degrees. But, the first carrier wave signal C1 and the second carrier wave signal C2 may be switched every a different period. For example, as shown in FIG. 12, the first carrier wave signal C1 and the second carrier wave signal C2 may be switched every 30 degrees period. Other than the 30 degrees period, any period, such as 60 degrees period, may be set. Even in this case, as described above, for two phases other than the phase of the maximum voltage when executing the flat-top two-phase modulation, or two phases other than the phase of the minimum voltage when executing the flat-bottom two-phase modulation, the modulation unit 33b compares the voltage command value of one phase with the first carrier wave signal C1, and compares the voltage command value of the other phase with the second carrier wave signal C2.

1-3-4-2-3. Switching Loss Suppression Control

The switching loss suppression control is a control that calculates the voltage command values of three-phase by applying a modulation to the basic voltage command values of three-phase so that a loss of the switching devices decreases less than a case where the basic voltage command values of three-phase of sine waves are set as the voltage command values of three-phase. The loss of the switching devices when executing the switching loss suppression control becomes smaller than the loss of the switching devices when executing the phase current ripple suppression control, and the loss of the switching devices when executing the bus current ripple suppression control.

In the present embodiment, in the switching loss suppression control, as shown in the next equation, the modulation unit 33b calculates an offset voltage Voff which makes the voltage command value of the phase of the maximum voltage Vmax in the voltage command values of three-phase coincide with the maximum value (in this example, Vdc) of the carrier wave signal, or which makes the voltage command value of the phase of the minimum voltage Vmin in the voltage command values of three-phase coincide with the minimum value (in this example, 0) of the carrier wave signal; and calculates the voltage command values of three-phase Vuo, Vvo, Vwo by subtracting the offset voltage Voff from the basic voltage command values of three-phase Vub, Vvb, Vwb.

[Math. 3]

$$Vmax = MAX(Vub, Vvb, Vwb)$$
$$Vmin = MIN(Vub, Vvb, Vwb)$$
$$Voff = Vmax - Vdc \quad or \quad Voff = Vmin \qquad \cdots(3)$$
$$Vuo = Vub - Voff$$
$$Vvo = Vvb - Voff$$
$$Vwo = Vwb - Voff$$

According to this configuration, the voltage command value of the phase of the maximum voltage Vmax or the minimum voltage Vmin can be coincided with the maximum value or the minimum value of the carrier wave signal, the switching operation of the high potential side and the low potential side switching devices of this phase can be stopped, and the switching loss can be reduced.

<First example of switching of flat-top and flat-bottom>

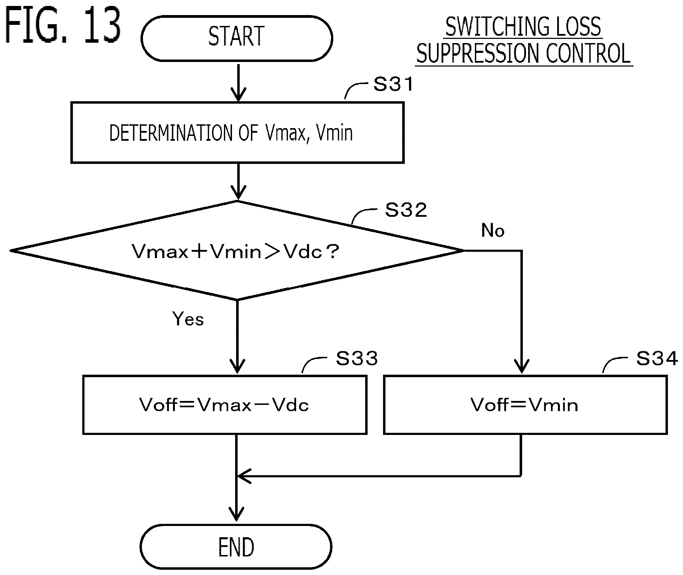

In the present embodiment, the switching loss suppression control is performed as shown in the flowchart of FIG. 13. In the step S31, the modulation unit 33b determines the maximum voltage Vmax, and the minimum voltage Vmin in the voltage command values of three-phase. In the present embodiment, the modulation unit 33b determines the maximum voltage Vmax, and the minimum voltage Vmin in the basic voltage command values of three-phase Vub, Vvb, Vwb.

In the step S32, the modulation unit 33b determines whether or not a total value of the maximum voltage Vmax and the minimum voltage Vmin is larger than a double value (in this example, Vdc) of the center value of the DC voltage. When it is larger, it advances to the step S33, and when it is not larger, it advances to the step S34. If the center value of the DC voltage is set to 0, it is determined whether or not Vmax + Vmin > 0. In the step S33, the modulation unit 33b executes the flat-top two-phase modulation that calculates the offset voltage Voff which makes the voltage command value of the phase of the maximum voltage Vmax coincide with the maximum value (in this example, Vdc) of the carrier wave signal (Voff=Vmax-Vdc), and calculates the voltage command values of three-phase Vuo, Vvo, Vwo by subtracting the offset voltage Voff from the basic voltage command values of three-phase Vub, Vvb, Vwb.

On the other hand, in the step S34, the modulation unit 33b executes the flat-bottom two-phase modulation that calculates the offset voltage Voff which makes the voltage command value of the phase of the minimum voltage Vmin coincide with the minimum value (in this example, 0) of the carrier wave signal (Voff=Vmin), and calculates the voltage command values of three-phase Vuo, Vvo, Vwo by subtracting the offset voltage Voff from the basic voltage command values of three-phase Vub, Vvb, Vwb.

In this way, in the step S32, since the flat-top two-phase modulation and the flat-bottom two-phase modulation are switched according to the total value of the maximum voltage Vmax and the minimum voltage Vmin, heat generation can be prevented from being biased toward the high potential side switching device or the low potential side switching device.

<Second example of switching of flat-top and flat-bottom>

As the current flowing through the switching device becomes large, the switching loss becomes large. Accordingly, by setting the voltage command value of the phase whose absolute value of the winding current becomes large as the flat-top or the flat-bottom, the reduction effect of switching loss can be increased.

When the power-factor angle is around 0 or 180 degrees, the phase whose absolute value of the winding current becomes the maximum, and the phase whose absolute value of the voltage command value becomes the maximum become the same at almost all phases of the current vector. Accordingly, sufficient effect can be obtained by the determination method of switching based on the voltage command values as shown in above FIG. 13. However, when the power-factor angle is around 60, 120, 240, or 300 degrees, a deviation between the phase whose absolute value of the winding current becomes the maximum, and the phase whose absolute value of the voltage command value becomes the maximum becomes large.

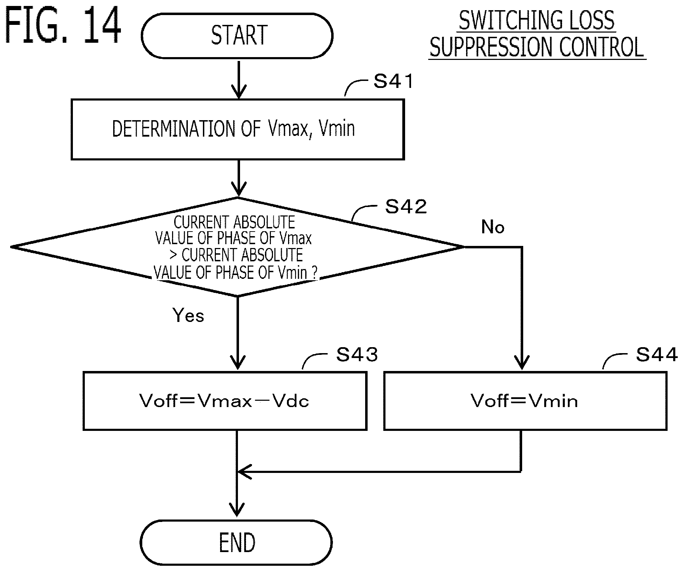

Then, as shown in the flowchart of FIG. 14, the flat-top and the flat-bottom may be switched considering both the voltage command value and the winding current. In the step S41, the modulation unit 33b determines the maximum voltage Vmax, and the minimum voltage Vmin in the voltage command values of three-phase. In the present embodiment, the modulation unit determines the maximum voltage Vmax, and the minimum voltage Vmin in the basic voltage command values of three-phase Vub, Vvb, Vwb.

In the step S42, the modulation unit 33b determines whether or not the absolute value of the winding current of the phase of the maximum voltage Vmax is larger than the absolute value of the winding current of the phase of the minimum voltage Vmin. When it is larger, it advances to the step S43, and when it is not larger, it advances to the step S44. Herein, although the detection values of the winding currents of three-phase Ius, Ivs, Iws are used for the winding current, the winding currents of three-phase estimated based on the voltage command values or the current command values may be used.

In the step S43, the modulation unit 33b executes the flat-top two-phase modulation that calculates the offset voltage Voff which makes the voltage command value of the phase of the maximum voltage Vmax coincide with the maximum value (in this example, Vdc) of the carrier wave signal (Voff=Vmax-Vdc), and calculates the voltage command values of three-phase Vuo, Vvo, Vwo by subtracting the offset voltage Voff from the basic voltage command values of three-phase Vub, Vvb, Vwb.

On the other hand, in the step S44, the modulation unit 33b executes the flat-bottom two-phase modulation that calculates the offset voltage Voff which makes the voltage command value of the phase of the minimum voltage Vmin coincide with the minimum value (in this example, 0) of the carrier wave signal (Voff=Vmin), and calculates the voltage command values of three-phase Vuo, Vvo, Vwo by subtracting the offset voltage Voff from the basic voltage command values of three-phase Vub, Vvb, Vwb.

As explained above, without switching the flat-top two-phase modulation and the flat-bottom two-phase modulation synchronizing with rotation, the flat-top two-phase modulation or the flat-bottom two-phase modulation may be set without synchronizing with rotation (for example, constantly or periodical exchange).

1-3-4-3. Control Mode Determination Unit 33C

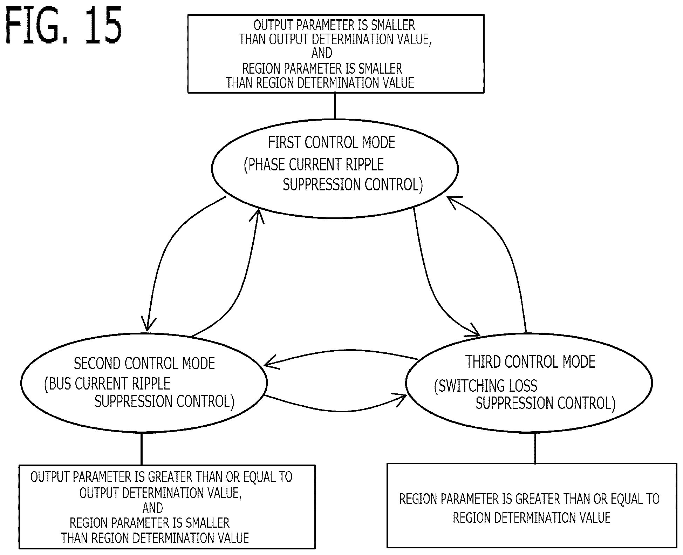

As shown in FIG. 15, the control mode determination unit 33c switches the first control mode, the second control mode, and the third control mode, based on an operating state of the AC rotary machine. There may be other control modes other than the first to third control modes, and the control mode may be switched to other control modes.

As mentioned above, the modulation unit 33b executes the phase current ripple suppression control, when the first control mode is selected; executes the bus current ripple suppression control, the when second control mode is selected; and executes the switching loss suppression control, when the third control mode is selected.

The control mode determination unit 33c switches the first control mode, the second control mode, and the third control mode, based at least on an output parameter which is one of the absolute value (magnitude) of the current vector of the winding currents of three-phase, and an absolute value of an output torque of the AC rotary machine, and a region parameter which is one of an absolute value of the rotational speed of the AC rotary machine and the absolute value of the voltage vector of the voltage command values of three-phase.

According to this configuration, each ripple or loss can be appropriately reduced by switching each control mode based on the output parameter and the region parameter which are related to an increase and decrease in the phase current ripple, an increase and decrease in the bus current ripple, and an increase and decrease in the switching loss.

In the present embodiment, when the output parameter is smaller than an output determination value and the region parameter is smaller than a region determination value, the control mode determination unit 33c switches to the first control mode. When the output parameter is greater than or equal to the output determination value and the region parameter is smaller than the region determination value, the control mode determination unit 33c switches to the second control mode. When the region parameter is greater than or equal to the region determination value, the control mode determination unit 33c switches to the third control mode.

Herein, if the absolute value of the rotational speed or the absolute value of the voltage vector is used as the region parameter, the region parameter is compared with the region determination value.

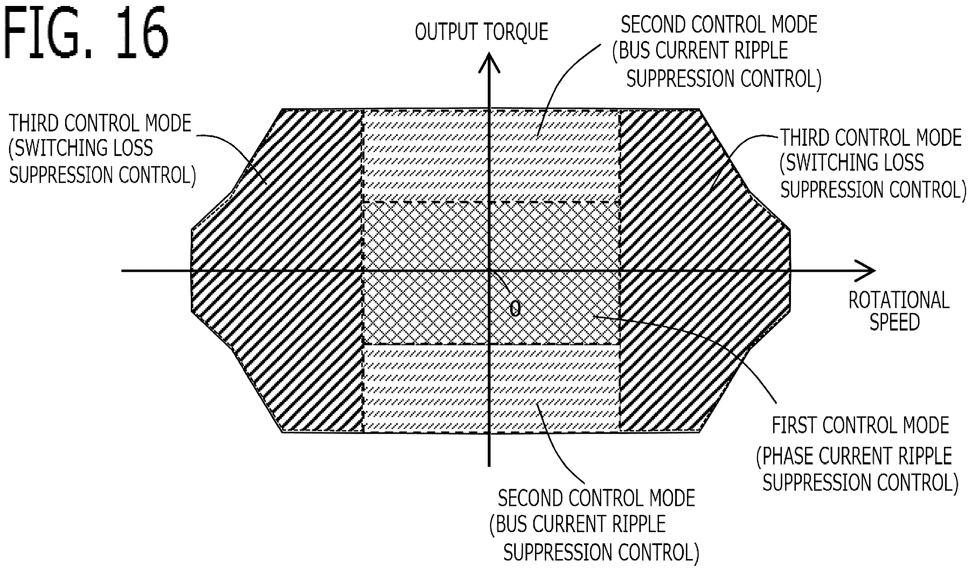

FIG. 16 shows each control mode roughly in the operating region of the AC rotary machine of the output torque and the rotational speed. By referring to a map data in which a relation between the output parameter, the region parameter, and the control mode setting is preliminarily set, the control mode determination unit 33c may determine the control mode corresponding to the present output parameter and the present region parameter. Alternatively, the output determination value may be changed according to specific operating state, such as the region parameter, and the region determination value may be changed according to specific operating state, such as the output parameter. In each quadrant, the output determination value and the region determination value may be changed according to the magnitude of the DC voltage. Finer control mode setting becomes possible.

Since the switching loss becomes large according to the absolute value of the current vector, the heat generation due to the switching loss is reduced by reducing the switching loss in the region where the absolute value of the current vector is large. Then, the selection of the cheap switching device and the simplification of the cooling mechanism becomes possible. When the modulation rate is high, the negative d-axis current is supplied actively in order to suppress the decrease in the output torque, using well-known the magnetic flux weakening control. As a result, since the absolute value of the current vector increases even if not leading to the increase in the output torque, the switching loss becomes large easily when the modulation rate is high. On the other hand, since the induced voltage becomes large when the modulation rate is high, the phase current ripple and the iron loss are small even if the phase current ripple suppression control is not used. Therefore, when the modulation rate is high, the influence of the switching loss becomes relatively larger than the iron loss. In order to improve efficiency, when the modulation rate is high, that is, when the absolute value of the rotational speed or the absolute value of the voltage vector is large, it is preferable to give priority to the reduction of the switching loss.

According to the above configuration, when the region parameter which is one of the absolute value of the rotational speed and the absolute value of the voltage vector becomes larger than the region determination value, the control mode is switched to the third control mode. In this operating state, since the switching loss becomes large relatively as mentioned above, the switching loss can be effectively reduced by the switching loss suppression control.

The ripple component of the bus current which flows into the smoothing capacitor 3 becomes large according to the absolute value of the current vector, and changes according to the power-factor angle. Accordingly, in the region where the absolute value of the current vector becomes large, the capacitor current can be reduced by reducing the ripple component of the bus current, and the smoothing capacitor 3 can be miniaturized. When the ripple component of the bus current is suppressed, the intervals of the effective voltage vector are distributed, so the phase current ripple tends to increase. When a modulation rate is high, the degree of freedom in the arrangement of the intervals of the effective voltage vector is small, and the difference in the ripple component of the bus current due to the method is small. When the modulation rate is high, it is preferable to give priority to the improvement in efficiency and to give priority to the reduction of switching loss.

According to the above configuration, when the region parameter which is one of the absolute value of the rotational speed and the absolute value of the voltage vector becomes larger than the region determination value, the control mode is switched to the third control mode. In this operating state, since the switching loss becomes large relatively as mentioned above, the switching loss can be effectively reduced by the switching loss suppression control.

According to the above configuration, when the output parameter which is one of the absolute value of the current vector and the absolute value of the output torque becomes larger than the output determination value, and the region parameter which is one of the absolute value of the rotational speed and the absolute value of the voltage vector becomes smaller than region determination value, the control mode is switched to the second control mode. In this operating state, since the ripple component of the bus current becomes large as mentioned above, the ripple component of the bus current can be effectively reduced by the bus current ripple suppression control.

The iron loss becomes large as the absolute value of the rotational speed becomes small. By reducing the ripple component of the winding current (the phase current) of each phase in the low rotation speed region, the overall efficiency of the AC rotary machine 1 and the inverter 4 can be improved. According to the above configuration, when the output parameter which is one of the absolute value of the current vector and the absolute value of the output torque becomes smaller than the output determination value, and the region parameter which is one of the absolute value of the rotational speed and the absolute value of the voltage vector becomes smaller than the region determination value, the control mode is switched to the first control mode, and the phase current ripple suppression control is executed. By the phase current ripple suppression control, the ripple component of the phase current can be reduced, the iron loss can be reduced, and efficiency can be improved.

A current vector on a fixed coordinate system of $\alpha$-axis and $\beta$-axis is calculated by performing the three-phase/two-phase conversion to the detection values of the winding currents of three-phase, and a magnitude of the current vector is calculated. The $\alpha$-axis is defined in the direction of the winding of U phase, and the $\beta$-axis is defined in the direction which advanced to the $\alpha$-axis by 90 degrees in the electrical angle. Alternatively, a magnitude of the current vector of the current detection values of d-axis and q-axis Ids, Iqs, or a magnitude of the current command values of d-axis and q-axis Ido, Iqo may be calculated. Or a current vector may be estimated based on the voltage command values, and a magnitude of the current vector may be calculated.

The output torque of the AC rotary machine is calculated based on the current command values of d-axis and q-axis or the current detection values of d-axis and q-axis. A voltage vector on the fixed coordinate system of the $\alpha$-axis and the $\beta$-axis is calculated by performing the three-phase/two-phase conversion to the voltage command values of three-phase, and a magnitude of the voltage vector is calculated. As a value corresponding to the magnitude of the voltage vector, the so-called voltage utilization factor, the so-called modulation rate, an amplitude of interphase voltages of the voltage command values of three-phase, or the like may be used.

A hysteresis may be provided in each determination, and the determination value or the determination range may be different according to whether each parameter to be determined is positive or negative. Since the ripple component of the bus current, the ripple component of the phase current, and the switching loss change when the DC voltage Vdc changes, the output determination value or the region determination value may be changed according to the DC voltage Vdc.

For example, as the output parameter, the absolute value of the current vector of the winding currents of three-phase is used, and as the region parameter, the absolute value of the rotational speed of the AC rotary machine is used. In this case, as follows, when the absolute value of the current vector is smaller than the output determination value, and the absolute value of the rotational speed is smaller than the region determination value, the control mode is switched to the first control mode. When the absolute value of the current vector is greater than or equal to the output determination value, and the absolute value of the rotational speed is smaller than the region determination value, the control mode is switched to the second control mode. When the absolute value of the rotational speed is greater than or equal to the region determination value, the control mode is switched to the third control mode. As mentioned above, the absolute value of output torque may be used instead of the absolute value of the current vector, and the absolute value of the voltage vector may be used instead of the absolute value of the rotational speed.

•First control mode (Phase current ripple suppression control)

$$| \text{Current vector} | < \text{Output determination value}$$
and
$$| \text{Rotational speed} | < \text{Region determination value}$$

·Second control mode (Bus current ripple suppression control)

$$| \text{Current vector} | >= \text{Output determination value}$$
and
$$| \text{Rotational speed} | < \text{Region determination value}$$

·Third control mode (Switching loss suppression control)
$$| \text{Rotational speed} | >= \text{Region determination value}$$

1-4. AC Rotary Machine for Vehicle

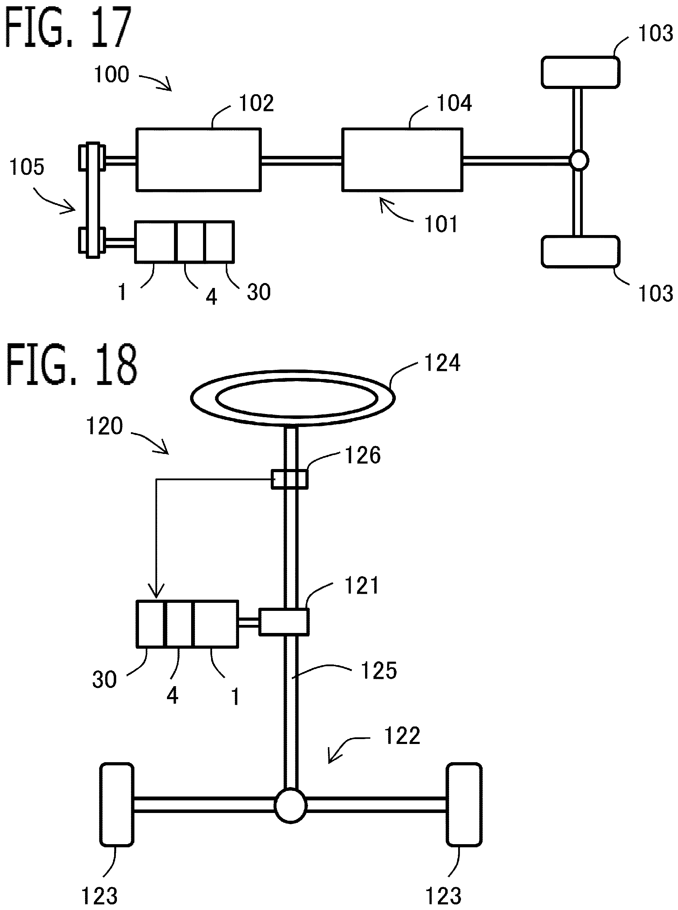

Although an application of the AC rotary machine 1 according to the present embodiment is not limited in particular, a case where the AC rotary machine 1 is used as an AC rotary machine for vehicle will be explained, for example. A vehicle driving apparatus 100 is provided with the AC rotary machine controller 30, the AC rotary machine 1, and a driving force transmission mechanism 101 that transmits a driving force of the AC rotary machine 1 to wheels 103 of a vehicle. As shown in FIG. 17, the vehicle driving apparatus 100 is provided with an internal combustion engine 102, and the AC rotary machine 1 is connected with a crankshaft of the internal combustion engine 102 via a pulley and belt mechanism 105. The rotation axis of the AC rotary machine 1 is connected with the wheels 103 via the internal combustion engine 102 and a transmission 104. The AC rotary machine 1 functions as a motor and becomes a driving force source of the wheels 103 as an auxiliary machine of the internal combustion engine 102; and functions as a generator and generates electricity utilizing rotation of the internal combustion engine 102. The AC rotary machine 1 may be provided between the internal combustion engine 102 and the transmission 104, and may be provided within the transmission 104. The internal combustion engine 102 may not be provided.

Since the rotation of the internal combustion engine 102 and the AC rotary machine 1 becomes in one direction, the rotation in the other direction shown in FIG. 11 need not be considered. In low rotation speed and low current, such as an idling of the internal combustion engine 102, the control mode is set to the first control mode and the phase current ripple suppression control is executed, so the iron loss can be reduced and the generation efficiency can be improved. In high rotational speed, the control mode is set to the third control mode and the switching loss suppression control is executed, so the heat generation of the switching devices can be suppressed, and the continuous operation time can be extended. In low rotation speed and high current with high frequency, the control mode is set to the second control mode and the bus current ripple suppression control is executed, so the capacitor current can be reduced, and the miniaturization of the smoothing capacitor 3 can be achieved.

1-3. Electric Power Steering Apparatus

Next, a case where the AC rotary machine 1 is used as a driving force source of the electric power steering apparatus 120 will be explained. The electric power steering apparatus 120 is provided with the AC rotary machine controller 30, the AC rotary machine 1, and a driving force transmission mechanism 121 which transmits the driving force of the AC rotary machine 1 to a steering apparatus of a vehicle. As shown in FIG. 18, the rotation axis of the of the AC rotary machine 1 is connected with a steering apparatus 122 of the wheels via the driving force transmission mechanism 121. For example, the electric power steering apparatus 120 is provided with a handle 124 that a driver rotates right and left, a shaft 125 that is connected with the handle 124 and transmits a steering wheel torque by the handle 124 to the steering apparatus 122 of the wheels 123, a torque sensor 126 that is mounted on the shaft 125 and detects a steering torque by the handle 124, and a driving force transmission mechanisms 121, such as a worm gear mechanism, which connects the rotation axis of the AC rotary machine 1 with the shaft 125. An output signal of the torque sensor 126 is inputted into the controller 30. The controller 30 calculates a torque command value or a current command value, based on the steering torque detected by the torque sensor 126, and calculates the basic voltage command values of three-phase, based on the torque command value or the current command value. The electric power steering apparatus 120 may be a so-called steer by wire system.

Since the AC rotary machine 1 rotates to one direction or the other direction, processing of FIG. 10 and FIG. 11 is used. In low rotation speed and high electric current with high frequency at steering, the control mode is set to the second control mode and the bus current ripple suppression control is executed, so the capacitor current can be reduced and the miniaturization of the smoothing capacitor 3 can be achieved. In low rotation speed and a low current, the control mode is set to the first control mode and the phase current ripple suppression control is executed, so the ripple component of the output torque can be reduced, the vibration transmitted to the driver via the handle 124 can be reduced, and the noise transmitted into an automobile interior can be reduced. In high rotational speed, the control mode is set to the third control mode and the switching loss suppression control is executed, the heat generation of the switching devices can be suppressed, and the continuous operation time can be extended.

2. Embodiment 2

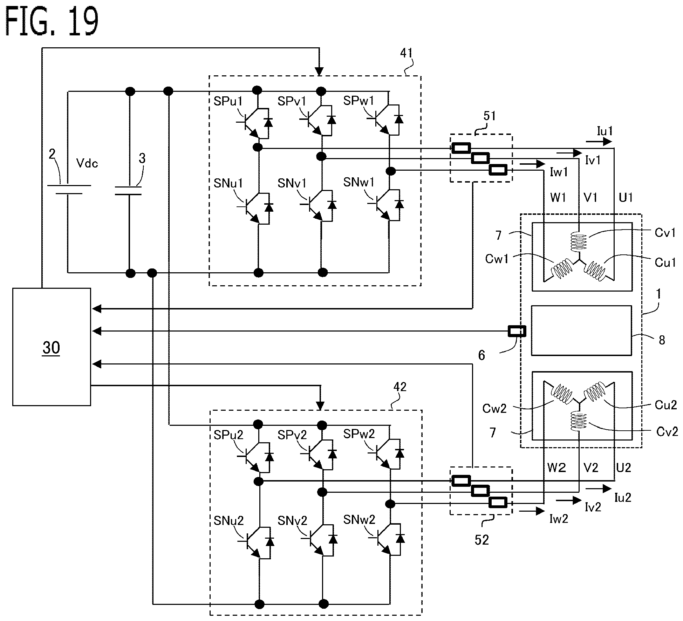

The controller 30 according to Embodiment 2 will be explained with reference to drawings. The explanation for constituent parts the same as those in Embodiment 1 will be omitted. The basic configuration of the AC rotary machine 1, the inverter 4, and the controller 30 according to the present embodiment is the same as that of Embodiment 1. However, as shown in FIG. 19, in the present embodiment, the stator is provided with a plurality of sets (in this example, two sets) of three-phase windings, and a plurality of sets (in this example, two sets) of inverters are provided corresponding to the three-phase windings of each set. The controller 30 controls the AC power supplied to the three-phase windings of each set via the inverter of each set.

In the present embodiment, the one stator 7 is provided with the first set of three-phase windings Cu1, Cv1, Cw1, and the second set of three-phase windings Cu2, Cv2, Cw2. The three-phase windings of each set may be connected by star connection, or may be connected by delta connection. The three-phase of first set is defined as U1 phase, V1 phase, and W1 phase. The three-phase of second set is defined as U2 phase, V2 phase, and W2 phase.

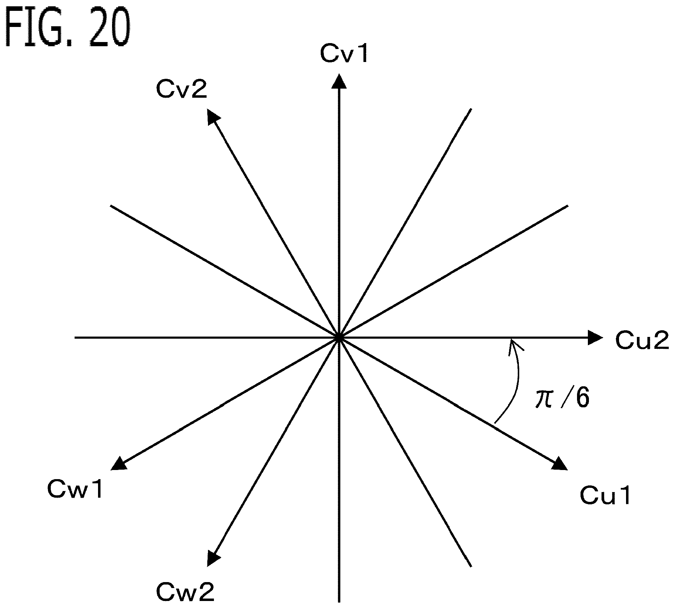

In the present embodiment, as FIG. 20 shows a schematic diagram, a phase difference in the electrical angle of the position of the second set of three-phase windings Cu2, Cv2, Cw2 with respect to the position of the first set of three-phase windings Cu1, Cv1, Cw1 is set to $\pi/6$ (30 degrees). The phase difference may be set to any angles.

Similarly to Embodiment 1, the permanent magnet is provided in the rotor 8. A first set of current sensor 51 for detecting current flowing into the first set of three-phase windings Cu1, Cv1, Cw1, and a second set of current sensor 52 for detecting current flowing into the second set of three-phase windings Cu2, Cv2, Cw2 are provided.

A first set of inverter 41 for the first set of three-phase windings and a second set of inverter 42 for the second set of three-phase windings are provided. Since the inverter 41, 42 of each set is similar to the configuration of the inverter 4 in Embodiment 1, explanation is omitted.

The first set of inverter 41 and the second set of inverter 42 are connected to the one DC power source 2. The one smoothing capacitor 3 is connected to the DC power source 2 in parallel. The smoothing capacitor may be provided in each of the first set and the second set of inverters 41, 42.

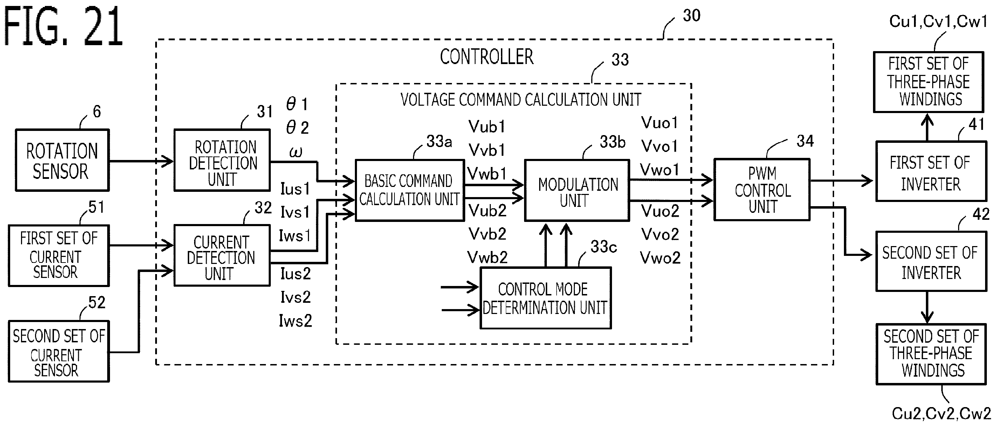

As shown in FIG. 21, the controller 30 controls on/off the switching devices of each of the first set and the second set of inverters 41, 42, and controls the AC power supplied to the three-phase windings of each set. Corresponding to the three-phase windings of each set, a plurality of sets of controllers may be provided.

The rotation detection unit 31 detects a first set of rotational angle $\theta 1$ (a first set of magnetic pole position $\theta 1$), a second set of rotational angle $\theta 2$ (a second set of magnetic pole position $\theta 2$), and the rotational angle speed $\omega$ in the electrical angle, based on the output signal of the rotation sensor 6. The first set of rotational angle $\theta 1$ is an angle (position) of the N pole (magnetic pole) in the electrical angle on the basis of the winding of U1 phase of first set. The second set of rotational angle θ2 is an angle (position) of the N pole (magnetic pole) in the electrical angle on the basis of the winding of U2 phase of second set. It may be the sensor less system.

The current detection unit 32 detects three-phase currents Ius1, Ivs1, Iws1 which flow into the first set of three-phase windings, based on the output signal of the first set of current sensor 51; and detects three-phase currents Ius2, Ivs2, Iws2 which flow into the second set of three-phase windings, based on the output signal of the second set of current sensor 52.

In the present embodiment, for each set, the voltage command calculation unit 33 calculates the voltage command values of three-phase applied to three-phase windings. Basically, the calculation of the voltage command values of three-phase of each set and the switching of the control mode of each set are similar to Embodiment 1.

The voltage command calculation unit 33 calculates first set of voltage command values of three-phase Vuo1, Vvo1, Vwo1, and calculates second set of voltage command values of three-phase Vuo2, Vvo2, Vwo2. In detail, using the method similar to Embodiment 1, the basic command calculation unit 33a calculates first set of basic voltage command values of three-phase Vub1, Vvb1, Vwb1, and calculates second set of basic voltage command values of three-phase Vub2, Vvb2, Vwb2. When calculating the first set of basic voltage command values of three-phase, first set of current detection values of three-phase Ius1, Ivs1, Iws1, and the first set of rotational angle θ1 are used. When calculating the second set of basic voltage command values of three-phase, second set of current detection values of three-phase Ius2, Ivs2, Iws2, and the second set of rotational angle θ2 are used.

For each set, the control mode determination unit 33c switches the first control mode, the second control mode, and the third control mode, based on the operating state of the AC rotary machine.

Specifically, for the first set, the control mode determination unit 33c switches the first control mode, the second control mode, and the third control mode, based at least on an output parameter which is one of an absolute value (magnitude) of a current vector of the first set of winding currents of three-phase, and an absolute value of an output torque of the AC rotary machine by the first set of three-phase windings, and a region parameter which is one of an absolute value of the rotational speed of the AC rotary machine, and an absolute value of a voltage vector of the first set of voltage command values of three-phase.

For the second set, the control mode determination unit 33c switches the first control mode, the second control mode, and the third control mode, based at least on an output parameter which is one of an absolute value (magnitude) of a current vector of the second set of winding currents of three-phase, and an absolute value of an output torque of the AC rotary machine by the second set of three-phase windings, and a region parameter which is one of the absolute value of the rotational speed of the AC rotary machine, and an absolute value of a voltage vector of the second set of voltage command values of three-phase.

Since processing of each set in the control mode determination unit 33c is similar to Embodiment 1, explanation is omitted. In the present embodiment, the electric constants of each set are equivalent, and the output torque of each set by the three-phase windings of each set is set equally. Accordingly, the absolute value of the current vector of each set, the absolute value of the output torque of each set, and the absolute value of the voltage vector of each set become equivalent between sets at normal time. Accordingly, the control mode of each set becomes the same basically.

The modulation unit 33b calculates the first set of voltage command values of three-phase Vuo1, Vvo1, Vwo1 by applying a modulation to the first set of basic voltage command values of three-phase Vub1, Vvb1, Vwb1; and calculates the second set of voltage command values of three-phase Vuo2, Vvo2, Vwo2 by applying a modulation to the second set of basic voltage command values of three-phase Vub2, Vvb2, Vwb2.

For the first set, the modulation unit 33b executes the phase current ripple suppression control, when the first control mode is selected; executes the bus current ripple suppression control, the when second control mode is selected; and executes the switching loss suppression control, when the third control mode is selected. For the second set, the modulation unit 33b executes the phase current ripple suppression control, when the first control mode is selected; executes the bus current ripple suppression control, the when second control mode is selected; and executes the switching loss suppression control, when the third control mode is selected. Since the phase current ripple suppression control, the phase current ripple suppression control, and the switching loss suppression control of each set are similar to Embodiment 1, explanation is omitted.

For each set, the PWM control unit 34 controls on/off the plurality of switching devices of the inverter, based on a comparison result between each of the voltage command values of three-phase and the carrier wave signal. The PWM control unit 34 controls on/off the plurality of switching devices of the first set of inverter 41, based on the comparison result between each of the first set of voltage command values of three-phase Vuo1, Vvo1, Vwo1, and the carrier wave signal. The PWM control unit 34 controls on/off the plurality of switching devices of the second set of inverter 42, based on the comparison result between each of the second set of voltage command values of three-phase Vuo2, Vvo2, Vwo2, and the carrier wave signal. Setting of the carrier wave signal of each set (whether one carrier wave signal or two carrier wave signals with a phase difference is used) is performed based on the control mode of each set.

In the present embodiment, even when the plurality of sets of three-phase windings are provided, for each set, the bus current ripple suppression control, the switching loss suppression control, and the switching loss suppression control can be switched appropriately based on the operating state, and each ripple or loss can be reduced appropriately.

3. Embodiment 3

The controller 30 according to Embodiment 3 will be explained with reference to drawings. The explanation for constituent parts the same as that of Embodiment 1 or 2 will be omitted. In the present embodiment, similarly to Embodiment 2, the plurality of sets of three-phase windings and the plurality of sets of inverters are provided. However, in the present embodiment, utilizing the plurality of sets, a part of the phase current ripple suppression control and the bus current ripple suppression control is changed. Changed parts will be explained mainly.

<Phase current ripple suppression control>

In the present embodiment, as shown in the next equation, in the phase current ripple suppression control, the modulation unit 33b calculates a first set of third order harmonic wave Voff1 and a second set of third order harmonic wave Voff2 which makes a center value $\alpha$ between a maximum voltage Vmax1 and a minimum voltage Vmin1 in the first set of voltage command values of three-phase Vuo1, Vvo1, Vwo1, and a center value $\alpha$ between a maximum voltage Vmax2 and a minimum voltage Vmin2 in the second set of voltage command values of three-phase Vuo2, Vvo2, Vwo2 coincide with each other; calculates the first set of voltage command values of three-phase Vuo1, Vvo1, Vwo1 by subtracting the first set of third order harmonic wave Voff1 from the first set of basic voltage command values of three-phase Vub1, Vvb1, Vwb1; and calculates the second set of voltage command values of three-phase Vuo2, Vvo2, Vwo2 by subtracting the second set of third order harmonic wave Voff2 from the second set of basic voltage command values of three-phase Vub2, Vvb2, Vwb2. Herein, the first set of center value $\alpha$ and the second set of center value $\alpha$ are set to the same value. If the center value $\alpha$ is set to the center value Vdc/2 of the DC voltage, it becomes similar to Embodiment 1 or 2.
[Math. 4]

$$
\begin{aligned}
&\mathrm{Vmax1} = \mathrm{MAX(Vub1, Vvb1, Vwb1)} \\
&\mathrm{Vmin1} = \mathrm{MIN(Vub1, Vvb1, Vwb1)} \\
&\mathrm{Voff1} = \frac{(\mathrm{Vmax1} + \mathrm{Vmin1})}{2} - \alpha \\
&\mathrm{Vuo1} = \mathrm{Vub1} - \mathrm{Voff1} \\
&\mathrm{Vvo1} = \mathrm{Vvb1} - \mathrm{Voff1} \\
&\mathrm{Vwo1} = \mathrm{Vwb1} - \mathrm{Voff1} \qquad\qquad \cdots (4) \\
&\mathrm{Vmax2} = \mathrm{MAX(Vub2, Vvb2, Vwb2)} \\
&\mathrm{Vmin2} = \mathrm{MIN(Vub2, Vvb2, Vwb2)} \\
&\mathrm{Voff2} = \frac{(\mathrm{Vmax2} + \mathrm{Vmin2})}{2} - \alpha \\
&\mathrm{Vuo2} = \mathrm{Vub2} - \mathrm{Voff2} \\
&\mathrm{Vvo2} = \mathrm{Vvb2} - \mathrm{Voff2} \\
&\mathrm{Vwo2} = \mathrm{Vwb2} - \mathrm{Voff2}
\end{aligned}
$$

In this way, by setting the first set of center value $\alpha$ and the second set of center value $\alpha$ to the same value, the middle time of the interval of the effective voltage vector can be matched, the phase current ripple can be reduced.

<First example of bus current ripple suppression control>

In the present embodiment, in the bus current ripple suppression control, the modulation unit 33b executes the flat-bottom two-phase modulation for the second set, when performing the flat-top two-phase modulation for the first set; and executes the flat-top two-phase modulation for the second set, when performing the flat-bottom two-phase modulation for the first set. The modulation unit 33b uses the carrier wave signal with the same phase as the first set of carrier wave signal and the second set of carrier wave signal. The first set of carrier wave signal is compared with the first set of voltage command values of three-phase, and the second set of carrier wave signal is compared with the second set of voltage command values of three-phase.

According to this configuration, in the set in which the flat-top two-phase modulation is performed, the interval of the effective voltage vector appears around the center of the PWM period Tc, and the interval of the zero voltage vector appears around both ends of the PWM period Tc. On the other hand, in the set in which the flat-bottom two-phase modulation is performed, the interval of the zero voltage vector appears around the center of the PWM period Tc, and the interval of the effective voltage vector appears around both ends of the PWM period Tc. Accordingly, the interval of the effective voltage vector can be shifted between sets, and the ripple component of the bus current can be reduced.

Similarly to Embodiment 1 or 2, in the flat-top two-phase modulation, the modulation unit 33b calculates the offset voltage which makes the voltage command value of the phase of the maximum voltage in the voltage command values of three-phase of an object set in which the flat-top two-phase modulation is executed coincide with the maximum value of the carrier wave signal; and calculates the voltage command values of three-phase of the object set by subtracting the offset voltage from the basic voltage command values of three-phase of the object set.

In the flat-bottom two-phase modulation, the modulation unit 33b calculates the offset voltage which makes the voltage command value of the phase of the minimum voltage in the voltage command values of three-phase of an object set in which the flat-bottom two-phase modulation is executed coincide with the minimum value of the carrier wave signal; and calculates the voltage command values of three-phase of the object set by subtracting the offset voltage from the basic voltage command values of three-phase of the object set.

Since the flat-top two-phase modulation and the flat-bottom two-phase modulation of each set become the processing similar to the equation (3), explanation is omitted.

The set in which the flat-top two-phase modulation is performed, and the set in which the flat-bottom two-phase modulation is performed may be replaced periodically. For the first set, as shown in FIG. 7, execution of the flat-top two-phase modulation or the flat-bottom two-phase modulation may be determined; and for the second set, execution of the flat-top two-phase modulation or the flat-bottom two-phase modulation may be determined so as to be the opposite of the first set. Alternatively, for each of the first set and the second set, as shown in FIG. 7, execution of the flat-top two-phase modulation or the flat-bottom two-phase modulation may be determined. Even in this case, since an interval when the flat-top two-phase modulation and the flat-bottom two-phase modulation are executed at the same time occurs, the ripple component of the bus current is reduced.

<Second example of bus current ripple suppression control>

Alternatively, in the bus current ripple suppression control, the modulation unit 33b executes the flat-top two-phase modulation for the second set, when performing the flat-top two-phase modulation for the first set; and executes the flat-bottom two-phase modulation for the second set, when performing the flat-bottom two-phase modulation for the first set. The modulation unit 33b uses the first carrier wave signal C1 as the first set of carrier wave signal; and uses the second carrier wave signal C2 which differs from the first carrier wave signal C1 by 180 degrees in phase as the second set of carrier wave signal.

According to this configuration, for the first set and the second set, when the flat-top two-phase modulation is performed, in one set, the interval of the effective voltage vector appears around the center of the PWM period Tc, and the interval of the zero voltage vector appears around the both ends of the PWM period Tc; and in the other set, the interval of the zero voltage vector appears around the center of the PWM period Tc, and the interval of the effective voltage vector appears around both ends of the PWM period Tc. Accordingly, the interval of the effective voltage vector can be shifted between sets, and the ripple component of the bus current can be reduced. For the first set and the second set, when the flat-bottom two-phase modulation is performed, in one set, the interval of the zero voltage vector appears around the center of the PWM period Tc, and the interval of the effective voltage vector appears around both ends of the PWM period Tc; and in the other set, the interval of the effective voltage vector appears around the center of the PWM period Tc, and the interval of the zero voltage vector appears around both ends of the PWM period Tc. Accordingly, the interval of the effective voltage vector can be shifted between sets, and the ripple component of the bus current can be reduced.

Similarly to Embodiment 1 or 2, in the flat-top two-phase modulation, the modulation unit 33b calculates the offset voltage which makes the voltage command value of the phase of the maximum voltage in the voltage command values of three-phase of an object set in which the flat-top two-phase modulation is executed coincide with the maximum value of the carrier wave signal; and calculates the voltage command values of three-phase of the object set by subtracting the offset voltage from the basic voltage command values of three-phase of the object set.

In the flat-bottom two-phase modulation, the modulation unit 33b calculates the offset voltage which makes the voltage command value of the phase of the minimum voltage in the voltage command values of three-phase of an object set in which the flat-bottom two-phase modulation is executed coincide with the minimum value of the carrier wave signal; and calculates the voltage command values of three-phase of the object set by subtracting the offset voltage from the basic voltage command values of three-phase of the object set.

Since the flat-top two-phase modulation and the flat-bottom two-phase modulation of each set become the processing similar to the equation (3), explanation is omitted.

The execution of the flat-top two-phase modulation in the first set and the second set and the execution of the flat-bottom two-phase modulation in the first set and the second set may be replaced periodically. For the first set, as shown in FIG. 7, execution of the flat-top two-phase modulation or the flat-bottom two-phase modulation may be determined; and for the second set, execution of the flat-top two-phase modulation or the flat-bottom two-phase modulation may be determined so as to be the same as the first set. Alternatively, for each of the first set and the second set, as shown in FIG. 7, execution of the flat-top two-phase modulation or the flat-bottom two-phase modulation may be determined. Even in this case, since an interval when the flat-top two-phase modulation and the flat-bottom two-phase modulation are executed in the first set and the second set occurs, the ripple component of the bus current is reduced.

<Third example of bus current ripple suppression control>

Alternatively, the modulation unit 33b uses the first carrier wave signal C1 as the first set of carrier wave signal; and uses the second carrier wave signal C2 which differs from the first carrier wave signal C1 by 90 degrees in phase as the second set of carrier wave signal. For each set, the modulation unit 33b calculates a third order harmonic wave which makes a center value between a maximum voltage and a minimum voltage in the voltage command values of three-phase coincide with a center value $V_{dc}/2$ of the DC voltage; and calculates the voltage command values of three-phase by subtracting the third order harmonic wave from the basic voltage command values of three-phase. Since this modulation of each set becomes the processing similar to the equation (1), explanation is omitted.

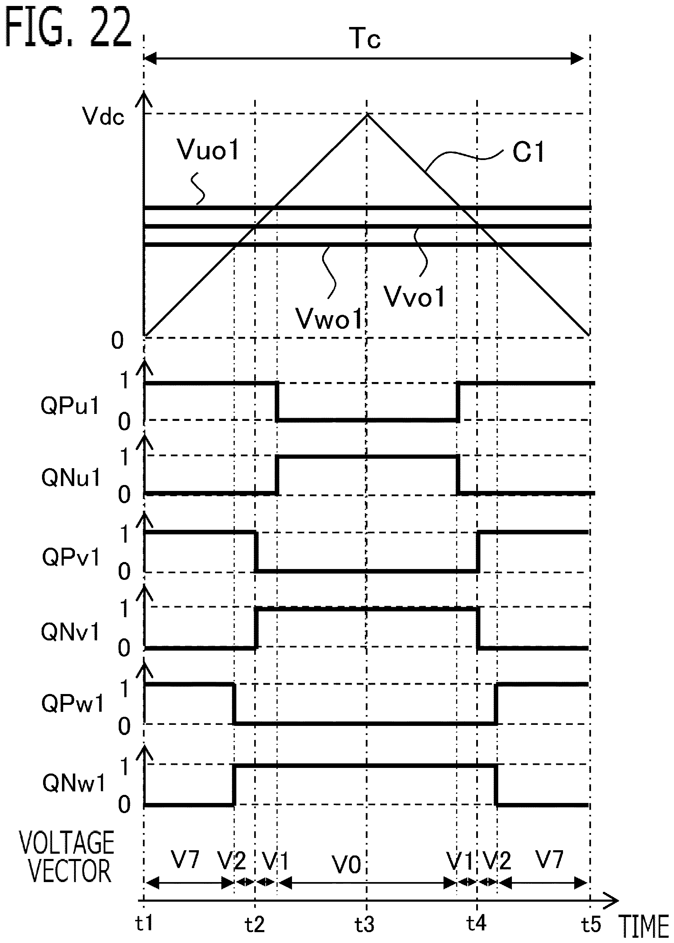

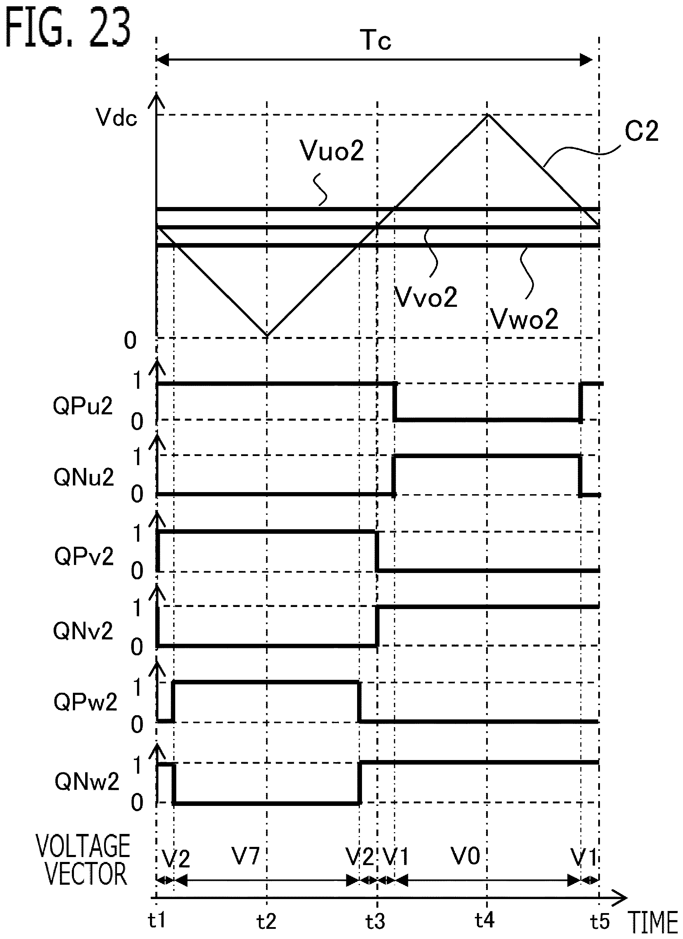

FIG. 22 shows each switching signal by the comparison between the first carrier wave signal C1 and the first set of voltage command values of three-phase Vuo1, Vvo1, Vwo1 in the PWM period Tc, and the voltage vector. FIG. 23 shows each switching signal by the comparison between the second carrier wave signal C2 which differs from the first carrier wave signal by 90 degrees in phase and the second set of voltage command values of three-phase Vuo2, Vvo2, Vwo2, and the voltage vector.

In the case of the first carrier wave signal C1, as shown in FIG. 22, the effective voltage vectors V2, V1 arise centering on the time t2 and the time t4. In the case of the second carrier wave signal C2, as shown in FIG. 23, the effective voltage vectors V2, V1 arise centering on the time t1, the time t3, and the time t5. Accordingly, the interval of the effective voltage vector can be shifted between sets, and the ripple component of the bus current can be reduced. By applying the modulation of the equation (1), each interval of the effective voltage vectors can be set symmetrically before and after, centering on t1, t2, t3, and t4, the shifting effect of the interval of the effective voltage vector between sets can be maximized, and the reduction of the ripple component of the bus current can be maximized.

In each of the above-mentioned embodiments, there was explained the case where the center value of the DC voltage is set to $V_{dc}/2$; and the voltage command values of three-phase, the basic voltage command values of three-phase, and the first and second carrier wave signals oscillate centering on $V_{dc}/2$. However, the center value of the DC voltage may be set to 0; and the voltage command values of three-phase, the basic voltage command values of three-phase, and the first and second carrier wave signals may oscillate centering on 0. In this case, $V_{dc}/2$ are subtracted from the voltage command values of three-phase, the basic voltage command values of three-phase, and the first and second carrier wave signals of each Embodiment.

REFERENCE SIGNS LIST

2: DC Power Source, 4: Inverter, 30: AC Rotary Machine Controller, 33: Voltage Command Calculation Unit, 34: PWM Control Unit, 100: Vehicle Driving Apparatus, 120: Electric Power Steering Apparatus, C: Carrier Wave Signal, C1: First Carrier Wave Signal, C2: Second Carrier Wave Signal, Vuo, Vvo, Vwo: Voltage Command Values of Three-phase, Vub, Vvb, Vwb: Basic Voltage Command Values of Three-phase

**Claims**

**1.** An AC rotary machine controller (30) that controls an AC rotary machine (1) having a stator (7) provided with one set or a plurality of sets of three-phase windings (Cu, Cv, Cw) via one set or a plurality of sets of inverters (4), the AC rotary machine controller (30) comprising:

a voltage command calculation unit (33) that, for each set, calculates voltage command values of three-phase (Vuo, Vvo, Vwo) applied to the three-phase windings (Cu, Cv, Cw); and
a PWM control unit (34) that, for each set, controls on/off a plurality of switching devices of the inverter (4), based on a comparison result between each of the voltage command values of three-phase (Vuo, Vvo, Vwo) and a carrier wave signal (C);
wherein, for each set, the voltage command calculation unit (33) switches a first control mode, a second control mode, and a third control mode, based on an operating state of the AC rotary machine (1);
in the first control mode, the voltage command calculation unit (33) executes a phase current ripple suppression control that calculates the voltage command values of three-phase (Vuo, Vvo, Vwo) by applying a modulation to basic voltage command values of three-phase (Vub, Vvb, Vwb) so that a ripple component of current flowing into the winding of each phase decreases less than a case where the basic voltage command values of three-phase (Vub, Vvb, Vwb) of sine waves are set as the voltage command values of three-phase (Vuo, Vvo, Vwo);
in the second control mode, the voltage command calculation unit (33) executes a bus current ripple suppression control that calculates the voltage command values of three-phase (Vuo, Vvo, Vwo) by applying a modulation to the basic voltage command values of three-phase (Vub, Vvb, Vwb) so that a ripple component of current flowing between a DC power source and the inverter (4) decreases less than a case where the basic voltage command values of three-phase (Vub, Vvb, Vwb) of sine waves are set as the voltage command values of three-phase (Vuo, Vvo, Vwo); and
in the third control mode, the voltage command calculation unit (33) executes a switching loss suppression control that calculates the voltage command values of three-phase (Vuo, Vvo, Vwo) by applying a modulation to the basic voltage command values of three-phase (Vub, Vvb, Vwb) so that a loss of the switching devices decreases less than a case where the basic voltage command values of three-phase (Vub, Vvb, Vwb) of sine waves are set as the voltage command values of three-phase (Vuo, Vvo, Vwo);
wherein, for each set, the voltage command calculation unit (33) switches the first control mode, the second control mode, and the third control mode, based at least on an output parameter which is one of an absolute value of a current vector of currents flowing into the three-phase windings (Cu, Cv, Cw) and an absolute value of an output torque of the AC rotary machine (1), and a region parameter which is one of an absolute value of a rotational speed of the AC rotary machine (1) and an absolute value of a voltage vector of the voltage command values of three-phase (Vuo, Vvo, Vwo);
**characterized in that**
for each set, the voltage command calculation unit (33) switches to the first control mode, when the output parameter is smaller than an output determination value, and the region parameter is smaller than a region determination value;
switches to the second control mode, when the output parameter is greater than or equal to the output determination value, and the region parameter is smaller than the region determination value; and
switches to the third control mode, when the region parameter is greater than or equal to the region determination value;
wherein, for each set, in the phase current ripple suppression control, the voltage command calculation unit (33) calculates a third order harmonic wave (Voff) which makes a center value between a maximum voltage (Vmax) and a minimum voltage (Vmin) in the voltage command values of three-phase (Vuo, Vvo, Vwo) coincide with a center value (Vdc/2) of a DC voltage supplied to the inverter (4); and calculates the voltage command values of three-phase (Vuo, Vvo, Vwo) by subtracting the third order harmonic wave (Voff) from the basic voltage command values of three-phase (Vub, Vvb, Vwb);
wherein, for each set, in the bus current ripple suppression control,
when a phase of a maximum current absolute value (Iabsmax) in absolute values of currents of three-phase flowing into the three-phase windings (Cu, Cv, Cw) coincides with a phase of a maximum voltage (Vmax) in the voltage command values of three-phase (Vuo, Vvo, Vwo), the voltage command calculation unit (33) executes a flat-top two-phase modulation that calculates an offset voltage (Voff) which makes the voltage command value of the phase of the maximum voltage (Vmax) coincide with a maximum value (Vdc) of the carrier wave signal (C), and calculates the voltage command values of three-phase (Vuo, Vvo, Vwo) by subtracting the offset voltage (Voff) from the basic voltage command values of three-phase (Vub, Vvb, Vwb);
when the phase of the maximum current absolute value (Iabsmax) coincides with a phase of a minimum voltage (Vmin) in the voltage command values of three-phase (Vuo, Vvo, Vwo), the voltage command calculation unit (33) executes a flat-bottom two-phase modulation that calculates the offset voltage (Voff) which makes the voltage command value of the phase of the minimum voltage (Vmin) coincide with a minimum value (0) of the carrier wave signal (C), and calculates the voltage command values of three-phase (Vuo, Vvo, Vwo) by subtracting the offset voltage (Voff) from the basic voltage command values of three-phase (Vub, Vvb, Vwb);

as the carrier wave signal (C), the voltage command calculation unit (33) uses a first carrier wave signal (C1), and a second carrier wave signal (C2) which differs from the first carrier wave signal (C1) by 180 degrees in phase; and for two phases other than the phase of the maximum voltage (Vmax) when executing the flat-top two-phase modulation, or two phases other than the phase of the minimum voltage (Vmin) when executing the flat-bottom two-phase modulation, the voltage command calculation unit (33) compares the voltage command value of one phase with the first carrier wave signal (C1), and compares the voltage command value of the other phase with the second carrier wave signal (C2);

wherein, for each set, in the switching loss suppression control, the voltage command calculation unit (33) calculates an offset voltage (Voff) which makes the voltage command value of a phase of a maximum voltage (Vmax) in the voltage command values of three-phase (Vuo, Vvo, Vwo) coincide with a maximum value (Vdc) of the carrier wave signal (C), or which makes the voltage command value of a phase of a minimum voltage (Vmin) in the voltage command values of three-phase (Vuo, Vvo, Vwo) coincide with a minimum value (0) of the carrier wave signal (C); and calculates the voltage command values of three-phase (Vuo, Vvo, Vwo) by subtracting the offset voltage (Voff) from the basic voltage command values of three-phase (Vub, Vvb, Vwb).

2. The AC rotary machine controller (30) according to claim 1,

wherein, for each set, in the switching loss suppression control,
the voltage command calculation unit (33) calculates the offset voltage (Voff) which makes the voltage command value of the phase of the maximum voltage (Vmax) coincide with the maximum value (Vdc) of the carrier wave signal (C) when an absolute value of a winding current of a phase of a maximum voltage (Vmax) in the voltage command values of three-phase (Vuo, Vvo, Vwo) is larger than an absolute value of the winding current of a phase of a minimum voltage (Vmin) in the voltage command values of three-phase (Vuo, Vvo, Vwo);
or the voltage command calculation unit (33) calculates the offset voltage (Voff) which makes the voltage command value of the phase of the minimum voltage (Vmin) coincide with a minimum value (0) of the carrier wave signal (C) when the absolute value of the winding current of the phase of the maximum voltage (Vmax) is not larger than the absolute value of the winding current of the phase of the minimum voltage (Vmin).

3. The AC rotary machine controller (30) according to claim 1,

wherein, for each set, in the bus current ripple suppression control,
in a case where the phase of the maximum current absolute value (Iabsmax) coincides with a phase of a middle voltage (Vmid) in the voltage command values of three-phase (Vuo, Vvo, Vwo), the voltage command calculation unit (33) executes the flat-top two-phase modulation, when the middle voltage (Vmid) is larger than a center value (Vdc/2) of a DC voltage supplied to the inverter (4), and the voltage command calculation unit (33) executes the flat-bottom two-phase modulation, when the middle voltage (Vmid) is smaller than the center value (Vdc/2).

4. The AC rotary machine controller (30) according to claim 3,

wherein, for each set, in the bus current ripple suppression control,
when the phase of the maximum current absolute value (Iabsmax) coincides with the phase of the maximum voltage (Vmax) in the voltage command values of three-phase (Vuo, Vvo, Vwo), the voltage command calculation unit (33) switches the carrier wave signal (C) of the phase of the maximum current absolute value (Iabsmax) to the second carrier wave signal (C2), and
when the phase of the maximum current absolute value (Iabsmax) coincides with the phase of the minimum voltage (Vmin) in the voltage command values of three-phase (Vuo, Vvo, Vwo), the voltage command calculation unit (33) switches the carrier wave signal (C) of the phase of the maximum current absolute value (Iabsmax) to the first carrier wave signal (C1).

5. An AC rotary machine controller (30) that controls an AC rotary machine (1) having a stator (7) provided with one set or a plurality of sets of three-phase windings (Cu, Cv, Cw) via one set or a plurality of sets of inverters (4), the AC rotary machine controller (30) comprising:

a voltage command calculation unit (33) that, for each set, calculates voltage command values of three-phase (Vuo, Vvo, Vwo) applied to the three-phase windings (Cu, Cv, Cw); and
a PWM control unit (34) that, for each set, controls on/off a plurality of switching devices of the inverter (4), based on a comparison result between each of the voltage command values of three-phase (Vuo, Vvo, Vwo) and a carrier wave signal (C);

wherein, for each set, the voltage command calculation unit (33) switches a first control mode, a second control mode, and a third control mode, based on an operating state of the AC rotary machine (1);

in the first control mode, the voltage command calculation unit (33) executes a phase current ripple suppression control that calculates the voltage command values of three-phase (Vuo, Vvo, Vwo) by applying a modulation to basic voltage command values of three-phase (Vub, Vvb, Vwb) so that a ripple component of current flowing into the winding of each phase decreases less than a case where the basic voltage command values of three-phase (Vub, Vvb, Vwb) of sine waves are set as the voltage command values of three-phase (Vuo, Vvo, Vwo);

in the second control mode, the voltage command calculation unit (33) executes a bus current ripple suppression control that calculates the voltage command values of three-phase (Vuo, Vvo, Vwo) by applying a modulation to the basic voltage command values of three-phase (Vub, Vvb, Vwb) so that a ripple component of current flowing between a DC power source and the inverter (4) decreases less than a case where the basic voltage command values of three-phase (Vub, Vvb, Vwb) of sine waves are set as the voltage command values of three-phase (Vuo, Vvo, Vwo); and

in the third control mode, the voltage command calculation unit (33) executes a switching loss suppression control that calculates the voltage command values of three-phase (Vuo, Vvo, Vwo) by applying a modulation to the basic voltage command values of three-phase (Vub, Vvb, Vwb) so that a loss of the switching devices decreases less than a case where the basic voltage command values of three-phase (Vub, Vvb, Vwb) of sine waves are set as the voltage command values of three-phase (Vuo, Vvo, Vwo);

wherein, for each set, the voltage command calculation unit (33) switches the first control mode, the second control mode, and the third control mode, based at least on an output parameter which is one of an absolute value of a current vector of currents flowing into the three-phase windings (Cu, Cv, Cw) and an absolute value of an output torque of the AC rotary machine (1), and a region parameter which is one of an absolute value of a rotational speed of the AC rotary machine (1) and an absolute value of a voltage vector of the voltage command values of three-phase (Vuo, Vvo, Vwo);

**characterized in that**

for each set, the voltage command calculation unit (33) switches to the first control mode, when the output parameter is smaller than an output determination value, and the region parameter is smaller than a region determination value;

switches to the second control mode, when the output parameter is greater than or equal to the output determination value, and the region parameter is smaller than the region determination value; and

switches to the third control mode, when the region parameter is greater than or equal to the region determination value;

wherein two sets of the three-phase windings (Cu1, Cv1, Cw1, Cu2, Cv2, Cw2) are provided in the stator (7), in the phase current ripple suppression control, the voltage command calculation unit (33) calculates a first set of third order harmonic wave (Voff1) and a second set of third order harmonic wave (Voff2) which make a center value between a maximum voltage (Vmax1) and a minimum voltage (Vmin1) in first set of the voltage command values of three-phase (Vuo1, Vvo1, Vwo1), and a center value between a maximum voltage (Vmax2) and a minimum voltage (Vmin2) in second set of the voltage command values of three-phase (Vuo2, Vvo2, Vwo2) coincide with each other; calculates the first set of voltage command values of three-phase (Vuo1, Vvo1, Vwo1) by subtracting the first set of third order harmonic wave (Voff1) from first set of the basic voltage command values of three-phase (Vub1, Vvb1, Vwb1); and calculates the second set of voltage command values of three-phase (Vuo2, Vvo2, Vwo2) by subtracting the second set of third order harmonic wave (Voff2) from second set of the basic voltage command values of three-phase (Vub2, Vvb2, Vwb2);

wherein, for each set, in the switching loss suppression control, the voltage command calculation unit (33) calculates an offset voltage (Voff) which makes the voltage command value of a phase of a maximum voltage (Vmax) in the voltage command values of three-phase (Vuo, Vvo, Vwo) coincide with a maximum value (Vdc) of the carrier wave signal (C), or which makes the voltage command value of a phase of a minimum voltage (Vmin) in the voltage command values of three-phase (Vuo, Vvo, Vwo) coincide with a minimum value (0) of the carrier wave signal (C); and calculates the voltage command values of three-phase (Vuo, Vvo, Vwo) by subtracting the offset voltage (Voff) from the basic voltage command values of three-phase (Vub, Vvb, Vwb);

in the bus current ripple suppression control,

the voltage command calculation unit (33) executes a flat-bottom two-phase modulation for the second set, when executing a flat-top two-phase modulation for the first set; and executes the flat-top two-phase modulation for the second set, when executing the flat-bottom two-phase modulation for the first set;

as first set of the carrier wave signal (C) and second set of the carrier wave signal (C), the voltage command calculation unit (33) uses the carrier wave signals (C) with the same phase;

in the flat-top two-phase modulation, the voltage command calculation unit (33) calculates an offset voltage (Voff) which makes the voltage command value of a phase of a maximum voltage (Vmax) in the voltage command values of three-phase (Vuo, Vvo, Vwo) of an object set in which the flat-top two-phase modulation is executed coincide with a maximum value (Vdc) of the carrier wave signal (C); and calculates the voltage command values of three-phase (Vuo, Vvo, Vwo) of the object set by subtracting the offset voltage (Voff) from the basic voltage command values of three-phase (Vub, Vvb, Vwb) of the object set; and

in the flat-bottom two-phase modulation, the voltage command calculation unit (33) calculates the offset voltage (Voff) which makes the voltage command value of a phase of a minimum voltage (Vmin) in the voltage command values of three-phase (Vuo, Vvo, Vwo) of the object set in which the flat-bottom two-phase modulation is executed coincide with a minimum value (0) of the carrier wave signal (C); and calculates the voltage command values of three-phase (Vuo, Vvo, Vwo) of the object set by subtracting the offset voltage (Voff) from the basic voltage command values of three-phase (Vub, Vvb, Vwb) of the object set.

6. An AC rotary machine controller (30) that controls an AC rotary machine (1) having a stator (7) provided with one set or a plurality of sets of three-phase windings (Cu, Cv, Cw) via one set or a plurality of sets of inverters (4), the AC rotary machine controller (30) comprising:

a voltage command calculation unit (33) that, for each set, calculates voltage command values of three-phase (Vuo, Vvo, Vwo) applied to the three-phase windings (Cu, Cv, Cw); and

a PWM control unit (34) that, for each set, controls on/off a plurality of switching devices of the inverter (4), based on a comparison result between each of the voltage command values of three-phase (Vuo, Vvo, Vwo) and a carrier wave signal (C);

wherein, for each set, the voltage command calculation unit (33) switches a first control mode, a second control mode, and a third control mode, based on an operating state of the AC rotary machine (1);

in the first control mode, the voltage command calculation unit (33) executes a phase current ripple suppression control that calculates the voltage command values of three-phase (Vuo, Vvo, Vwo) by applying a modulation to basic voltage command values of three-phase (Vub, Vvb, Vwb) so that a ripple component of current flowing into the winding of each phase decreases less than a case where the basic voltage command values of three-phase (Vub, Vvb, Vwb) of sine waves are set as the voltage command values of three-phase (Vuo, Vvo, Vwo);

in the second control mode, the voltage command calculation unit (33) executes a bus current ripple suppression control that calculates the voltage command values of three-phase (Vuo, Vvo, Vwo) by applying a modulation to the basic voltage command values of three-phase (Vub, Vvb, Vwb) so that a ripple component of current flowing between a DC power source and the inverter (4) decreases less than a case where the basic voltage command values of three-phase (Vub, Vvb, Vwb) of sine waves are set as the voltage command values of three-phase (Vuo, Vvo, Vwo); and

in the third control mode, the voltage command calculation unit (33) executes a switching loss suppression control that calculates the voltage command values of three-phase (Vuo, Vvo, Vwo) by applying a modulation to the basic voltage command values of three-phase (Vub, Vvb, Vwb) so that a loss of the switching devices decreases less than a case where the basic voltage command values of three-phase (Vub, Vvb, Vwb) of sine waves are set as the voltage command values of three-phase (Vuo, Vvo, Vwo);

wherein, for each set, the voltage command calculation unit (33) switches the first control mode, the second control mode, and the third control mode, based at least on an output parameter which is one of an absolute value of a current vector of currents flowing into the three-phase windings (Cu, Cv, Cw) and an absolute value of an output torque of the AC rotary machine (1), and a region parameter which is one of an absolute value of a rotational speed of the AC rotary machine (1) and an absolute value of a voltage vector of the voltage command values of three-phase (Vuo, Vvo, Vwo);

**characterized in that**

for each set, the voltage command calculation unit (33) switches to the first control mode, when the output parameter is smaller than an output determination value, and the region parameter is smaller than a region determination value;

switches to the second control mode, when the output parameter is greater than or equal to the output determination value, and the region parameter is smaller than the region determination value; and

switches to the third control mode, when the region parameter is greater than or equal to the region determination value;

wherein two sets of the three-phase windings (Cu1, Cv1, Cw1, Cu2, Cv2, Cw2) are provided in the stator (7), in the phase current ripple suppression control, the voltage command calculation unit (33) calculates a first set of third order harmonic wave (Voff1) and a second set of third order harmonic wave (Voff2) which make a center value between a maximum voltage (Vmax1) and a minimum voltage (Vmin1) in first set of the voltage command values of three-phase (Vuo1, Vvo1, Vwo1), and a center value between a maximum voltage (Vmax2) and a minimum voltage (Vmin2) in second set of the voltage command values of three-phase (Vuo2, Vvo2, Vwo2) coincide with each other; calculates the first set of voltage command values of three-phase (Vuo1, Vvo1, Vwo1) by subtracting the first set of third order harmonic wave (Voff1) from first set of the basic voltage command values of three-phase (Vub1, Vvb1, Vwb1); and calculates the second set of voltage command values of three-phase (Vuo2, Vvo2, Vwo2) by subtracting the second set of third order harmonic wave (Voff2) from second set of the basic voltage command values of three-phase (Vub2, Vvb2, Vwb2);

wherein, for each set, in the switching loss suppression control, the voltage command calculation unit (33) calculates an offset voltage (Voff) which makes the voltage command value of a phase of a maximum voltage (Vmax) in the voltage command values of three-phase (Vuo, Vvo, Vwo) coincide with a maximum value (Vdc) of the carrier wave signal (C), or which makes the voltage command value of a phase of a minimum voltage (Vmin) in the voltage command values of three-phase (Vuo, Vvo, Vwo) coincide with a minimum value (0) of the carrier wave signal (C); and calculates the voltage command values of three-phase (Vuo, Vvo, Vwo) by subtracting the offset voltage (Voff) from the basic voltage command values of three-phase (Vub, Vvb, Vwb);

in the bus current ripple suppression control,

the voltage command calculation unit (33) executes a flat-top two-phase modulation for the second set, when executing the flat-top two-phase modulation for the first set; and executes a flat-bottom two-phase modulation for the second set, when executing the flat-bottom two-phase modulation for the first set;

the voltage command calculation unit (33) uses a first carrier wave signal (C1) as first set of the carrier wave signal (C), and uses a second carrier wave signal (C2) which differs from the first carrier wave signal (C1) by 180 degrees in phase, as second set of the carrier wave signal (C);

in the flat-top two-phase modulation, the voltage command calculation unit (33) calculates an offset voltage (Voff) which makes the voltage command value of a phase of a maximum voltage (Vmax) in the voltage command values of three-phase (Vuo, Vvo, Vwo) of an object set in which the flat-top two-phase modulation is executed coincide with a maximum value (Vdc) of the carrier wave signal (C); and calculates the voltage command values of three-phase (Vuo, Vvo, Vwo) of the object set by subtracting the offset voltage (Voff) from the basic voltage command values of three-phase (Vub, Vvb, Vwb) of the object set; and

in the flat-bottom two-phase modulation, the voltage command calculation unit (33) calculates the offset voltage (Voff) which makes the voltage command value of a phase of a minimum voltage (Vmin) in the voltage command values of three-phase (Vuo, Vvo, Vwo) of the object set in which the flat-bottom two-phase modulation is executed coincide with a minimum value (0) of the carrier wave signal (C); and calculates the voltage command values of three-phase (Vuo, Vvo, Vwo) of the object set by subtracting the offset voltage (Voff) from the basic voltage command values of three-phase (Vub, Vvb, Vwb) of the object set.

7. An AC rotary machine controller (30) that controls an AC rotary machine (1) having a stator (7) provided with one set or a plurality of sets of three-phase windings (Cu, Cv, Cw) via one set or a plurality of sets of inverters (4), the AC rotary machine controller (30) comprising:

a voltage command calculation unit (33) that, for each set, calculates voltage command values of three-phase (Vuo, Vvo, Vwo) applied to the three-phase windings (Cu, Cv, Cw); and

a PWM control unit (34) that, for each set, controls on/off a plurality of switching devices of the inverter (4), based on a comparison result between each of the voltage command values of three-phase (Vuo, Vvo, Vwo) and a carrier wave signal (C);

wherein, for each set, the voltage command calculation unit (33) switches a first control mode, a second control mode, and a third control mode, based on an operating state of the AC rotary machine (1);

in the first control mode, the voltage command calculation unit (33) executes a phase current ripple suppression control that calculates the voltage command values of three-phase (Vuo, Vvo, Vwo) by applying a modulation to basic voltage command values of three-phase (Vub, Vvb, Vwb) so that a ripple component of current flowing into the winding of each phase decreases less than a case where the basic voltage command values of three-phase (Vub, Vvb, Vwb) of sine waves are set as the voltage command values of three-phase (Vuo, Vvo, Vwo);

in the second control mode, the voltage command calculation unit (33) executes a bus current ripple suppression control that calculates the voltage command values of three-phase (Vuo, Vvo, Vwo) by applying a modulation to the basic voltage command values of three-phase (Vub, Vvb, Vwb) so that a ripple component of current flowing between a DC power source and the inverter (4) decreases less than a case where the basic voltage command values of three-phase (Vub, Vvb, Vwb) of sine waves are set as the voltage command values of three-phase (Vuo, Vvo, Vwo); and

in the third control mode, the voltage command calculation unit (33) executes a switching loss suppression control that calculates the voltage command values of three-phase (Vuo, Vvo, Vwo) by applying a modulation to the basic voltage command values of three-phase (Vub, Vvb, Vwb) so that a loss of the switching devices decreases less than a case where the basic voltage command values of three-phase (Vub, Vvb, Vwb) of sine waves are set as the voltage command values of three-phase (Vuo, Vvo, Vwo);

wherein, for each set, the voltage command calculation unit (33) switches the first control mode, the second control mode, and the third control mode, based at least on an output parameter which is one of an absolute value of a current vector of currents flowing into the three-phase windings (Cu, Cv, Cw) and an absolute value of an output torque of the AC rotary machine (1), and a region parameter which is one of an absolute value of a rotational speed of the AC rotary machine (1) and an absolute value of a voltage vector of the voltage command values of three-phase (Vuo, Vvo, Vwo);

**characterized in that**

for each set, the voltage command calculation unit (33) switches to the first control mode, when the output parameter is smaller than an output determination value, and the region parameter is smaller than a region determination value;

switches to the second control mode, when the output parameter is greater than or equal to the output determination value, and the region parameter is smaller than the region determination value; and

switches to the third control mode, when the region parameter is greater than or equal to the region determination value;

wherein two sets of the three-phase windings (Cu1, Cv1, Cw1, Cu2, Cv2, Cw2) are provided in the stator (7), in the phase current ripple suppression control, the voltage command calculation unit (33) calculates a first set of third order harmonic wave (Voff1) and a second set of third order harmonic wave (Voff2) which make a center value between a maximum voltage (Vmax1) and a minimum voltage (Vmin1) in first set of the voltage command values of three-phase (Vuo1, Vvo1, Vwo1), and a center value between a maximum voltage (Vmax2) and a minimum voltage (Vmin2) in second set of the voltage command values of three-phase (Vuo2, Vvo2, Vwo2) coincide with each other; calculates the first set of voltage command values of three-phase (Vuo1, Vvo1, Vwo1) by subtracting the first set of third order harmonic wave (Voff1) from first set of the basic voltage command values of three-phase (Vub1, Vvb1, Vwb1); and calculates the second set of voltage command values of three-phase (Vuo2, Vvo2, Vwo2) by subtracting the second set of third order harmonic wave (Voff2) from second set of the basic voltage command values of three-phase (Vub2, Vvb2, Vwb2);

wherein, for each set, in the switching loss suppression control, the voltage command calculation unit (33) calculates an offset voltage (Voff) which makes the voltage command value of a phase of a maximum voltage (Vmax) in the voltage command values of three-phase (Vuo, Vvo, Vwo) coincide with a maximum value (Vdc) of the carrier wave signal (C), or which makes the voltage command value of a phase of a minimum voltage (Vmin) in the voltage command values of three-phase (Vuo, Vvo, Vwo) coincide with a minimum value (0) of the carrier wave signal (C); and calculates the voltage command values of three-phase (Vuo, Vvo, Vwo) by subtracting the offset voltage (Voff) from the basic voltage command values of three-phase (Vub, Vvb, Vwb);

wherein in the bus current ripple suppression control,

for each set, the voltage command calculation unit (33) calculates a third order harmonic wave (Voff) which makes a center value between a maximum voltage (Vmax) and a minimum voltage (Vmin) in the voltage command values of three-phase (Vuo, Vvo, Vwo) coincide with a center value (Vdc/2) of a DC voltage supplied to the inverter (4); and calculates the voltage command values of three-phase (Vuo, Vvo, Vwo) by subtracting the third order harmonic wave (Voff) from the basic voltage command values of three-phase (Vub, Vvb, Vwb); and

the voltage command calculation unit (33) uses a first carrier wave signal (C1) as first set of the carrier wave signal (C), and uses a second carrier wave signal (C2) which differs from the first carrier wave signal (C1) by 90 degrees in phase, as second set of the carrier wave signal (C).

8. The AC rotary machine controller (30) according to any one of claims 1 to 6,
   wherein the voltage command calculation unit (33) executes the bus current ripple suppression control also in the third control mode.

9. The AC rotary machine controller (30) according to any one of claims 5 to 8,

   wherein, for each set, in the switching loss suppression control,
   the voltage command calculation unit (33) calculates the offset voltage (Voff) which makes the voltage command value of the phase of the maximum voltage (Vmax) coincide with the maximum value (Vdc) of the carrier wave signal (C) when an absolute value of a winding current of a phase of a maximum voltage (Vmax) in the voltage command values of three-phase (Vuo, Vvo, Vwo) is larger than an absolute value of the winding current of a phase of a minimum voltage (Vmin) in the voltage command values of three-phase (Vuo, Vvo, Vwo);
   or the voltage command calculation unit (33) calculates the offset voltage (Voff) which makes the voltage command value of the phase of the minimum voltage (Vmin) coincide with a minimum value (0) of the carrier wave signal (C) when the absolute value of the winding current of the phase of the maximum voltage (Vmax) is not larger than the absolute value of the winding current of the phase of the minimum voltage (Vmin).

10. A vehicle driving apparatus (100) comprising:

the AC rotary machine controller (30) according to any one of claims 1 to 9,
the AC rotary machine (1), and
a driving force transmission mechanism (101) that transmits a driving force of the AC rotary machine (1) to wheels (103) of a vehicle.

11. An electric power steering apparatus (120) comprising:

the AC rotary machine controller (30) according to any one of claims 1 to 9,
the AC rotary machine (1), and
a driving force transmission mechanism (121) that transmits a driving force of the AC rotary machine (1) to a steering apparatus (122) of a vehicle.

**Patentansprüche**

1. AC-Rotationsmaschinensteuerung (30), die eine AC-Rotationsmaschine (1) steuert, die einen Stator (7) aufweist, der mit einem Satz oder einer Vielzahl von Sätzen von Dreiphasenwicklungen (Cu, Cv, Cw) über einen Satz oder eine Vielzahl von Sätzen von Wechselrichtern (4) bereitgestellt ist, wobei die AC-Rotationsmaschinensteuerung (30) umfasst:

eine Spannungsbefehlsberechnungseinheit (33), die für jeden Satz Spannungsbefehlswerte von drei Phasen (Vuo, Vvo, Vwo) berechnet, die an die Dreiphasenwicklungen (Cu, Cv, Cw) angelegt werden; und
eine PWM-Steuerungseinheit (34), die für jeden Satz eine Vielzahl von Schaltvorrichtungen des Wechselrichters (4) basierend auf einem Vergleichsergebnis zwischen jedem der Spannungsanweisungswerte der drei Phasen (Vuo, Vvo, Vwo) und einem Trägerwellensignal (C) ein- und ausschaltet;
wobei die Spannungsbefehlsberechnungseinheit (33) für jeden Satz einen ersten Steuerungsmodus, einen zweiten Steuerungsmodus und einen dritten Steuerungsmodus basierend auf einem Betriebszustand der AC-Rotationsmaschine (1) schaltet;
im ersten Steuerungsmodus die Spannungsbefehlsberechnungseinheit (33) eine Phasenstromwelligkeitsunterdrückungssteuerung ausführt, die die Spannungsbefehlswerte der drei Phasen (Vuo, Vvo, Vwo) berechnet, indem sie eine Modulation auf die grundlegenden Spannungsbefehlswerte der drei Phasen (Vub, Vvb, Vwb) anwendet, sodass eine Welligkeitskomponente des in die Wicklung jeder Phase fließenden Stroms weniger abnimmt als falls die grundlegenden Spannungsbefehlswerte der drei Phasen (Vub, Vvb, Vwb) von Sinuswellen als Spannungsbefehlswerte der drei Phasen (Vuo, Vvo, Vwo) festgelegt werden;
im zweiten Steuerungsmodus die Spannungsbefehlsberechnungseinheit (33) eine Busstromwelligkeitsunterdrückungssteuerung ausführt, die die Spannungsbefehlswerte der drei Phasen (Vuo, Vvo, Vwo) berechnet, indem sie eine Modulation auf die grundlegenden Spannungsbefehlswerte der drei Phasen (Vuo, Vvo, Vwo) anwendet, sodass eine Welligkeitskomponente des zwischen einer DC-Leistungsquelle und dem Wechselrichter (4) fließenden Stroms weniger abnimmt als falls die grundlegenden Spannungsbefehlswerte der drei Phasen (Vub, Vvb, Vwb) von Sinuswellen als Spannungsbefehlswerte der drei Phasen (Vuo, Vvo, Vwo) festgelegt werden; und
im dritten Steuerungsmodus die Spannungsbefehlsberechnungseinheit (33) eine Schaltverlustunterdrückungssteuerung ausführt, die die Spannungsbefehlswerte der drei Phasen (Vuo, Vvo, Vwo) berechnet, indem sie eine Modulation auf die grundlegenden Spannungsbefehlswerte der drei Phasen (Vub, Vvb, Vwb) anwendet, sodass der Verlust der Schaltvorrichtungen geringer ist als falls die grundlegenden Spannungsbefehlswerte der drei Phasen (Vub, Vvb, Vwb) von Sinuswellen als Spannungsanweisungswerte der drei Phasen (Vuo, Vvo, Vwo) eingestellt werden;
wobei für jeden Satz die Spannungsbefehlsberechnungseinheit (33) den ersten Steuerungsmodus, den zweiten Steuerungsmodus und den dritten Steuerungsmodus zumindest basierend auf einem Ausgangsparameter schaltet, der entweder der Absolutwert eines Stromvektors der in die Dreiphasenwicklungen (Cu, Cv, Cw) fließt, und dem Absolutwert eines Ausgangsdrehmoments der AC-Rotationsmaschine (1) ist, und einem Bereichsparameter, der entweder der Absolutwert einer Rotationsgeschwindigkeit der AC-Rotationsmaschine (1) oder der Absolutwert eines Spannungsvektors der Spannungsanweisungswerte der drei Phasen (Vuo, Vvo, Vwo) ist; **dadurch gekennzeichnet, dass** für jeden Satz die Spannungsbefehlsberechnungseinheit (33) den ersten Steuerungsmodus, den zweiten Steuerungsmodus und den dritten Steuerungsmodus zumindest basierend auf einem Ausgangsparameter schaltet, der entweder der Absolutwert eines Stromvektors der in die Dreiphasenwicklungen (Cu, Cv, Cw) und dem Absolutwert eines Ausgangsdrehmoments der AC-Rotationsmaschine (1) ist, und einem Bereichsparameter, der entweder der Absolutwert einer Rotationsgeschwindigkeit der AC-Rotationsmaschine (1) oder der Absolutwert eines Spannungsvektors der Dreiphasenspannungsanweisungswerte der drei Phasen (Vuo, Vvo, Vwo) ist;

wobei für jeden Satz die Spannungsbefehlsberechnungseinheit (33) in den ersten Steuerungsmodus wechselt, wenn der Ausgangsparameter kleiner als ein Ausgangsbestimmungswert ist und der Bereichsparameter kleiner als ein Bereichsbestimmungswert ist;

in den zweiten Steuerungsmodus schaltet, wenn der Ausgangsparameter größer oder gleich dem Ausgangsbestimmungswert ist und der Bereichsparameter kleiner als der Bereichsbestimmungswert ist; und

in den dritten Steuerungsmodus schaltet, wenn der Bereichsparameter größer oder gleich dem Bereichsbestimmungswert ist;

wobei für jeden Satz in der Phasenstromwelligkeitsunterdrückungssteuerung die Spannungsbefehlsberechnungseinheit (33) eine harmonische Welle dritter Ordnung (Voff) berechnet, die einen Zentralwert zwischen einer maximalen Spannung (Vmax) und einer minimalen Spannung (Vmin) in den Spannungsbefehlswerten der drei Phasen (Vuo, Vvo, Vwo) mit einem Zentralwert (Vdc/2) einer dem Wechselrichter (4) bereitgestellten DC-Spannung übereinstimmen lässt; und der Spannungsanweisungswert der drei Phasen (Vuo, Vvo, Vwo) berechnet, indem sie die Harmonische dritter Ordnung (Voff) von den grundlegenden Spannungsanweisungswerten der drei Phasen (Vub, Vvb, Vwb) subtrahiert;

wobei für jeden Satz in der Phasenstromwelligkeitsunterdrückungssteuerung

wenn eine Phase eines maximalen Stromabsolutwerts (Iabsmax) in den Absolutwerten der Ströme der drei Phasen, die in die Dreiphasenwicklungen (Cu, Cv, Cw) fließen, mit einer Phase einer maximalen Spannung (Vmax) in den Spannungsbefehlswerten der drei Phasen (Vuo, Vvo, Vwo) übereinstimmt, die Spannungsbefehlsberechnungseinheit (33) eine Flachspitzenzweiphasenmodulation ausführt, die eine Versatzspannung (Voff) berechnet, die den Spannungsbefehlswert der Phase der maximalen Spannung (Vmax) mit einem Maximalwert (Vdc) des Trägerwellensignals (C) übereinstimmen lässt, und die Spannungsbefehlswerte der drei Phasen (Vuo, Vvo, Vwo) berechnet, indem sie die Versatzspannung (Voff) von den grundlegenden Spannungsanweisungswerten der drei Phasen (Vub, Vvb, Vwb) subtrahiert;

wenn die Phase des maximalen Stromabsolutwerts (Iabsmax) mit einer Phase einer minimalen Spannung (Vmin) in den Spannungsbefehlswerten der drei Phasen (Vuo, Vvo, Vwo) übereinstimmt, die Spannungsbefehlsberechnungseinheit (33) eine Flachbodenzweiphasenmodulation ausführt, die die Versatzspannung (Voff) berechnet, die den Spannungsbefehlswert der Phase der minimalen Spannung (Vmin) mit einem Minimalwert (0) des Trägerwellensignals (C) übereinstimmen lässt, und den Spannungsanweisungswert der drei Phasen (Vuo, Vvo, Vwo) berechnet, indem sie die Versatzspannung (Voff) von den grundlegenden Spannungsanweisungswerten der drei Phasen (Vub, Vvb, Vwb) subtrahiert;

als Trägerwellensignal (C) die Spannungsbefehlsberechnungseinheit (33) ein erstes Trägerwellensignal (C1) und ein zweites Trägerwellensignal (C2) verwendet, das sich vom ersten Trägerwellensignal (C1) um 180 Grad in der Phase unterscheidet; und

für zwei Phasen, verschieden von der Phase der maximalen Spannung (Vmax), wenn das Flachspitzenzweiphasenmodulation oder zwei Phasen, verschieden von der Phase der minimalen Spannung (Vmin), wenn das Flachbodenzweiphasenmodulation ausgeführt wird, die Spannungsbefehlsberechnungseinheit (33) den Spannungsbefehlswert einer Phase mit dem ersten Trägerwellensignal (C1) vergleicht und den Spannungsbefehlswert der anderen Phase mit dem zweiten Trägerwellensignal (C2) vergleicht;

wobei für jeden Satz in der Schaltverlustunterdrückungssteuerung die Spannungsbefehlsberechnungseinheit (33) eine Versatzspannung (Voff) berechnet, die den Spannungsbefehlswert einer Phase eines maximalen Spannungswerts (Vmax) in den Spannungsbefehlswerten der drei Phasen (Vuo, Vvo, Vwo) mit einem Maximalwert (Vdc) des Trägerwellensignals (C) übereinstimmen lässt, oder die den Spannungsanweisungswert einer Phase mit einem minimalen Spannungsanweisungswert (Vmin) in den Spannungsanweisungswerten der drei Phasen (Vuo, Vvo, Vwo) mit einem Minimalwert (0) des Trägerwellensignals (C) machen; und berechnet den Spannungsanweisungswert der drei Phasen (Vuo, Vvo, Vwo), indem er die Versatzspannung (Voff) von den grundlegenden Spannungsanweisungswerten der drei Phasen (Vub, Vvb, Vwb) subtrahiert.

2. AC-Rotationsmaschinensteuerung (30) gemäß Anspruch 1,

wobei für jeden Satz in der Schaltverlustunterdrückungssteuerung

die Spannungsbefehlsberechnungseinheit (33) die Versatzspannung (Voff) berechnet, die den Spannungsbefehlswert der Phase der maximalen Spannung (Vmax) mit dem Maximalwert (Vdc) des Trägerwellensignals (C) übereinstimmen lässt, wenn der Absolutwert eines Wicklungsstroms einer Phase einer maximalen Spannung (Vmax) in den Spannungsbefehlswerten der drei Phasen (Vuo, Vvo, Vwo) größer ist als der Absolutwert des Wicklungsstroms einer Phase einer minimalen Spannung (Vmin) in den Spannungsbefehlswerten der drei Phasen (Vuo, Vvo, Vwo);

oder die Spannungsbefehlsberechnungseinheit (33) die Versatzspannung (Voff) berechnet, die den Spannungsbefehlswert der Phase der minimalen Spannung (Vmin) mit einem Minimalwert (0) des Trägerwellensignals (C) übereinstimmen lässt, wenn der Absolutwert des Wicklungsstroms der Phase der maximalen Spannung (Vmax) nicht größer ist als der Absolutwert des Wicklungsstroms der Phase der minimalen Spannung (Vmin).

3. AC-Rotationsmaschinensteuerung (30) gemäß Anspruch 1,

wobei für jeden Satz in der Busstromwelligkeitsunterdrückungssteuerung,
falls die Phase des maximalen Stromabsolutwerts (Iabsmax) mit einer Phase einer mittleren Spannung (Vmid) in den Spannungsbefehlswerten der drei Phasen (Vuo, Vvo, Vwo) übereinstimmt, die Spannungsbefehlsberechnungseinheit (33) die Flachspitzenzweiphasenmodulation ausführt, wenn die Mittelspannung (Vmid) größer als ein Zentralwert (Vdc/2) einer dem Wechselrichter (4) bereitgestellten DC-Spannung ist, und die Spannungsbefehlsberechnungseinheit (33) die Flachbodenzweiphasenmodulation ausführt, wenn die Mittelspannung (Vmid) kleiner als der Zentralwert (Vdc/2) ist.

4. AC-Rotationsmaschinensteuerung (30) gemäß Anspruch 3,

wobei für jeden Satz in der Busstromwelligkeitsunterdrückungssteuerung,
wenn die Phase des maximalen Stromabsolutwerts (Iabsmax) mit der Phase der maximalen Spannung (Vmax) in den Spannungsanweisungswerten der drei Phasen (Vuo, Vvo, Vwo) übereinstimmt, die Berechnungseinheit (33) das Trägerwellensignal (C) der Phase des maximalen Stromabsolutwerts (Iabsmax) auf das zweite Trägerwellensignal (C2) schaltet, und
wenn die Phase des maximalen Stromabsolutwerts (Iabsmax) mit der Phase der minimalen Spannung (Vmin) in den Spannungsanweisungswerten der drei Phasen (Vuo, Vvo, Vwo) übereinstimmt, die Berechnungseinheit für die Spannungsanweisung (33) das Trägerwellensignal (C) der Phase des maximalen Stromabsolutwerts (Iabsmax) auf das erste Trägerwellensignal (C1) schaltet.

5. AC-Rotationsmaschinensteuerung (30), die eine AC-Rotationsmaschine (1) steuert, die einen Stator (7) aufweist, der mit einem Satz oder einer Vielzahl von Sätzen von Dreiphasenwicklungen (Cu, Cv, Cw) über einen Satz oder eine Vielzahl von Sätzen von Wechselrichtern (4) bereitgestellt ist, wobei die AC-Rotationsmaschinensteuerung (30) umfasst:

eine Spannungsbefehlsberechnungseinheit (33), die für jeden Satz Spannungsbefehlswerte von drei Phasen (Vuo, Vvo, Vwo) berechnet, die an die Dreiphasenwicklungen (Cu, Cv, Cw) angelegt werden; und
eine PWM-Steuerungseinheit (34), die für jeden Satz mehrere Schaltvorrichtungen des Wechselrichters (4) basierend auf einem Vergleichsergebnis zwischen jedem der Spannungsanweisungswerte der drei Phasen (Vuo, Vvo, Vwo) und einem Trägerwellensignal (C) ein- und ausschaltet;
wobei die Spannungsbefehlsberechnungseinheit (33) für jeden Satz einen ersten Steuerungsmodus, einen zweiten Steuerungsmodus und einen dritten Steuerungsmodus basierend auf einem Betriebszustand der AC-Rotationsmaschine (1) schaltet;
im ersten Steuermodus die Spannungsbefehlsberechnungseinheit (33) eine Phasenstromwelligkeitsunterdrückungssteuerung ausführt, die die Spannungsbefehlswerte der drei Phasen (Vuo, Vvo, Vwo) berechnet, indem sie eine Modulation auf die grundlegenden Spannungsbefehlswerte der drei Phasen (Vub, Vvb, Vwb) anwendet, sodass eine Welligkeitskomponente des in die Wicklung jeder Phase fließenden Stroms weniger abnimmt als falls die grundlegenden Spannungsbefehlswerte der drei Phasen (Vub, Vvb, Vwb) von Sinuswellen als Spannungsbefehlswerte der drei Phasen (Vuo, Vvo, Vwo) eingestellt sind;
im zweiten Steuerungsmodus die Spannungsbefehlsberechnungseinheit (33) eine Busstromwelligkeitsunterdrückungssteuerung ausführt, die die Spannungsbefehlswerte der drei Phasen (Vuo, Vvo, Vwo) berechnet, indem sie eine Modulation auf die grundlegenden Spannungsbefehlswerte der drei Phasen (Vub, Vvb, Vwb) anwendet, sodass eine Welligkeitskomponente des zwischen einer DC-Leistungsquelle und dem Wechselrichter (4) fließenden Stroms weniger abnimmt als falls die grundlegenden Spannungsbefehlswerte der drei Phasen (Vub, Vvb, Vwb) von Sinuswellen als Spannungsbefehlswerte der drei Phasen (Vuo, Vvo, Vwo) festgelegt werden; und

im dritten Steuerungsmodus die Berechnungseinheit für die Spannungsbefehle (33) eine Steuerung zur Unterdrückung von Schaltverlusten ausführt, die die Spannungsbefehlswerte der drei Phasen (Vuo, Vvo, Vwo) berechnet, indem sie eine Modulation auf die grundlegenden Spannungsbefehlswerte der drei Phasen (Vub, Vvb, Vwb) anwendet, sodass ein Verlust der Schaltvorrichtungen geringer ist als falls die grundlegenden Spannungsbefehlswerte der drei Phasen (Vub, Vvb, Vwb) von Sinuswellen als Spannungsanweisungswerte der drei Phasen (Vuo, Vvo, Vwo) eingestellt werden;

wobei für jeden Satz die Spannungsbefehlsberechnungseinheit (33) den ersten Steuerungsmodus, den zweiten Steuerungsmodus und den dritten Steuerungsmodus schaltet, basierend zumindest auf einem Ausgangsparameter, der entweder der Absolutwert eines Stromvektors der in die Dreiphasenwicklungen (Cu, Cv, Cw) und dem Absolutwert eines Ausgangsdrehmoments der AC-Rotationsmaschine (1) ist, und einem Bereichsparameter, der entweder der Absolutwert einer Rotationsgeschwindigkeit der AC-Rotationsmaschine (1) oder der Absolutwert eines Spannungsvektors der Spannungsanweisungswerte der drei Phasen (Vuo, Vvo, Vwo) ist;

**dadurch gekennzeichnet, dass** für jeden Satz die Spannungsbefehlsberechnungseinheit (33) in den ersten Steuerungsmodus schaltet, wenn der Ausgangsparameter kleiner als ein Ausgangsbestimmungswert ist und der Bereichsparameter kleiner als ein Bereichsbestimmungswert ist;

in den zweiten Steuerungsmodus schaltet, wenn der Ausgangsparameter größer oder gleich dem Ausgangsbestimmungswert ist und der Bereichsparameter kleiner als der Bereichsbestimmungswert ist; und

in den dritten Steuerungsmodus schaltet, wenn der Bereichsparameter größer oder gleich dem Bereichsbestimmungswert ist;

wobei zwei Sätze der Dreiphasenwicklungen (Cu1, Cv1, Cw1, Cu2, Cv2, Cw2) im Stator (7) bereitgestellt sind, in der Phasenstromwelligkeitsunterdrückungssteuerung, die Spannungsbefehlsberechnungseinheit (33) einen ersten Satz von Wellen der dritten Ordnung (Voff1) und einen zweiten Satz von Wellen der dritten Ordnung (Voff2) berechnet, die einen Zentralwert zwischen einer maximalen Spannung (Vmax1) und einer minimalen Spannung (Vmin1) im ersten Satz der Spannungsanweisungswerte der drei Phasen (Vuo1, Vvo1, Vwo1) und einen Zentralwert zwischen einer maximalen Spannung (Vmax2) und einer minimalen Spannung (Vmin2) im zweiten Satz der Spannungsanweisungswerte der drei Phasen (Vuo2, Vvo2, Vwo2) übereinstimmen lässt; und den ersten Satz von Spannungsanweisungswerten der drei Phasen (Vuo1, Vvo1, Vwo1) berechnet, indem sie den ersten Satz von Wellen der dritten Harmonischen (Voff1) vom ersten Satz der grundlegenden Spannungsanweisungswerte der drei Phasen (Vub1, Vvb1, Vwb1) subtrahiert; und den zweiten Satz von Spannungsanweisungswerten der drei Phasen (Vuo2, Vvo2, Vwo2) berechnet, indem sie den zweiten Satz von Oberschwingungen dritter Ordnung (Voff2) vom zweiten Satz der grundlegenden Spannungsanweisungswerte der drei Phasen (Vub2, Vvb2, Vwb2) subtrahiert;

wobei für jeden Satz in der Schaltverlustunterdrückungssteuerung die Spannungsbefehlsberechnungseinheit (33) eine Versatzspannung (Voff) berechnet, die den Spannungsbefehlswert einer Phase eines maximalen Spannungswerts (Vmax) in den Spannungsbefehlswerten der drei Phasen (Vuo, Vvo, Vwo) mit einem Maximalwert (Vdc) des Trägerwellensignals (C) übereinstimmen lässt, oder die den Spannungsanweisungswert der drei Phasen eines minimalen Spannungsanweisungswerts (Vmin) in den Spannungsanweisungswerten der drei Phasen (Vuo, Vvo, Vwo) mit einem Minimalwert (0) des Trägerwellensignals (C) übereinstimmen lässt; und den Spannungsanweisungswert der drei Phasen (Vuo, Vvo, Vwo) berechnet, indem sie die Versatzspannung (Voff) von den grundlegenden Spannungsanweisungswerten der drei Phasen (Vub, Vvb, Vwb) subtrahiert;

die Spannungsbefehlsberechnungseinheit (33) in der Busstromwelligkeitsunterdrückungssteuerung eine Flachbodenzweiphasenmodulation für den zweiten Satz ausführt, wenn sie eine Flachdachzweiphasenmodulation für den ersten Satz ausführt; und die Flachdachzweiphasenmodulation für den zweiten Satz ausführt, wenn sie die Flachbodenzweiphasenmodulation für den ersten Satz ausführt;

als ersten Satz des Trägerwellensignals (C) und zweiten Satz des Trägerwellensignals (C), die Spannungsbefehlsberechnungseinheit (33) die Trägerwellensignale (C) mit derselben Phase benutzt;

bei der Flachdachzweiphasenmodulation, die Spannungsbefehlsberechnungseinheit (33) eine Versatzspannung (Voff) berechnet, die den Spannungsbefehlswert einer Phase zu einer maximalen Spannung (Vmax) in den Spannungsbefehlswerten der drei Phasen (Vuo, Vvo, Vwo) eines Objektsatzes, in dem die Flachdachzweiphasenmodulation ausgeführt wird, mit einem Maximalwert (Vdc) des Trägerwellensignals (C) übereinstimmen lässt; und die Spannungsanweisungswerte der drei Phasen (Vuo, Vvo, Vwo) des Objektsatzes berechnet, indem sie die Versatzspannung (Voff) von den grundlegenden Spannungsanweisungswerten der drei Phasen (Vub, Vvb, Vwb) des Objektsatzes subtrahiert; und

bei der Flachbodenzweiphasenmodulation, die Spannungsbefehlsberechnungseinheit (33) die Versatzspannung (Voff) berechnet, die den Spannungsbefehlswert einer Phase eines minimalen Spannungsanweisungswerts (Vmin) in den Spannungsanweisungswerten der drei Phasen (Vuo, Vvo, Vwo) des Objektsatzes, in dem die Flachbodenzweiphasenmodulation ausgeführt wird, mit einem Minimalwert (0) des Trägerwellensignals (C) übereinstimmen lässt; und die Spannungsanweisungswerte der drei Phasen (Vuo, Vvo, Vwo) des Objektsatzes berechnet, indem sie die Versatzspannung (Voff) von den grundlegenden Spannungsanweisungswerten der drei Phasen (Vub, Vvb, Vwb) des Objektsatzes subtrahiert.

6. AC-Rotationsmaschinensteuerung (30), die eine AC-Rotationsmaschine (1) steuert, die einen Stator (7) aufweist, der mit einem Satz oder einer Vielzahl von Sätzen von Dreiphasenwicklungen (Cu, Cv, Cw) über einen Satz oder eine Vielzahl von Sätzen von Wechselrichtern (4) bereitgestellt ist, wobei die AC-Rotationsmaschinensteuerung (30) umfasst:

eine Spannungsbefehlsberechnungseinheit (33), die für jeden Satz Spannungsbefehlswerte von drei Phasen (Vuo, Vvo, Vwo) berechnet, die an die Dreiphasenwicklungen (Cu, Cv, Cw) angelegt werden; und eine PWM-Steuerungseinheit (34), die für jeden Satz mehrere Schaltvorrichtungen des Wechselrichters (4) basierend auf einem Vergleichsergebnis zwischen jedem der Spannungsanweisungswerte der drei Phasen (Vuo, Vvo, Vwo) und einem Trägerwellensignal (C) ein- und ausschaltet;
wobei die Spannungsbefehlsberechnungseinheit (33) für jeden Satz einen ersten Steuerungsmodus, einen zweiten Steuerungsmodus und einen dritten Steuerungsmodus basierend auf einem Betriebszustand der AC-Rotationsmaschine (1) schaltet;
im ersten Steuermodus die Spannungsbefehlsberechnungseinheit (33) eine Phasenstromwelligkeitsunterdrückungssteuerung ausführt, die die Spannungsbefehlswerte der drei Phasen (Vuo, Vvo, Vwo) berechnet, indem sie eine Modulation auf die grundlegenden Spannungsbefehlswerte der drei Phasen (Vub, Vvb, Vwb) anwendet, sodass eine Welligkeitskomponente des in die Wicklung jeder Phase fließenden Stroms weniger abnimmt als falls die grundlegenden Spannungsbefehlswerte der drei Phasen (Vub, Vvb, Vwb) von Sinuswellen als Spannungsbefehlswerte der drei Phasen (Vuo, Vvo, Vwo) eingestellt sind;
im zweiten Steuerungsmodus die Spannungsbefehlsberechnungseinheit (33) eine Busstromwelligkeitsunterdrückungssteuerung ausführt, die die Spannungsbefehlswerte der drei Phasen (Vuo, Vvo, Vwo) berechnet, indem sie eine Modulation auf die grundlegenden Spannungsbefehlswerte der drei Phasen (Vub, Vvb, Vwb) anwendet, sodass eine Welligkeitskomponente des zwischen einer DC-Leistungsquelle und dem Wechselrichter (4) fließenden Stroms weniger abnimmt als falls die grundlegenden Spannungsbefehlswerte der drei Phasen (Vub, Vvb, Vwb) von Sinuswellen als Spannungsbefehlswerte der drei Phasen (Vuo, Vvo, Vwo) festgelegt werden; und
im dritten Steuerungsmodus die Spannungsbefehlsberechnungseinheit (33) eine Schaltverlustunterdrückungssteuerung ausführt, die die Spannungsbefehlswerte der drei Phasen (Vuo, Vvo, Vwo) berechnet, indem sie eine Modulation auf die grundlegenden Spannungsbefehlswerte der drei Phasen (Vub, Vvb, Vwb) anwendet, sodass ein Verlust der Schaltvorrichtungen weniger abnimmt als falls die grundlegenden Spannungsbefehlswerte der drei Phasen (Vub, Vvb, Vwb) von Sinuswellen als Spannungsanweisungswerte der drei Phasen (Vuo, Vvo, Vwo) eingestellt werden;
wobei für jeden Satz die Spannungsbefehlsberechnungseinheit (33) den ersten Steuerungsmodus, den zweiten Steuerungsmodus und den dritten Steuerungsmodus schaltet, basierend zumindest auf einem Ausgangsparameter, der entweder ein Absolutwert eines Stromvektors der in die Dreiphasenwicklungen (Cu, Cv, Cw) und dem Absolutwert eines Ausgangsdrehmoments der AC-Rotationsmaschine (1) ist, und einem Bereichsparameter, der entweder der Absolutwert einer Rotationsgeschwindigkeit der AC-Rotationsmaschine (1) oder der Absolutwert eines Spannungsvektors der Spannungsanweisungswerte der drei Phasen (Vuo, Vvo, Vwo) ist;
**dadurch gekennzeichnet, dass** für jeden Satz die Spannungsbefehlsberechnungseinheit (33) in den ersten Steuerungsmodus schaltet, wenn der Ausgangsparameter kleiner als ein Ausgangsbestimmungswert ist und der Bereichsparameter kleiner als ein Bereichsbestimmungswert ist;
in den zweiten Steuerungsmodus schaltet, wenn der Ausgangsparameter größer oder gleich dem Ausgangsbestimmungswert ist und der Bereichsparameter kleiner als der Bereichsbestimmungswert ist; und
in den dritten Steuerungsmodus schaltet, wenn der Bereichsparameter größer oder gleich dem Bereichsbestimmungswert ist;
wobei zwei Sätze der Dreiphasenwicklungen (Cu1, Cv1, Cw1, Cu2, Cv2, Cw2) im Stator (7) bereitgestellt sind, bei der Phasenstromwelligkeitsunterdrückungssteuerung, die Steuerungsanweisungsberechnungseinheit (33) einen ersten Satz von Wellen der dritten Ordnung (Voff1) und einen zweiten Satz von Wellen der dritten Ordnung (Voff2) berechnet, die einen Zentralwert zwischen einer maximalen Spannung (Vmax1) und einer minimalen Spannung (Vmin1) im ersten Satz der Steuerungsanweisungswerte der dreiphasigen (Vuo1, Vvo1, Vwo1) und einen Zentralwert zwischen einer maximalen Spannung (Vmax2) und einer minimalen Spannung (Vmin2) in einem zweiten Satz von Spannungsanweisungswerten der drei Phasen (Vuo2, Vvo2, Vwo2) übereinstimmen lässt; den ersten Satz von Spannungsanweisungswerten der drei Phasen (Vuo1, Vvo1, Vwo1) berechnet, indem sie den ersten Satz von Oberschwingungen dritter Ordnung (Voff1) vom ersten Satz der grundlegenden Spannungsanweisungswerte der drei Phasen (Vub1, Vvb1, Vwb1) subtrahiert; und den zweiten Satz von Spannungsanweisungswerten der drei Phasen (Vuo2, Vvo2, Vwo2) berechnet, indem sie den zweiten Satz von Oberschwingungen dritter Ordnung (Voff2) vom zweiten Satz der grundlegenden Spannungsanweisungswerte der drei Phasen (Vub2, Vvb2, Vwb2) subtrahiert;

wobei für jeden Satz in der Schaltverlustunterdrückungssteuerung die Spannungsbefehlsberechnungseinheit (33) eine Versatzspannung (Voff) berechnet, die den Spannungsbefehlswert einer Phase eines maximalen Spannungswerts (Vmax) in den Spannungsbefehlswerten der drei Phasen (Vuo, Vvo, Vwo) mit einem Maximalwert (Vdc) des Trägerwellensignals (C) übereinstimmen lässt, oder die den Spannungsanweisungswert einer Phase einer Minimalspannung (Vmin) in den Spannungsanweisungswerten der drei Phasen (Vuo, Vvo, Vwo) mit einem Minimalwert (0) des Trägerwellensignals (C) übereinstimmen lässt, machen; und die Spannungsanweisungswerte der drei Phasen (Vuo, Vvo, Vwo) berechnet, indem die Versatzspannung (Voff) von den grundlegenden Spannungsanweisungswerten der drei Phasen (Vub, Vvb, Vwb) subtrahiert wird;

bei der Busstromwelligkeitsunterdrückungssteuerung, die Spannungsbefehlsberechnungseinheit (33) eine Flachspitzenzweiphasenmodulation für den zweiten Satz ausführt, wenn sie die Flachspitzenzweiphasenmodulation für den ersten Satz ausführt; und eine Flachbodenzweiphasenmodulation für den zweiten Satz ausführt, wenn sie die Flachbodenzweiphasenmodulation für den ersten Satz ausführt;

die Spannungsbefehlsberechnungseinheit (33) ein erstes Trägersignal (C1) als ersten Satz des Trägersignals (C) benutzt und ein zweites Trägersignal (C2), das sich vom ersten Trägersignal (C1) um 180 Grad in der Phase unterscheidet, als zweiten Satz des Trägersignals (C) benutzt;

bei der Flachspitzenzweiphasenmodulation, die Spannungsbefehlsberechnungseinheit (33) eine Versatzspannung (Voff) berechnet, die den Spannungsbefehlswert einer Phase eines maximalen Spannungsbefehlswerts (Vmax) in den Spannungsbefehlswerten der drei Phasen (Vuo, Vvo, Vwo) eines Objektsatzes, in dem die Flachspitzenzweiphasenmodulation ausgeführt wird, mit einem Maximalwert (Vdc) des Trägerwellensignals (C) übereinstimmen lässt; und die Spannungsbefehlswerte der drei Phasen (Vuo, Vvo, Vwo) des Objektsatzes berechnet, indem sie die Versatzspannung (Voff) von den grundlegenden Spannungsbefehlswerten der drei Phasen (Vub, Vvb, Vwb) des Objektsatzes subtrahiert; und

bei der Flachbodenzweiphasenmodulation, die Spannungsbefehlsberechnungseinheit (33) die Versatzspannung (Voff) berechnet, die den Spannungsbefehlswert einer Phase eines minimalen Spannungsanweisungswerts (Vmin) in den Spannungsanweisungswerten der drei Phasen (Vuo, Vvo, Vwo) des Objektsatzes, das die Flachbodenzweiphasenmodulation ausführt, mit einem Minimalwert (0) des Trägerwellensignals (C) übereinstimmen lässt; und die Spannungsbefehlswerte der drei Phasen (Vuo, Vvo, Vwo) des Objektsatzes berechnet, indem sie die Versatzspannung (Voff) von den grundlegenden Spannungsbefehlswerten der drei Phasen (Vub, Vvb, Vwb) des Objektsatzes subtrahiert.

7. AC-Rotationsmaschinensteuerung (30), die eine AC-Rotationsmaschine (1) steuert, die einen Stator (7) aufweist, der mit einem Satz oder einer Vielzahl von Sätzen von Dreiphasenwicklungen (Cu, Cv, Cw) über einen Satz oder eine Vielzahl von Sätzen von Wechselrichtern (4) bereitgestellt ist, wobei die AC-Rotationsmaschinensteuerung (30) umfasst:

eine Spannungsbefehlsberechnungseinheit (33), die für jeden Satz Spannungsbefehlswerte von drei Phasen (Vuo, Vvo, Vwo) berechnet, die an die Dreiphasenwicklungen (Cu, Cv, Cw) angelegt werden; und
eine PWM-Steuerungseinheit (34), die für jeden Satz mehrere Schaltvorrichtungen des Wechselrichters (4) basierend auf einem Vergleichsergebnis zwischen jedem der Spannungsbefehlswerte der drei Phasen (Vuo, Vvo, Vwo) und einem Trägerwellensignal (C) ein- und ausschaltet;

wobei für jeden Satz die Spannungsbefehlsberechnungseinheit (33) einen ersten Steuerungsmodus, einen zweiten Steuerungsmodus und einen dritten Steuerungsmodus basierend auf einem Betriebszustand der AC-Rotationsmaschine (1) schaltet;

im ersten Steuermodus die Spannungsbefehlsberechnungseinheit (33) eine Phasenstromwelligkeitsunterdrückungssteuerung ausführt, die die Spannungsbefehlswerte der drei Phasen (Vuo, Vvo, Vwo) berechnet, indem sie eine Modulation auf die grundlegenden Spannungsbefehlswerte der drei Phasen (Vub, Vvb, Vwb) anwendet, sodass eine Welligkeitskomponente des in die Wicklung jeder Phase fließenden Stroms weniger abnimmt als falls die grundlegenden Spannungsbefehlswerte der drei Phasen (Vub, Vvb, Vwb) von Sinuswellen als Spannungsbefehlswerte der drei Phasen (Vuo, Vvo, Vwo) eingestellt sind;

im zweiten Steuerungsmodus die Spannungsbefehlsberechnungseinheit (33) eine Busstromwelligkeitsunterdrückungssteuerung ausführt, die die Spannungsbefehlswerte der drei Phasen (Vuo, Vvo, Vwo) berechnet, indem sie eine Modulation auf die grundlegenden Spannungsbefehlswerte der drei Phasen (Vub, Vvb, Vwb) anwendet, sodass eine Welligkeitskomponente des zwischen einer DC-Leistungsquelle und dem Wechselrichter (4) fließenden Stroms weniger abnimmt als falls die grundlegenden Spannungsbefehlswerte der drei Phasen (Vub, Vvb, Vwb) von Sinuswellen als Spannungsbefehlswerte der drei Phasen (Vuo, Vvo, Vwo) festgelegt werden; und

im dritten Steuerungsmodus die Spannungsbefehlsberechnungseinheit (33) eine Schaltverlustunterdrückungssteuerung ausführt, die die Spannungsbefehlswerte der drei Phasen (Vuo, Vvo, Vwo) berechnet, indem sie eine Modulation auf die grundlegenden Spannungsbefehlswerte der drei Phasen (Vub, Vvb, Vwb) anwendet, sodass ein Verlust der Schaltvorrichtungen weniger abnimmt als falls die grundlegenden Spannungsbefehlswerte der drei Phasen (Vub, Vvb, Vwb) von Sinuswellen als Spannungsanweisungswerte der drei Phasen (Vuo, Vvo, Vwo) eingestellt werden;

wobei für jeden Satz die Spannungsbefehlsberechnungseinheit (33) den ersten Steuerungsmodus, den zweiten Steuerungsmodus und den dritten Steuerungsmodus zumindest basierend auf einem Ausgangsparameter schaltet, der entweder der Absolutwert eines Stromvektors der in die Dreiphasenwicklungen (Cu, Cv, Cw) fließt, und dem Absolutwert eines Ausgangsdrehmoments der AC-Rotationsmaschine (1) ist, und einem Bereichsparameter, der entweder der Absolutwert einer Rotationsgeschwindigkeit der AC-Rotationsmaschine (1) oder der Absolutwert eines Spannungsvektors der Spannungsanweisungswerte der drei Phasen (Vuo, Vvo, Vwo) ist;

**dadurch gekennzeichnet, dass** für jeden Satz die Spannungsbefehlsberechnungseinheit (33) in den ersten Steuerungsmodus schaltet, wenn der Ausgangsparameter kleiner als ein Ausgangsbestimmungswert ist und der Bereichsparameter kleiner als ein Bereichsbestimmungswert ist;

in den zweiten Steuerungsmodus schaltet, wenn der Ausgangsparameter größer oder gleich dem Ausgangsbestimmungswert ist und der Bereichsparameter kleiner als der Bereichsbestimmungswert ist; und

in den dritten Steuerungsmodus schaltet, wenn der Bereichsparameter größer oder gleich dem Bereichsbestimmungswert ist;

wobei zwei Sätze der Dreiphasenwicklungen (Cu1, Cv1, Cw1, Cu2, Cv2, Cw2) im Stator (7) bereitgestellt sind, bei der Phasenstromwelligkeitsunterdrückungssteuerung, die Steuerungsanweisungsberechnungseinheit (33) einen ersten Satz von Wellen der dritten Ordnung (Voff1) und einen zweiten Satz von Wellen der dritten Ordnung (Voff2) berechnet, die einen Zentralwert zwischen einer maximalen Spannung (Vmax1) und einem Minimalwert (Vmin1) im ersten Satz der Steuerungsanweisungswerte der dreiphasigen (Vuo1, Vvo1, Vwo1) und einen Zentralwert zwischen einer maximalen Spannung (Vmax2) und einer minimalen Spannung (Vmin2) in der zweiten Gruppe der Spannungsanweisungswerte der drei Phasen (Vuo2, Vvo2, Vwo2) übereinstimmen lässt; den ersten Satz von Spannungsanweisungswerten der drei Phasen (Vuo1, Vvo1, Vwo1) berechnet, indem sie den ersten Satz von Oberschwingungen dritter Ordnung (Voff1) vom ersten Satz der grundlegenden Spannungsanweisungswerte der drei Phasen (Vub1, Vvb1, Vwb1) subtrahiert; und den zweiten Satz von Spannungsanweisungswerten der drei Phasen (Vuo2, Vvo2, Vwo2) berechnet, indem sie den zweiten Satz von Oberschwingungen dritter Ordnung (Voff2) vom zweiten Satz der grundlegenden Spannungsanweisungswerte der drei Phasen (Vub2, Vvb2, Vwb2) subtrahiert;

wobei für jeden Satz in der Schaltverlustunterdrückungssteuerung, die Spannungsbefehlsberechnungseinheit (33) eine Versatzspannung (Voff) berechnet, die den Spannungsbefehlswert einer Phase eines maximalen Spannungswerts (Vmax) in den Spannungsbefehlswerten der drei Phasen (Vuo, Vvo, Vwo) mit einem Maximalwert (Vdc) des Trägerwellensignals (C) übereinstimmen lässt, oder die den Spannungsanweisungswert einer Phase einer Minimalspannung (Vmin) in den Spannungsanweisungswerten der drei Phasen (Vuo, Vvo, Vwo) mit einem Minimalwert (0) des Trägerwellensignals (C) übereinstimmen lässt; und die Spannungsanweisungswerte der drei Phasen (Vuo, Vvo, Vwo) berechnet, indem die Versatzspannung (Voff) von den grundlegenden Spannungsanweisungswerten der drei Phasen (Vub, Vvb, Vwb) subtrahiert wird;

wobei bei der Busstromwelligkeitsunterdrückungssteuerung,

für jeden Satz, die Spannungsbefehlsberechnungseinheit (33) eine harmonische Welle dritter Ordnung (Voff) berechnet, die einen Zentralwert zwischen einer Maximalsannung (Vmax) und einer Minimalsannung (Vmin) in den Spannungsbefehlswerten der drei Phasen (Vuo, Vvo, Vwo) mit einem Zentralwert (Vdc/2) einer an den Wechselrichter (4) bereitgestellten DC-Spannung übereinstimmen lässt; und die Spannungsanweisungswerte der drei Phasen (Vuo, Vvo, Vwo) berechnet, indem sie die Harmonische dritter Ordnung (Voff) von den grundlegenden Spannungsanweisungswerten der drei Phasen (Vub, Vvb, Vwb) subtrahiert; und

die Spannungsbefehlsberechnungseinheit (33) ein erstes Trägersignal (C1) als ersten Satz des Trägersignals (C) benutzt und ein zweites Trägersignal (C2), das sich vom ersten Trägersignal (C1) um 90 Grad in der Phase verschieden ist, als zweiten Satz des Trägersignals (C) benutzt.

8. AC-Rotationsmaschinensteuerung (30) gemäß einem der Ansprüche 1 bis 6, wobei die Spannungsbefehlsberechnungseinheit (33) die Busstromwelligkeit auch im dritten Steuerungsmodus ausführt.

9. AC-Rotationsmaschinensteuerung (30) gemäß einem der Ansprüche 5 bis 8,

wobei, für jeden Satz, in der Schaltverlustunterdrückungssteuerung,

die Spannungsbefehlsberechnungseinheit (33) die Versatzspannung (Voff) berechnet, die den Spannungsbefehlswert der Phase der maximalen Spannung (Vmax) mit dem Maximalwert (Vdc) des Trägerwellensignals (C) übereinstimmen lässt, wenn der Absolutwert eines Wicklungsstroms einer Phase einer maximalen Spannung (Vmax) in den Spannungsbefehlswerten der drei Phasen (Vuo, Vvo, Vwo) größer ist als der Absolutwert des Wicklungsstroms einer Phase einer minimalen Spannung (Vmin) in den Spannungsbefehlswerten der drei Phasen (Vuo, Vvo, Vwo);

oder die Spannungsbefehlsberechnungseinheit (33) die Versatzspannung (Voff) berechnet, die den Spannungsbefehlswert der Phase der minimalen Spannung (Vmin) mit einem Minimalwert (0) des Trägerwellensignals (C) übereinstimmen lässt, wenn der Absolutwert des Wicklungsstroms der Phase der maximalen Spannung (Vmax) nicht größer ist als der Absolutwert des Wicklungsstroms der Phase der minimalen Spannung (Vmin) nicht größer ist.

**10.** Fahrzeugantriebsvorrichtung (100), umfassend:

die AC-Rotationsmaschinensteuerung (30) gemäß einem der Ansprüche 1 bis 9,
die AC-Rotationsmaschine (1), und
einen Antriebskraftübertragungsmechanismus (101), der eine Antriebskraft der AC-Rotationsmaschine (1) auf Räder (103) eines Fahrzeugs überträgt.

**11.** Elektrische Servolenkungsvorrichtung (120), umfassend:

die AC-Rotationsmaschinensteuerung (30) gemäß einem der Ansprüche 1 bis 9,
die AC-Rotationsmaschine (1), und
einen Antriebskraftübertragungsmechanismus (121), der eine Antriebskraft der AC-Rotationsmaschine (1) auf einen Lenkapparat (122) eines Fahrzeugs überträgt.

## Revendications

**1.** Contrôleur de machine rotative à courant alternatif (30) qui contrôle une machine rotative à courant alternatif (1) comportant un stator (7) muni d'un ensemble ou d'une pluralité d'ensembles d'enroulements triphasés (Cu, Cv, Cw) via un ensemble ou une pluralité d'ensembles d'onduleurs (4), le contrôleur de machine rotative à courant alternatif (30) comprenant :

une unité de calcul de commande de tension (33) qui, pour chaque ensemble, calcule des valeurs de commande de tension triphasées (Vuo, Vvo, Vwo) appliquées aux enroulements triphasés (Cu, Cv, Cw) ; et
une unité de commande PWM (34) qui, pour chaque ensemble, commande la mise en marche/arrêt d'une pluralité de dispositifs de commutation de l'onduleur (4), sur la base d'un résultat de comparaison entre chacune des valeurs de commande de tension triphasées (Vuo, Vvo, Vwo) et un signal d'onde porteuse (C) ;
dans lequel, pour chaque ensemble, l'unité de calcul de commande de tension (33) commute un premier mode de commande, un deuxième mode de commande et un troisième mode de commande, sur la base d'un état de fonctionnement de la machine rotative à courant alternatif (1) ;
dans le premier mode de commande, l'unité de calcul de commande de tension (33) exécute une commande de suppression d'ondulation de courant de phase qui calcule les valeurs de commande de tension triphasées (Vuo, Vvo, Vwo) en appliquant une modulation à des valeurs de commande de tension de base triphasées (Vub, Vvb, Vwb) de telle sorte qu'une composante d'ondulation de courant circulant dans l'enroulement de chaque phase diminue moins que dans un cas où les valeurs de commande de tension de base triphasées (Vub, Vvb, Vwb) d'ondes sinusoïdales sont définies comme les valeurs de commande de tension triphasées (Vuo, Vvo, Vwo) ;
dans le deuxième mode de commande, l'unité de calcul de commande de tension (33) exécute une commande de suppression d'ondulation de courant de bus qui calcule les valeurs de commande de tension triphasées (Vuo, Vvo, Vwo) en appliquant une modulation aux valeurs de commande de tension de base triphasées (Vub, Vvb, Vwb) de sorte qu'une composante d'ondulation de courant circulant entre une source d'alimentation en courant continu et l'onduleur (4) diminue moins que dans un cas où les valeurs de commande de tension de base triphasées (Vub, Vvb, Vwb) d'ondes sinusoïdales sont définies comme les valeurs de commande de tension triphasées (Vuo, Vvo, Vwo) ; et
dans le troisième mode de commande, l'unité de calcul de commande de tension (33) exécute une commande de suppression de perte de commutation qui calcule les valeurs de commande de tension triphasées (Vuo, Vvo, Vwo) en appliquant une modulation aux valeurs de commande de tension de base triphasées (Vub, Vvb, Vwb) de sorte qu'une perte des dispositifs de commutation diminue moins que dans un cas où les valeurs de commande de tension de base triphasées (Vub, Vvb, Vwb) d'ondes sinusoïdales sont définies comme les valeurs de commande de tension triphasées (Vuo, Vvo, Vwo) ;

dans lequel, pour chaque ensemble, l'unité de calcul de commande de tension (33) commute le premier mode de commande, le deuxième mode de commande et le troisième mode de commande, sur la base d'au moins un paramètre de sortie qui est un parmi une valeur absolue d'un vecteur de courant de courants circulant dans les enroulements triphasés (Cu, Cv, Cw) et une valeur absolue d'un couple de sortie de la machine rotative à courant alternatif (1), et un paramètre de région qui est un parmi une valeur absolue d'une vitesse de rotation de la machine rotative à courant alternatif (1) et une valeur absolue d'un vecteur de tension des valeurs de commande de tension triphasées (Vuo, Vvo, Vwo) ;

**caractérisé en ce que**

pour chaque ensemble, l'unité de calcul de commande de tension (33) passe au premier mode de commande lorsque le paramètre de sortie est inférieur à une valeur de détermination de sortie et que le paramètre de région est inférieur à une valeur de détermination de région ;

passe au deuxième mode de commande lorsque le paramètre de sortie est supérieur ou égal à la valeur de détermination de sortie et que le paramètre de région est inférieur à la valeur de détermination de région ; et passe au troisième mode de commande lorsque le paramètre de région est supérieur ou égal à la valeur de détermination de région ;

dans lequel, pour chaque ensemble, dans la commande de suppression d'ondulation de courant de phase, l'unité de calcul de commande de tension (33) calcule une onde harmonique de troisième ordre (Voff) qui fait coïncider une valeur centrale entre une tension maximale (Vmax) et une tension minimale (Vmin) dans les valeurs de commande de tension triphasées (Vuo, Vvo, Vwo) avec une valeur centrale (Vdc/2) d'une tension de courant continu fournie à l'onduleur (4) ; et calcule les valeurs de commande de tension triphasées (Vuo, Vvo, Vwo) en soustrayant l'onde harmonique de troisième ordre (Voff) des valeurs de commande de tension de base triphasées (Vub, Vvb, Vwb) ;

dans lequel, pour chaque ensemble, dans la commande de suppression d'ondulation de courant de bus, lorsqu'une phase d'une valeur absolue de courant maximale (Iabsmax) dans des valeurs absolues de courants triphasés circulant dans les enroulements triphasés (Cu, Cv, Cw) coïncide avec une phase d'une tension maximale (Vmax) dans les valeurs de commande de tension triphasées (Vuo, Vvo, Vwo), l'unité de calcul de commande de tension (33) exécute une modulation biphasée à sommet plat qui calcule une tension de décalage (Voff) qui fait coïncider la valeur de commande de tension de la phase de la tension maximale (Vmax) avec une valeur maximale (Vdc) du signal d'onde porteuse (C), et calcule les valeurs de commande de tension triphasées (Vuo, Vvo, Vwo) en soustrayant la tension de décalage (Voff) des valeurs de commande de tension de base triphasées (Vub, Vvb, Vwb) ;

lorsque la phase de la valeur absolue de courant maximal (Iabsmax) coïncide avec une phase d'une tension minimale (Vmin) dans les valeurs de commande de tension triphasées (Vuo, Vvo, Vwo), l'unité de calcul de commande de tension (33) exécute une modulation biphasée à fond plat qui calcule la tension de décalage (Voff) qui fait coïncider la valeur de commande de tension de la phase de la tension minimale (Vmin) avec une valeur minimale (0) du signal d'onde porteuse (C), et calcule les valeurs de commande de tension triphasées (Vuo, Vvo, Vwo) en soustrayant la tension de décalage (Voff) des valeurs de commande de tension de base triphasées (Vub, Vvb, Vwb) ;

en tant que signal d'onde porteuse (C), l'unité de calcul de commande de tension (33) utilise un premier signal d'onde porteuse (C1) et un deuxième signal d'onde porteuse (C2) qui diffère du premier signal d'onde porteuse (C1) de 180 degrés en phase ; et

pour deux phases autres que la phase de la tension maximale (Vmax) lors de l'exécution de la modulation biphasée à sommet plat, ou deux phases autres que la phase de la tension minimale (Vmin) lors de l'exécution de la modulation biphasée à fond plat, l'unité de calcul de commande de tension (33) compare la valeur de commande de tension d'une phase avec le premier signal d'onde porteuse (C1), et compare la valeur de commande de tension de l'autre phase avec le deuxième signal d'onde porteuse (C2) ;

dans lequel, pour chaque ensemble, dans la commande de suppression de perte de commutation, l'unité de calcul de commande de tension (33) calcule une tension de décalage (Voff) qui fait coïncider la valeur de commande de tension d'une phase d'une tension maximale (Vmax) dans les valeurs de commande de tension triphasées (Vuo, Vvo, Vwo) avec une valeur maximale (Vdc) du signal d'onde porteuse (C), ou qui fait coïncider la valeur de commande de tension d'une phase d'une tension minimale (Vmin) dans les valeurs de commande de tension triphasées (Vuo, Vvo, Vwo) avec une valeur minimale (0) du signal d'onde porteuse (C) ; et calcule les valeurs de commande de tension triphasées (Vuo, Vvo, Vwo) en soustrayant la tension de décalage (Voff) des valeurs de commande de tension de base triphasées (Vub, Vvb, Vwb).

2. Le contrôleur de machine rotative à courant alternatif (30) selon la revendication 1,

dans lequel, pour chaque ensemble, dans la commande de suppression de perte de commutation, l'unité de calcul de commande de tension (33) calcule la tension de décalage (Voff) qui fait coïncider la valeur de commande de tension de la phase de la tension maximale (Vmax) avec la valeur maximale (Vdc) du signal d'onde porteuse (C) lorsqu'une valeur absolue d'un courant d'enroulement d'une phase d'une tension maximale (Vmax) dans les valeurs de commande de tension triphasées (Vuo, Vvo, Vwo) est supérieure à une valeur absolue du courant d'enroulement d'une phase d'une tension minimale (Vmin) dans les valeurs de commande de tension triphasées (Vuo, Vvo, Vwo) ;
ou l'unité de calcul de commande de tension (33) calcule la tension de décalage (Voff) qui fait coïncider la valeur de commande de tension de la phase de la tension minimale (Vmin) avec une valeur minimale (0) du signal d'onde porteuse (C) lorsque la valeur absolue du courant d'enroulement de la phase de la tension maximale (Vmax) n'est pas supérieure à la valeur absolue du courant d'enroulement de la phase de la tension minimale (Vmin).

3. Le contrôleur de machine rotative à courant alternatif (30) selon la revendication 1,

dans lequel, pour chaque ensemble, dans la commande de suppression d'ondulation de courant de bus, dans un cas où la phase de la valeur absolue du courant maximal (Iabsmax) coïncide avec une phase d'une tension moyenne (Vmid) dans les valeurs de commande de tension triphasées (Vuo, Vvo, Vwo), l'unité de calcul de commande de tension (33) exécute la modulation biphasée à sommet plat lorsque la tension moyenne (Vmid) est supérieure à une valeur centrale (Vdc/2) d'une tension de courant continu fournie à l'onduleur (4), et l'unité de calcul de commande de tension (33) exécute la modulation biphasée à fond plat lorsque la tension moyenne (Vmid) est inférieure à la valeur centrale (Vdc/2).

4. Le contrôleur de machine rotative à courant alternatif (30) selon la revendication 3,

dans lequel, pour chaque ensemble, dans la commande de suppression d'ondulation de courant de bus, lorsque la phase de la valeur absolue de courant maximal (Iabsmax) coïncide avec la phase de la tension maximale (Vmax) dans les valeurs de commande de tension triphasées (Vuo, Vvo, Vwo), l'unité de calcul de commande de tension (33) commute le signal d'onde porteuse (C) de la phase de la valeur absolue de courant maximal (Iabsmax) vers le deuxième signal d'onde porteuse (C2), et
lorsque la phase de la valeur absolue de courant maximal (Iabsmax) coïncide avec la phase de la tension minimale (Vmin) dans les valeurs de commande de tension triphasées (Vuo, Vvo, Vwo), l'unité de calcul de commande de tension (33) commute le signal d'onde porteuse (C) de la phase de la valeur absolue de courant maximal (Iabsmax) vers le premier signal d'onde porteuse (C1).

5. Contrôleur de machine rotative à courant alternatif (30) qui contrôle une machine rotative à courant alternatif (1) comportant un stator (7) muni d'un ensemble ou d'une pluralité d'ensembles d'enroulements triphasés (Cu, Cv, Cw) via un ensemble ou une pluralité d'ensembles d'onduleurs (4), le contrôleur de machine rotative à courant alternatif (30) comprenant :

une unité de calcul de commande de tension (33) qui, pour chaque ensemble, calcule des valeurs de commande de tension triphasées (Vuo, Vvo, Vwo) appliquées aux enroulements triphasés (Cu, Cv, Cw) ; et
une unité de commande PWM (34) qui, pour chaque ensemble, commande la mise en marche/arrêt d'une pluralité de dispositifs de commutation de l'onduleur (4), sur la base d'un résultat de comparaison entre chacune des valeurs de commande de tension triphasées (Vuo, Vvo, Vwo) et un signal d'onde porteuse (C) ;
dans lequel, pour chaque ensemble, l'unité de calcul de commande de tension (33) commute un premier mode de commande, un deuxième mode de commande et un troisième mode de commande, sur la base d'un état de fonctionnement de la machine rotative à courant alternatif (1) ;
dans le premier mode de commande, l'unité de calcul de commande de tension (33) exécute une commande de suppression d'ondulation de courant de phase qui calcule les valeurs de commande de tension triphasées (Vuo, Vvo, Vwo) en appliquant une modulation à des valeurs de commande de tension de base triphasées (Vub, Vvb, Vwb) de telle sorte qu'une composante d'ondulation de courant circulant dans l'enroulement de chaque phase diminue moins que dans un cas où les valeurs de commande de tension de base triphasées (Vub, Vvb, Vwb) d'ondes sinusoïdales sont définies comme les valeurs de commande de tension triphasées (Vuo, Vvo, Vwo) ;
dans le deuxième mode de commande, l'unité de calcul de commande de tension (33) exécute une commande de suppression d'ondulation de courant de bus qui calcule les valeurs de commande de tension triphasées (Vuo, Vvo, Vwo) en appliquant une modulation aux valeurs de commande de tension de base triphasées (Vub, Vvb, Vwb) de sorte qu'une composante d'ondulation de courant circulant entre une source d'alimentation en courant continu et l'onduleur (4) diminue moins que dans un cas où les valeurs de commande de tension de base triphasées (Vub, Vvb, Vwb) d'ondes sinusoïdales sont définies comme les valeurs de commande de tension triphasées (Vuo, Vvo, Vwo) ; et

dans le troisième mode de commande, l'unité de calcul de commande de tension (33) exécute une commande de suppression de perte de commutation qui calcule les valeurs de commande de tension triphasées (Vuo, Vvo, Vwo) en appliquant une modulation aux valeurs de commande de tension de base triphasées (Vub, Vvb, Vwb) de sorte qu'une perte des dispositifs de commutation diminue moins que dans un cas où les valeurs de commande de tension de base triphasées (Vub, Vvb, Vwb) d'ondes sinusoïdales sont définies comme les valeurs de commande de tension triphasées (Vuo, Vvo, Vwo) ;

dans lequel, pour chaque ensemble, l'unité de calcul de commande de tension (33) commute le premier mode de commande, le deuxième mode de commande et le troisième mode de commande, sur la base d'au moins un paramètre de sortie qui est un parmi une valeur absolue d'un vecteur de courant de courants circulant dans les enroulements triphasés (Cu, Cv, Cw) et une valeur absolue d'un couple de sortie de la machine rotative à courant alternatif (1), et un paramètre de région qui est un parmi une valeur absolue d'une vitesse de rotation de la machine rotative à courant alternatif (1) et une valeur absolue d'un vecteur de tension des valeurs de commande de tension triphasées (Vuo, Vvo, Vwo) ;

**caractérisé en ce que**

pour chaque ensemble, l'unité de calcul de commande de tension (33) passe au premier mode de commande lorsque le paramètre de sortie est inférieur à une valeur de détermination de sortie et que le paramètre de région est inférieur à une valeur de détermination de région ;

passe au deuxième mode de commande lorsque le paramètre de sortie est supérieur ou égal à la valeur de détermination de sortie et que le paramètre de région est inférieur à la valeur de détermination de région ; et

passe au troisième mode de commande lorsque le paramètre de région est supérieur ou égal à la valeur de détermination de région ;

dans lequel deux ensembles des enroulements triphasés (Cul, Cv1, Cw1, Cu2, Cv2, Cw2) sont prévus dans le stator (7), dans la commande de suppression d'ondulation de courant de phase, l'unité de calcul de commande de tension (33) calcule un premier ensemble d'ondes harmoniques de troisième ordre (Voff1) et un deuxième ensemble d'ondes harmoniques de troisième ordre (Voff2) qui font coïncider entre elles une valeur centrale entre une tension maximale (Vmax1) et une tension minimale (Vmin1) dans un premier ensemble de valeurs de commande de tension triphasées (Vuo1, Vvo1, Vwo1), et une valeur centrale entre une tension maximale (Vmax2) et une tension minimale (Vmin2) dans un deuxième ensemble de valeurs de commande de tension triphasées (Vuo2, Vvo2, Vwo2) ; calcule le premier ensemble de valeurs de commande de tension triphasées (Vuo1, Vvo1, Vwo1) en soustrayant le premier ensemble d'ondes harmoniques de troisième ordre (Voff1) d'un premier ensemble de valeurs de commande de tension de base triphasées (Vub1, Vvb1, Vwb1) ; et calcule le deuxième ensemble de valeurs de commande de tension triphasées (Vuo2, Vvo2, Vwo2) en soustrayant le deuxième ensemble d'ondes harmoniques de troisième ordre (Voff2) d'un deuxième ensemble de valeurs de commande de tension de base triphasées (Vub2, Vvb2, Vwb2) ;

dans lequel, pour chaque ensemble, dans la commande de suppression de perte de commutation, l'unité de calcul de commande de tension (33) calcule une tension de décalage (Voff) qui fait coïncider la valeur de commande de tension d'une phase d'une tension maximale (Vmax) dans les valeurs de commande de tension triphasées (Vuo, Vvo, Vwo) avec une valeur maximale (Vdc) du signal d'onde porteuse (C), ou qui fait coïncider la valeur de commande de tension d'une phase d'une tension minimale (Vmin) dans les valeurs de commande de tension triphasées (Vuo, Vvo, Vwo) avec une valeur minimale (0) du signal d'onde porteuse (C) ; et calcule les valeurs de commande de tension triphasées (Vuo, Vvo, Vwo) en soustrayant la tension de décalage (Voff) des valeurs de commande de tension de base triphasées (Vub, Vvb, Vwb) ;

dans la commande de suppression d'ondulation de courant de bus,

l'unité de calcul de commande de tension (33) exécute une modulation biphasée à fond plat pour le deuxième ensemble, lors de l'exécution d'une modulation biphasée à sommet plat pour le premier ensemble ; et exécute la modulation biphasée à sommet plat pour le deuxième ensemble, lors de l'exécution de la modulation biphasée à fond plat pour le premier ensemble ;

comme premier ensemble du signal d'onde porteuse (C) et deuxième ensemble du signal d'onde porteuse (C), l'unité de calcul de commande de tension (33) utilise les signaux d'onde porteuse (C) avec la même phase ;

dans la modulation biphasée à sommet plat, l'unité de calcul de commande de tension (33) calcule une tension de décalage (Voff) qui fait coïncider la valeur de commande de tension d'une phase d'une tension maximale (Vmax) dans les valeurs de commande de tension triphasées (Vuo, Vvo, Vwo) d'un ensemble objet dans lequel la modulation biphasée à sommet plat est exécutée avec une valeur maximale (Vdc) du signal d'onde porteuse (C) ; et calcule les valeurs de commande de tension triphasées (Vuo, Vvo, Vwo) de l'ensemble objet en soustrayant la tension de décalage (Voff) des valeurs de commande de tension de base triphasées (Vub, Vvb, Vwb) de l'ensemble objet ; et

dans la modulation biphasée à fond plat, l'unité de calcul de commande de tension (33) calcule la tension de décalage (Voff) qui fait coïncider la valeur de commande de tension d'une phase d'une tension minimale (Vmin) dans les valeurs de commande de tension triphasées (Vuo, Vvo, Vwo) de l'ensemble objet dans lequel la modulation biphasée à fond plat est exécutée avec une valeur minimale (0) du signal d'onde porteuse (C) ; et calcule les valeurs de commande de tension triphasées (Vuo, Vvo, Vwo) de l'ensemble objet en soustrayant la tension de décalage (Voff) des valeurs de commande de tension de base triphasées (Vub, Vvb, Vwb) de l'ensemble objet.

6. Contrôleur de machine rotative à courant alternatif (30) qui contrôle une machine rotative à courant alternatif (1) comportant un stator (7) muni d'un ensemble ou d'une pluralité d'ensembles d'enroulements triphasés (Cu, Cv, Cw) via un ensemble ou une pluralité d'ensembles d'onduleurs (4), le contrôleur de machine rotative à courant alternatif (30) comprenant :

une unité de calcul de commande de tension (33) qui, pour chaque ensemble, calcule des valeurs de commande de tension triphasées (Vuo, Vvo, Vwo) appliquées aux enroulements triphasés (Cu, Cv, Cw) ; et une unité de commande PWM (34) qui, pour chaque ensemble, commande la mise en marche/arrêt d'une pluralité de dispositifs de commutation de l'onduleur (4), sur la base d'un résultat de comparaison entre chacune des valeurs de commande de tension triphasées (Vuo, Vvo, Vwo) et un signal d'onde porteuse (C) ; dans lequel, pour chaque ensemble, l'unité de calcul de commande de tension (33) commute un premier mode de commande, un deuxième mode de commande et un troisième mode de commande, sur la base d'un état de fonctionnement de la machine rotative à courant alternatif (1) ; dans le premier mode de commande, l'unité de calcul de commande de tension (33) exécute une commande de suppression d'ondulation de courant de phase qui calcule les valeurs de commande de tension triphasées (Vuo, Vvo, Vwo) en appliquant une modulation à des valeurs de commande de tension de base triphasées (Vub, Vvb, Vwb) de telle sorte qu'une composante d'ondulation de courant circulant dans l'enroulement de chaque phase diminue moins que dans un cas où les valeurs de commande de tension de base triphasées (Vub, Vvb, Vwb) d'ondes sinusoïdales sont définies comme les valeurs de commande de tension triphasées (Vuo, Vvo, Vwo) ; dans le deuxième mode de commande, l'unité de calcul de commande de tension (33) exécute une commande de suppression d'ondulation de courant de bus qui calcule les valeurs de commande de tension triphasées (Vuo, Vvo, Vwo) en appliquant une modulation aux valeurs de commande de tension de base triphasées (Vub, Vvb, Vwb) de sorte qu'une composante d'ondulation de courant circulant entre une source d'alimentation en courant continu et l'onduleur (4) diminue moins que dans un cas où les valeurs de commande de tension de base triphasées (Vub, Vvb, Vwb) d'ondes sinusoïdales sont définies comme les valeurs de commande de tension triphasées (Vuo, Vvo, Vwo) ; et dans le troisième mode de commande, l'unité de calcul de commande de tension (33) exécute une commande de suppression de perte de commutation qui calcule les valeurs de commande de tension triphasées (Vuo, Vvo, Vwo) en appliquant une modulation aux valeurs de commande de tension de base triphasées (Vub, Vvb, Vwb) de sorte qu'une perte des dispositifs de commutation diminue moins que dans un cas où les valeurs de commande de tension de base triphasées (Vub, Vvb, Vwb) d'ondes sinusoïdales sont définies comme les valeurs de commande de tension triphasées (Vuo, Vvo, Vwo) ; dans lequel, pour chaque ensemble, l'unité de calcul de commande de tension (33) commute le premier mode de commande, le deuxième mode de commande et le troisième mode de commande, sur la base d'au moins un paramètre de sortie qui est un parmi une valeur absolue d'un vecteur de courant de courants circulant dans les enroulements triphasés (Cu, Cv, Cw) et une valeur absolue d'un couple de sortie de la machine rotative à courant alternatif (1), et un paramètre de région qui est un parmi une valeur absolue d'une vitesse de rotation de la machine rotative à courant alternatif (1) et une valeur absolue d'un vecteur de tension des valeurs de commande de tension triphasées (Vuo, Vvo, Vwo) ;

**caractérisé en ce que**

pour chaque ensemble, l'unité de calcul de commande de tension (33) passe au premier mode de commande lorsque le paramètre de sortie est inférieur à une valeur de détermination de sortie et que le paramètre de région est inférieur à une valeur de détermination de région ; passe au deuxième mode de commande lorsque le paramètre de sortie est supérieur ou égal à la valeur de détermination de sortie et que le paramètre de région est inférieur à la valeur de détermination de région ; et passe au troisième mode de commande lorsque le paramètre de région est supérieur ou égal à la valeur de détermination de région ;

dans lequel deux ensembles des enroulements triphasés (Cul, Cv1, Cw1, Cu2, Cv2, Cw2) sont prévus dans le stator (7),

dans la commande de suppression d'ondulation de courant de phase, l'unité de calcul de commande de tension (33) calcule un premier ensemble d'ondes harmoniques de troisième ordre (Voff1) et un deuxième ensemble d'ondes harmoniques de troisième ordre (Voff2) qui font coïncider entre elles une valeur centrale entre une tension maximale (Vmax1) et une tension minimale (Vmin1) dans un premier ensemble de valeurs de commande de tension triphasées (Vuo1, Vvo1, Vwo1), et une valeur centrale entre une tension maximale (Vmax2) et une tension minimale (Vmin2) dans un deuxième ensemble de valeurs de commande de tension triphasées (Vuo2, Vvo2, Vwo2) ; calcule le premier ensemble de valeurs de commande de tension triphasées (Vuo1, Vvo1, Vwo1) en soustrayant le premier ensemble d'ondes harmoniques de troisième ordre (Voff1) d'un premier ensemble de valeurs de commande de tension de base triphasées (Vub1, Vvb1, Vwb1) ; et calcule le deuxième ensemble de valeurs de commande de tension triphasées (Vuo2, Vvo2, Vwo2) en soustrayant le deuxième ensemble d'ondes harmoniques de troisième ordre (Voff2) d'un deuxième ensemble de valeurs de commande de tension de base triphasées (Vub2, Vvb2, Vwb2) ;

dans lequel, pour chaque ensemble, dans la commande de suppression de perte de commutation, l'unité de calcul de commande de tension (33) calcule une tension de décalage (Voff) qui fait coïncider la valeur de commande de tension d'une phase d'une tension maximale (Vmax) dans les valeurs de commande de tension triphasées (Vuo, Vvo, Vwo) avec une valeur maximale (Vdc) du signal d'onde porteuse (C), ou qui fait coïncider la valeur de commande de tension d'une phase d'une tension minimale (Vmin) dans les valeurs de commande de tension triphasées (Vuo, Vvo, Vwo) avec une valeur minimale (0) du signal d'onde porteuse (C) ; et calcule les valeurs de commande de tension triphasées (Vuo, Vvo, Vwo) en soustrayant la tension de décalage (Voff) des valeurs de commande de tension de base triphasées (Vub, Vvb, Vwb) ;

dans la commande de suppression d'ondulation de courant de bus,

l'unité de calcul de commande de tension (33) exécute une modulation biphasée à sommet plat pour le deuxième ensemble, lors de l'exécution de la modulation biphasée à sommet plat pour le premier ensemble ; et exécute une modulation biphasée à fond plat pour le deuxième ensemble, lors de l'exécution de la modulation biphasée à fond plat pour le premier ensemble ;

l'unité de calcul de commande de tension (33) utilise un premier signal d'onde porteuse (C1) comme premier ensemble du signal d'onde porteuse (C), et utilise un deuxième signal d'onde porteuse (C2) qui diffère du premier signal d'onde porteuse (C1) de 180 degrés en phase, comme deuxième ensemble du signal d'onde porteuse (C) ;

dans la modulation biphasée à sommet plat, l'unité de calcul de commande de tension (33) calcule une tension de décalage (Voff) qui fait coïncider la valeur de commande de tension d'une phase d'une tension maximale (Vmax) dans les valeurs de commande de tension triphasées (Vuo, Vvo, Vwo) d'un ensemble objet dans lequel la modulation biphasée à sommet plat est exécutée avec une valeur maximale (Vdc) du signal d'onde porteuse (C) ; et calcule les valeurs de commande de tension triphasées (Vuo, Vvo, Vwo) de l'ensemble objet en soustrayant la tension de décalage (Voff) des valeurs de commande de tension de base triphasées (Vub, Vvb, Vwb) de l'ensemble objet ; et

dans la modulation biphasée à fond plat, l'unité de calcul de commande de tension (33) calcule la tension de décalage (Voff) qui fait coïncider la valeur de commande de tension d'une phase d'une tension minimale (Vmin) dans les valeurs de commande de tension triphasées (Vuo, Vvo, Vwo) de l'ensemble objet dans lequel la modulation biphasée à fond plat est exécutée avec une valeur minimale (0) du signal d'onde porteuse (C) ; et calcule les valeurs de commande de tension triphasées (Vuo, Vvo, Vwo) de l'ensemble objet en soustrayant la tension de décalage (Voff) des valeurs de commande de tension de base triphasées (Vub, Vvb, Vwb) de l' ensemble objet.

7. Contrôleur de machine rotative à courant alternatif (30) qui contrôle une machine rotative à courant alternatif (1) comportant un stator (7) muni d'un ensemble ou d'une pluralité d'ensembles d'enroulements triphasés (Cu, Cv, Cw) via un ensemble ou une pluralité d'ensembles d'onduleurs (4), le contrôleur de machine rotative à courant alternatif (30) comprenant :

une unité de calcul de commande de tension (33) qui, pour chaque ensemble, calcule des valeurs de commande de tension triphasées (Vuo, Vvo, Vwo) appliquées aux enroulements triphasés (Cu, Cv, Cw) ; et

une unité de commande PWM (34) qui, pour chaque ensemble, commande la mise en marche/arrêt d'une pluralité de dispositifs de commutation de l'onduleur (4), sur la base d'un résultat de comparaison entre chacune des valeurs de commande de tension triphasées (Vuo, Vvo, Vwo) et un signal d'onde porteuse (C) ;

dans lequel, pour chaque ensemble, l'unité de calcul de commande de tension (33) commute un premier mode de commande, un deuxième mode de commande et un troisième mode de commande, sur la base d'un état de fonctionnement de la machine rotative à courant alternatif (1) ;

dans le premier mode de commande, l'unité de calcul de commande de tension (33) exécute une commande de suppression d'ondulation de courant de phase qui calcule les valeurs de commande de tension triphasées (Vuo, Vvo, Vwo) en appliquant une modulation aux valeurs de commande de tension de base triphasées (Vub, Vvb, Vwb) de sorte qu'une composante d'ondulation de courant circulant dans l'enroulement de chaque phase diminue moins que dans un cas où les valeurs de commande de tension de base triphasées (Vub, Vvb, Vwb) d'ondes sinusoïdales sont définies comme les valeurs de commande de tension triphasées (Vuo, Vvo, Vwo) ;

dans le deuxième mode de commande, l'unité de calcul de commande de tension (33) exécute une commande de suppression d'ondulation de courant de bus qui calcule les valeurs de commande de tension triphasées (Vuo, Vvo, Vwo) en appliquant une modulation aux valeurs de commande de tension de base triphasées (Vub, Vvb, Vwb) de sorte qu'une composante d'ondulation de courant circulant entre une source d'alimentation en courant continu et l'onduleur (4) diminue moins que dans un cas où les valeurs de commande de tension de base triphasées (Vub, Vvb, Vwb) d'ondes sinusoïdales sont définies comme les valeurs de commande de tension triphasées (Vuo, Vvo, Vwo) ; et

dans le troisième mode de commande, l'unité de calcul de commande de tension (33) exécute une commande de suppression de perte de commutation qui calcule les valeurs de commande de tension triphasées (Vuo, Vvo, Vwo) en appliquant une modulation aux valeurs de commande de tension de base triphasées (Vub, Vvb, Vwb) de sorte qu'une perte des dispositifs de commutation diminue moins que dans un cas où les valeurs de commande de tension de base triphasées (Vub, Vvb, Vwb) d'ondes sinusoïdales sont définies comme les valeurs de commande de tension triphasées (Vuo, Vvo, Vwo) ;

dans lequel, pour chaque ensemble, l'unité de calcul de commande de tension (33) commute le premier mode de commande, le deuxième mode de commande et le troisième mode de commande, sur la base d'au moins un paramètre de sortie qui est un parmi une valeur absolue d'un vecteur de courant de courants circulant dans les enroulements triphasés (Cu, Cv, Cw) et une valeur absolue d'un couple de sortie de la machine rotative à courant alternatif (1), et un paramètre de région qui est un parmi une valeur absolue d'une vitesse de rotation de la machine rotative à courant alternatif (1) et une valeur absolue d'un vecteur de tension des valeurs de commande de tension triphasées (Vuo, Vvo, Vwo) ;

**caractérisé en ce que**

pour chaque ensemble, l'unité de calcul de commande de tension (33) passe au premier mode de commande lorsque le paramètre de sortie est inférieur à une valeur de détermination de sortie et que le paramètre de région est inférieur à une valeur de détermination de région ;

passe au deuxième mode de commande lorsque le paramètre de sortie est supérieur ou égal à la valeur de détermination de sortie et que le paramètre de région est inférieur à la valeur de détermination de région ; et

passe au troisième mode de commande lorsque le paramètre de région est supérieur ou égal à la valeur de détermination de région ;

dans lequel deux ensembles des enroulements triphasés (Cul, Cv1, Cw1, Cu2, Cv2, Cw2) sont prévus dans le stator (7),

dans la commande de suppression d'ondulation de courant de phase, l'unité de calcul de commande de tension (33) calcule un premier ensemble d'ondes harmoniques de troisième ordre (Voff1) et un deuxième ensemble d'ondes harmoniques de troisième ordre (Voff2) qui font coïncider entre elles une valeur centrale entre une tension maximale (Vmax1) et une tension minimale (Vmin1) dans un premier ensemble de valeurs de commande de tension triphasées (Vuo1, Vvo1, Vwo1), et une valeur centrale entre une tension maximale (Vmax2) et une tension minimale (Vmin2) dans un deuxième ensemble de valeurs de commande de tension triphasées (Vuo2, Vvo2, Vwo2) ; calcule le premier ensemble de valeurs de commande de tension triphasées (Vuo1, Vvo1, Vwo1) en soustrayant le premier ensemble d'ondes harmoniques de troisième ordre (Voff1) d'un premier ensemble de valeurs de commande de tension de base triphasées (Vub1, Vvb1, Vwb1) ; et calcule le deuxième ensemble de valeurs de commande de tension triphasées (Vuo2, Vvo2, Vwo2) en soustrayant le deuxième ensemble d'ondes harmoniques de troisième ordre (Voff2) d'un deuxième ensemble de valeurs de commande de tension de base triphasées (Vub2, Vvb2, Vwb2) ;

dans lequel, pour chaque ensemble, dans la commande de suppression de perte de commutation, l'unité de calcul de commande de tension (33) calcule une tension de décalage (Voff) qui fait coïncider la valeur de commande de tension d'une phase d'une tension maximale (Vmax) dans les valeurs de commande de tension triphasées (Vuo, Vvo, Vwo) avec une valeur maximale (Vdc) du signal d'onde porteuse (C), ou qui fait coïncider la valeur de commande de tension d'une phase d'une tension minimale (Vmin) dans les valeurs de commande de tension triphasées (Vuo, Vvo, Vwo) avec une valeur minimale (0) du signal d'onde porteuse (C) ; et calcule les valeurs de commande de tension triphasées (Vuo, Vvo, Vwo) en soustrayant la tension de décalage (Voff) des valeurs de commande de tension de base triphasées (Vub, Vvb, Vwb) ;

dans lequel, dans la commande de suppression d'ondulation de courant de bus,

pour chaque ensemble, l'unité de calcul de commande de tension (33) calcule une onde harmonique de troisième ordre (Voff) qui fait coïncider une valeur centrale entre une tension maximale (Vmax) et une tension minimale (Vmin) dans les valeurs de commande de tension triphasées (Vuo, Vvo, Vwo) avec une valeur centrale (Vdc/2) d'une tension de courant continu fournie à l'onduleur (4) ; et calcule les valeurs de commande de tension triphasées (Vuo, Vvo, Vwo) en soustrayant l'onde harmonique de troisième ordre (Voff) des valeurs de commande de tension de base triphasées (Vub, Vvb, Vwb) ; et

l'unité de calcul de commande de tension (33) utilise un premier signal d'onde porteuse (C1) comme premier ensemble du signal d'onde porteuse (C), et utilise un deuxième signal d'onde porteuse (C2) qui diffère du premier signal d'onde porteuse (C1) de 90 degrés en phase, comme deuxième ensemble du signal d'onde porteuse (C).

8. Contrôleur de machine rotative à courant alternatif (30) selon l'une quelconque des revendications 1 à 6, dans lequel l'unité de calcul de commande de tension (33) exécute également la commande de suppression d'ondulation de courant de bus dans le troisième mode de commande.

9. Contrôleur de machine rotative à courant alternatif (30) selon l'une quelconque des revendications 5 à 8,

dans lequel, pour chaque ensemble, dans la commande de suppression de perte de commutation, l'unité de calcul de commande de tension (33) calcule la tension de décalage (Voff) qui fait coïncider la valeur de commande de tension de la phase de la tension maximale (Vmax) avec la valeur maximale (Vdc) du signal d'onde porteuse (C) lorsqu'une valeur absolue d'un courant d'enroulement d'une phase d'une tension maximale (Vmax) dans les valeurs de commande de tension triphasées (Vuo, Vvo, Vwo) est supérieure à une valeur absolue du courant d'enroulement d'une phase d'une tension minimale (Vmin) dans les valeurs de commande de tension triphasées (Vuo, Vvo, Vwo) ;

ou l'unité de calcul de commande de tension (33) calcule la tension de décalage (Voff) qui fait coïncider la valeur de commande de tension de la phase de la tension minimale (Vmin) avec une valeur minimale (0) du signal d'onde porteuse (C) lorsque la valeur absolue du courant d'enroulement de la phase de la tension maximale (Vmax) n'est pas supérieure à la valeur absolue du courant d'enroulement de la phase de la tension minimale (Vmin).

10. Dispositif de conduite de véhicule (100) comprenant :

le contrôleur de machine rotative à courant alternatif (30) selon l'une quelconque des revendications 1 à 9, la machine rotative à courant alternatif (1), et un mécanisme de transmission de force motrice (101) qui transmet une force motrice de la machine rotative à courant alternatif (1) aux roues (103) d'un véhicule.

11. Dispositif de direction assistée électrique (120) comprenant :

le contrôleur de machine rotative à courant alternatif (30) selon l'une quelconque des revendications 1 à 9, la machine rotative à courant alternatif (1), et un mécanisme de transmission de force motrice (121) qui transmet une force motrice de la machine rotative à courant alternatif (1) à un dispositif de direction (122) d'un véhicule.

# FIG. 1

# FIG. 2

# FIG. 3

# FIG. 4

# FIG. 5

| SPu | SNu | SPv | SNv | SPw | SNw | VOLTAGE VECTOR | BUS CURRENT Iinv |
|---|---|---|---|---|---|---|---|
| 0 | 1 | 0 | 1 | 0 | 1 | V0 | 0 |
| 1 | 0 | 0 | 1 | 0 | 1 | V1 | Iu |
| 1 | 0 | 1 | 0 | 0 | 1 | V2 | −Iw |
| 0 | 1 | 1 | 0 | 0 | 1 | V3 | Iv |
| 0 | 1 | 1 | 0 | 1 | 0 | V4 | −Iu |
| 0 | 1 | 0 | 1 | 1 | 0 | V5 | Iw |
| 1 | 0 | 0 | 1 | 1 | 0 | V6 | −Iv |
| 1 | 0 | 1 | 0 | 1 | 0 | V7 | 0 |

EP 4 422 063 B1

FIG. 6

**FIG. 7**

START — BUS CURRENT RIPPLE SUPPRESSION CONTROL

S01
DETERMINATION OF PHASE OF MAXIMUM CURRENT ABSOLUTE VALUE

S02
DETERMINATION OF Vmax, Vmin, Vmid

S03
PHASE OF MAXIMUM CURRENT ABSOLUTE VALUE = PHASE OF Vmax ?

Yes → S04
Voff=Vmax−Vdc

No → S05
PHASE OF MAXIMUM CURRENT ABSOLUTE VALUE = PHASE OF Vmin ?

Yes → S06
Voff=Vmin

No → S07
Vmid>Vdc/2 ?

Yes → S08
Voff=Vmax−Vdc

No → S09
Voff=Vmin

END

EP 4 422 063 B1

# FIG. 8

EP 4 422 063 B1

POWER-FACTOR ANGLE = 0 degree    BUS CURRENT RIPPLE SUPPRESSION CONTROL

| PHASE OF CURRENT VECTOR [Degree] | 0 ~ 30 | ~ 60 | ~ 90 | ~ 120 | ~ 150 | ~ 180 | ~ 210 | ~ 240 | ~ 270 | ~ 300 | ~ 330 | ~ 360 |
|---|---|---|---|---|---|---|---|---|---|---|---|---|
| PHASE OF MAXIMUM CURRENT ABSOLUTE VALUE | U | W | W | V | V | U | U | W | W | V | V | U |
| PHASE OF Vmax | U | U | V | V | V | V | W | W | W | U | U | U |
| PHASE OF Vmid | V | V | U | U | W | W | V | V | U | U | W | W |
| PHASE OF Vmin | W | W | W | W | U | U | U | U | V | V | V | V |
| SWITCHING STOP PHASE | U | W | W | V | V | U | U | W | W | V | V | U |
| CARRIER WAVE SIGNAL FOR U PHASE | C2 | C2 | C2 | C2 | C2 | C1 | C1 | C1 | C1 | C1 | C1 | C2 |
| CARRIER WAVE SIGNAL FOR V PHASE | C1 | C1 | C1 | C2 | C2 | C2 | C2 | C2 | C2 | C1 | C1 | C1 |
| CARRIER WAVE SIGNAL FOR W PHASE | C2 | C1 | C1 | C1 | C1 | C1 | C1 | C2 | C2 | C2 | C2 | C2 |

## FIG. 9

POWER-FACTOR ANGLE = 60 degrees    BUS CURRENT RIPPLE SUPPRESSION CONTROL

| PHASE OF CURRENT VECTOR [Degree] | 0 ~ 30 | ~ 60 | ~ 90 | ~ 120 | ~ 150 | ~ 180 | ~ 210 | ~ 240 | ~ 270 | ~ 300 | ~ 330 | ~ 360 |
|---|---|---|---|---|---|---|---|---|---|---|---|---|
| PHASE OF MAXIMUM CURRENT ABSOLUTE VALUE | U | W | W | V | V | U | U | W | W | V | V | U |
| PHASE OF Vmax | V | V | V | V | W | W | W | W | U | U | U | U |
| PHASE OF Vmid | U | U | W | W | V | V | U | U | W | W | V | V |
| PHASE OF Vmin | W | W | W | U | U | U | U | V | V | V | V | W |
| SWITCHING STOP PHASE | V | W | U | V | W | U | V | W | U | V | W | U |
| CARRIER WAVE SIGNAL FOR U PHASE | C2 | C2 | C2 | C2 | C2 | C1 | C1 | C1 | C1 | C1 | C1 | C2 |
| CARRIER WAVE SIGNAL FOR V PHASE | C1 | C1 | C1 | C1 | C2 | C2 | C2 | C2 | C2 | C2 | C1 | C1 |
| CARRIER WAVE SIGNAL FOR W PHASE | C2 | C2 | C1 | C1 | C1 | C1 | C1 | C1 | C2 | C2 | C2 | C2 |

EP 4 422 063 B1

**FIG. 10**

EP 4 422 063 B1

BUS CURRENT RIPPLE SUPPRESSION CONTROL

START

S11 — PHASE OF MAXIMUM CURRENT ABSOLUTE VALUE = PHASE OF Vmax ?

No → S13 — PHASE OF MAXIMUM CURRENT ABSOLUTE VALUE = PHASE OF Vmin ?

Yes ↓

S12 — SWITCHING CARRIER WAVE SIGNAL OF PHASE OF MAXIMUM CURRENT ABSOLUTE VALUE TO C2

Yes ↓

S14 — SWITCHING CARRIER WAVE SIGNAL OF PHASE OF MAXIMUM CURRENT ABSOLUTE VALUE TO C1

No ↓

S15 — MAINTAINING CARRIER WAVE SIGNAL OF PHASE OF MAXIMUM CURRENT ABSOLUTE VALUE

END

# FIG. 11

START  BUS CURRENT RIPPLE SUPPRESSION CONTROL

S21

PHASE OF MAXIMUM
CURRENT ABSOLUTE VALUE
= PHASE OF Vmax ?

No

Yes

S23

PHASE OF MAXIMUM
CURRENT ABSOLUTE VALUE
= PHASE OF Vmin ?

No

Yes

S22

SWITCHING CARRIER WAVE SIGNAL OF PHASE
OF MAXIMUM CURRENT ABSOLUTE VALUE TO C1

S24

SWITCHING CARRIER WAVE SIGNAL OF PHASE
OF MAXIMUM CURRENT ABSOLUTE VALUE TO C2

S25

MAINTAINING CARRIER WAVE SIGNAL OF PHASE
OF MAXIMUM CURRENT ABSOLUTE VALUE

END

EP 4 422 063 B1

# FIG. 12

POWER-FACTOR ANGLE = 0 degree    <u>BUS CURRENT RIPPLE SUPPRESSION CONTROL</u>

| PHASE OF CURRENT VECTOR [Degree] | 0~30 | 30~60 | 60~90 | 90~120 | 120~150 | 150~180 | 180~210 | 210~240 | 240~270 | 270~300 | 300~330 | 330~360 |
|---|---|---|---|---|---|---|---|---|---|---|---|---|
| PHASE OF MAXIMUM CURRENT ABSOLUTE VALUE | U | | W | | V | | U | | W | | V | U |
| PHASE OF Vmax | U | | | V | | | W | | | | U | |
| PHASE OF Vmid | V | | U | | W | | V | | U | | W | |
| PHASE OF Vmin | W | | | | U | | | | V | | | |
| SWITCHING STOP PHASE | U | | W | | V | | U | | W | | V | U |
| CARRIER WAVE SIGNAL FOR U PHASE | C2 *(hatched)* | C1 | C2 | C1 | C2 | C1 *(hatched)* | | C2 | C1 | C2 | C1 | C2 *(hatched)* |
| CARRIER WAVE SIGNAL FOR V PHASE | C1 | C2 | C1 | C2 *(hatched)* | | C1 | C2 | C1 | C2 | C1 *(hatched)* | | C2 |
| CARRIER WAVE SIGNAL FOR W PHASE | C2 | C1 *(hatched)* | | C2 | C1 | C2 | C1 | C2 *(hatched)* | | C1 | C2 | C1 |

FIG. 13

SWITCHING LOSS
SUPPRESSION CONTROL

START

↓

S31

DETERMINATION OF Vmax, Vmin

↓

S32

$Vmax + Vmin > Vdc$ ?

No →

Yes
↓

S33

$Voff = Vmax - Vdc$

S34

$Voff = Vmin$

END

**FIG. 14**

SWITCHING LOSS
SUPPRESSION CONTROL

START

↓

S41
DETERMINATION OF Vmax, Vmin

↓

S42
CURRENT ABSOLUTE
VALUE OF PHASE OF Vmax
> CURRENT ABSOLUTE
VALUE OF PHASE OF Vmin ?

Yes ↓                    No →

S43
$Voff = Vmax - Vdc$

S44
$Voff = Vmin$

↓

END

# FIG. 15

OUTPUT PARAMETER IS SMALLER
THAN OUTPUT DETERMINATION VALUE,
AND
REGION PARAMETER IS SMALLER
THAN REGION DETERMINATION VALUE

FIRST CONTROL MODE
(PHASE CURRENT RIPPLE
SUPPRESSION CONTROL)

SECOND CONTROL MODE
(BUS CURRENT RIPPLE
SUPPRESSION CONTROL)

THIRD CONTROL MODE
(SWITCHING LOSS
SUPPRESSION CONTROL)

OUTPUT PARAMETER IS GREATER THAN OR EQUAL TO
OUTPUT DETERMINATION VALUE,
AND
REGION PARAMETER IS SMALLER
THAN REGION DETERMINATION VALUE

REGION PARAMETER IS GREATER THAN OR EQUAL TO
REGION DETERMINATION VALUE

# FIG. 16

OUTPUT TORQUE

SECOND CONTROL MODE
(BUS CURRENT RIPPLE
SUPPRESSION CONTROL)

THIRD CONTROL MODE
(SWITCHING LOSS
SUPPRESSION CONTROL)

THIRD CONTROL MODE
(SWITCHING LOSS
SUPPRESSION CONTROL)

ROTATIONAL
SPEED

FIRST CONTROL MODE
(PHASE CURRENT RIPPLE
SUPPRESSION CONTROL)

SECOND CONTROL MODE
(BUS CURRENT RIPPLE
SUPPRESSION CONTROL)

EP 4 422 063 B1

# FIG. 17

100

102 104 103

105

1 4 30 101

103

# FIG. 18

124

120

126

121

30 125

4 1

122

123 123

FIG. 19

# FIG. 20

FIG. 21

# FIG. 22

# FIG. 23

**EP 4 422 063 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020018148 A
- JP 2011188674 A
- JP 2020137232 A
- US 20110043149 A1
- US 20120049782 A1
- US 20180022378 A1
- US 20200177102 A1